(19) Europäisches Patentamt

European Patent Office

Office européen des brevets

(11) Publication number: **0 492 641 A2**

# EUROPEAN PATENT APPLICATION

(21) Application number: **91122283.4**

(22) Date of filing: **27.12.91**

(30) Priority: **27.12.90 JP 408420/90**
**28.05.91 JP 123819/91**
**11.07.91 JP 171429/91**

(43) Date of publication of application:
**01.07.92 Bulletin 92/27**

(84) Designated Contracting States:
**DE FR GB**

(71) Applicant: **KABUSHIKI KAISHA TOSHIBA**
**72, Horikawa-Cho Saiwai-ku**

(51) Int. Cl.⁵: **G06F 15/80**

**Kawasaki-shi Kanagawa-ken(JP)**

(72) Inventor: **Yamada, Miki**
**C-318 Toshiba Kikuna-Ryo, 217 Mamedo-cho**
**Kouhoku-ku, Yokohama-shi,**
**Kanagawa-ken(JP)**

(74) Representative: **Lehn, Werner, Dipl.-Ing. et al**
**Hoffmann, Eitle & Partner Patentanwälte**
**Arabellastrasse 4**
**W-8000 München 81(DE)**

(54) Learning method for a learning apparatus.

(57) A learning method for adjusting control parameters Θ of a learning apparatus in which input data is converted into output data by utilizing the control parameters Θ and teaching signal data consists of steps of defining undesirable output data as a type of the teaching signal data, defining a loss function $r = \exp(-x^2)$ of which a value decreases along with the increase of a difference x between the undesirable output data and the output data, providing both the input data and the undesirable output data to the learning apparatus, calculating a value of the output data by converting a value of the input data by utilizing values of the control parameters Θ, calculating a value of the loss function r by utilizing both the value of the output data and a value of the undesirable output data, iteratively calculating the value of the loss function r by renewing the values of the control parameters Θ to decrease the value of the loss function r, and adjusting the control parameters Θ of the learning apparatus to newest values of the control parameters Θ when the value of the loss function is less than the prescribed value.

FIG.1

## BACKGROUND OF THE INVENTION

### 1. Field of the Invention

The present invention relates to a leaning method for implementing the learning for learning apparatus in which an artificial neural network is utilized to determine the most appropriate control parameters by calculating a value of a loss function, and a non-linear data conversion is implemented.

### 2. Description of Background

Recently, learning apparatus utilizing an artificial neural network has attracted considerable attention in performing non-linear data conversion. The artificial neural network has been proposed as an artificial model of the neural circuits in brain cells, so that the artificial neural network has a learning function and non-linear performance. The learning apparatus has therefore been utilized to recognize many types of patterns, to predict stock prices, to diagnose illness, to control the action robots, and the like.

To utilize the above learning apparatus, control parameters of the learning apparatus, which exert an effect on the movement of the learning apparatus, must be adjusted in advance according to the purpose to provide proper movement. In other words, the learning apparatus must learn an operation in advance before practical operations are performed.

A supervisory learning method has been known as one learning method utilizing an artificial neural network to adjust the control parameters of the learning apparatus learning. In supervisory learning methods such as back-propagation learning, training example data composed of both input data and teaching signal data is provided to the learning apparatus. The teaching signal data is utilized to attract the output data to the desired data. That is, control parameters such as weight parameters in the artificial neural network are iteratively adjusted so as to decrease the value of a prescribed loss function.

For example, the desired output data is provided for the conventional learning apparatus as a type of teaching signal data. In this case, the output data should be close to the desired output data. Therefore, the learning apparatus learns to decrease the difference between the output data and the desired output data.

The above supervisory learning method can be also applied to a learning apparatus in which non-linear data is converted without utilizing the artificial neural network.

On the other hand, in cases where the movement of robot's arms are specified in a robot control program utilizing the learning apparatus, the movement of the arms must be limited to avoid many obstacles. Therefore, many forbidden conditions are provided to the robot. Moreover, in cases where a doctor identifies the disease of a patient in a diagnosis in medical treatment after observing X-ray photographs or electrocardiograms, the doctor utilizes a deletion method to delete a doubtful disease.

Accordingly, in industrial fields utilizing the learning apparatus, there are a large number of cases in which undesirable output data which is not acceptable as output data is provided to the learning apparatus. This undesirable output data is also another type of teaching signal data.

However, it is not possible for a conventional learning apparatus learn to learn not to output data which is very different from the specified undesirable output data in cases where such undesirable output data is provided to the learning apparatus. Therefore, an operator on receiving undesirable output data must create the desired output data from the undesirable output data by relying on his experience or on incomplete knowledge. Thereafter, the desired output data determined by the operator is provided to the learning apparatus, and the control parameters of the learning apparatus are adjusted to decrease the difference between the output data and the desired output data.

Accordingly, it is very troublesome to have the learning apparatus learn by utilizing the desired output data in cases where the operator receives the undesirable output data.

Moreover, the output data must converge on the desired output data regardless of the fact that the desired output data is incomplete in cases where incomplete desired output data is provided to the learning apparatus.

Therefore, it is sometimes impossible to cause the output data to converge on the desired output data. Moreover, when many items of desired output data are provided to the learning apparatus, the control parameters of the learning apparatus are sometimes adjusted so as to converge on limited items of desired output data.

In cases where undesirable output data is provided to the learning apparatus, the output data is allowed to converge over a large range so that convergene of the output data is easily accomplished. Moreover, well-balanced output data is obtained by providing many items of undesirable output data for the learning apparatus because the output data is not attracted to limited items of undesirable output data. That is, the output data is positioned far from all items of undesirable output data.

On the other hand, in cases where the output data is quantitative, it is sometimes necessary to have the learning apparatus learn to converge on one of several regions which are divided by a boundary. For example, in cases where the output data is expected to be more than a prescribed temperature or a prescribed pressure, the teaching signal data designates the prescribed temperature or the prescribed pressure. Moreover, the arms of a robot are prohibited from passing through the opposite side of a wall in the robot control program. In this case, the teaching signal data designates the wall. In short, the learning represented by a sign of inequality such as "the output data > the teaching signal data" is, for example, necessary.

However, the operator must create the desired output data to designate the boundary in the conventional supervisory learning method. It is therefore very troublesome to have the learning apparatus learn by utilizing the desired output data in cases where it is desired that the output data converges on one side of a region.

## SUMMARY OF THE INVENTION

A first object of the present invention is to provide, with due consideration to the drawbacks of such conventional learning method, a learning method in which control parameters of a learning apparatus are easily adjusted to provide well-balanced output data without converging on the limited number of the items of teaching signal data.

A second object of the present invention is to provide a learning method in which the control parameters of learning apparatus are easily adjusted so that output data converges on one side of regions which are divided by a boundary designated by teaching signal data.

The first object is achieved by the provision of a learning method for adjusting control parameters of a learning apparatus in which input data is converted into output data by utilizing the control parameters and teaching signal data, comprising steps of:

defining undesirable output data which is not acceptable as output data, the undesirable output data being a type of the teaching signal data;

defining a loss function r of which a value decreases along with the increase of a difference x between the undesirable output data and the output data, the loss function r being designated by an equation $r = \exp(-x^2)$;

providing both the input data and the undesirable output data to the learning apparatus;

calculating a value of the output data by converting a value of the input data by utilizing values of the control parameters;

calculating a value of the loss function r by utilizing both the value of the output data and a value of the undesirable output data;

iteratively calculating the value of the loss function r by renewing the values of the control parameters to decrease the value of the loss function until the value of the loss function is less than a prescribed value in cases where the value of the loss function is equal to or greater than the prescribed value; and

adjusting the control parameters of the learning apparatus to newest values of the control parameters when the value of the loss function is less than the prescribed value.

In the above steps, the loss function is gradually decreased by iteratively calculating the value thereof while the values of the control parameters are changed. Therefore, the difference between the undesirable output data and the output data is increased. In other words, the output data is compulsorily shifted far from the undesirable output data.

Accordingly, the control parameters of the learning apparatus can be adjusted to shift the output data far from the undesirable output data. In other words, the undesirable output data is not provided as the output data in the learning apparatus.

The first object is also achieved by the provision of a learning method for adjusting both weight parameters and threshold values of a learning apparatus by utilizing teaching signal data and a plurality of neurons interconnected in an artificial neural network in which input data provided to first neurons of a first stage is weighted by the weight parameters and the threshold values is subtracted from the weighted input data so that the weighted input data is transmitted to final neurons of a final stage through hidden stages in which the data is weighted with the weight parameters, subtracted the threshold values, and converted by applying a prescribed monotone increasing function, after which output data is provided from the final neurons, comprising steps of:

defining undesirable output data which is not acceptable as output data, the undesirable output data being a type of the teaching signal data;

3

defining a loss function which decreases along with the increase of the difference between the undesirable output data and the output data;

providing the input data to the first neurons;

providing the undesirable output data to the learning apparatus;

calculating a value of the output data obtained by converting the input data while utilizing the weight parameters, the threshold values, and the monotone increasing function;

calculating a value of the loss function by utilizing both the value of the output data and a value of the undesirable output data;

iteratively calculating the value of the loss function by renewing the weight parameters and the threshold values to decrease the value of the loss function until the value of the loss function is less than a prescribed value in cases where the value of the loss function is equal to or greater than the prescribed value; and

adjusting the weight parameters and the threshold values of the learning apparatus to the newest weight parameters and the newest threshold values when the value of the loss function is less than the prescribed value.

In the above steps, because the learning method utilizes the artificial neural network, the input data provided for the first neurons is automatically transmitted to the final neurons according to predetermined calculations so that the input data is automatically converted to the output data. The calculations in the artificial neural network are also applied to a non-linear data conversion. For example, because the input data is converted in the hidden and final neurons according to the prescribed monotone increasing function, the input data is non-linearly converted to the output data.

In detail, the loss function is gradually decreased by iteratively calculating the value thereof while the weight parameters and the threshold values are changed. Therefore, the difference between the undesirable output data and the output data is increased. In other words, the output data is compulsorily shifted far from the undesirable output data.

Accordingly, the weight parameters and the threshold values of the learning apparatus can be adjusted to shift the output data far from the undesirable output data. In other words, the undesirable output data is not provided as the output data in the learning apparatus.

The first object is further achieved by the provision of a learning method for adjusting control parameters of learning apparatus in which input data is converted into output data by utilizing the control parameters and teaching signal data, comprising steps of:

defining undesirable output data which is not acceptable as output data and is a type of the teaching signal data;

defining desired output data which is desired as output data and is another type of teaching signal data, the desired output data occupying a region s;

defining a distribution function $s_*g(x_+)$ of the desired output data by utilizing both the region s occupied by the desired output data and a normal distribution $g(x)$ which is defined by both a variance $\sigma^2$ and a difference $x_+$ between the output data and the desired output data, the distribution function $s_*g(x_+)$ being defined by an equation

$$s_*g(x_+) = s_*[1/(2\pi)^{1/2}\sigma] * \exp[-x_+^2/(2\sigma^2)];$$

defining a distribution function $1 - s^*g(x_-)$ of the undesirable output data by utilizing both the region s occupied by the desired output data and a normal distribution $g(x_-)$ which is defined by both a variance $\sigma^2$ and a difference $x_-$ between the output data and the undesirable output data, the distribution function $1 - s_*g(x_-)$ being defined by an equation

$$1 - s_*g(x_-) = 1 - s_*[1/(2\pi)^{1/2}\sigma] * \exp[-x_-^2/(2\sigma^2)];$$

providing both the input data and the teaching signal data to the learning apparatus;

calculating a value of the output data by converting a value of the input data by utilizing values of the control parameters;

deriving an attraction term $r_+ = \ln(\sigma) + x_+^2/(2\sigma^2)$ and a repulsion term $r_- = s/[(2\pi)^{1/2}\sigma] * \exp[-x_-^2/(2\sigma^2)]$ from a logarithmic-likelihood $l_E(x)$ based on a statistical entropy as follows,

$$-l_E(x) = -\ln g(x_+) + s_*g(x_-)$$
$$r_+ = -\ln g(x_+)$$
$$r_- = s_*g(x_-);$$

calculating a value of the attraction term $r_+$ in cases where the desired output data is provided to the learning apparatus as teaching signal data, a value of the attraction term $r_+$ being decreased along with the decrease of the difference $x_+$;

calculating a value of the repulsion term $r_-$ in cases where the undesirable output data is provided the learning apparatus as teaching signal data, a value of the repulsion term $r_-$ being decreased along with the increase of the difference $x_-$;

calculating a loss function r found by adding the repulsion term $r_-$ and the attraction term $r_+$ together;

iteratively calculating the value of the loss function r by renewing the values of both the control parameters and the variance $\sigma^2$ to decrease the value of the loss function r until the value of the loss function r is less than a prescribed value in cases where the value of the loss function is equal to or greater than the prescribed value; and

adjusting both the control parameters and the variance $\sigma^2$ of the learning apparatus to newest values of both the control parameters and the variance $\sigma^2$ when the value of the loss function r is less than the prescribed value.

In the above steps, the difference x between the output data and the teaching signal data is assumed to distribute according to the distribution function $s_*g(x)$ by utilizing both the density distribution function $g(x)$ and the region s occupied by the desired output data. The function $g(x)$ is equivalent to a normal distribution. The function $g(x)$ has been determined based on a large number of calculation results performed by the inventor of the present invention.

Both the attraction term $r_+$ and the repulsion term $r_-$ are derived from both the function $g(x)$ and a statistical entropy. According to statistical theory, when an approximate function q is the most appropriate to approximate a true probability distribution p, the statistical entropy defined by an equation $p_*\ln(q/p)$ is the maximum value.

Therefore, in the present invention, because the loss function is set to be the minimum value when the output data is shifted close to the desired output data, the attraction term $r_+$ related to the desired output data corresponds to an equation $-p_*\ln(q/p)$. Moreover, the loss function $-\ln(q)$ of the desired output data is adopted to simplify the loss function by deleting the true probability distribution p.

In the present invention, the distribution function $s_*g(x)$ is adopted as the approximated function q. Therefore, the attraction term $r_+$ of the desired output data is

$r_+ = -\ln s_*g(x_+)$.

Therefore, the attraction term $r_+$ is calculated as $r_+ = \ln (\sigma) + x_+^2/(2\sigma^2)$ by eliminating constant values such as $-\ln s$.

In the case of the undesirable output data, the approximate function 1-q is concluded because the output data is shifted far from the undesirable output data. Therefore, the repulsion term $r_-$ related to the undesirable output data is $r_- = -\ln[1-s_*g(x_-)]$. The repulsion term $r_-$ is approximated to a function $r_- = s_*g(x_-)$ so that $r_- = s/[(2\pi)^{1/2}\sigma] * \exp[-x_-^2/(2\sigma^2)]$ is obtained.

The attraction and repulsion terms $r_+$ and $r_-$ are gradually decreased by iteratively calculating the value thereof while the values of the control parameters are renewed. Therefore, the output data is shifted close to the desired output data, while the output data is shifted far from the undesirable output data.

Accordingly, both the control parameters and the variance $\sigma^2$ of the learning apparatus can be adjusted to obtain the most appropriate approximated function.

The first object is further achieved by the provision of a learning method for adjusting both weight parameters and threshold values of learning apparatus by utilizing teaching signal data and a plurality of neurons interconnected in an artificial neural network in which input data provided to first neurons of a first stage is weighted with the weight parameters and the threshold values are subtracted from the weighted input data so that the weighted input data is transmitted to final neurons of a final stage through hidden stages in which the data is weighted with the weight parameters, subtracted the threshold values, and converted by applying a prescribed monotone increasing function, after which output data is provided from the final neurons, comprising steps of:

defining undesirable output data which is not acceptable as output data and is a type of the teaching signal data;

defining desired output data which is desired as output data and is another type of the teaching signal data, the desired output data occupying a region s;

defining a distribution function $s_*g(x_+)$ of the desired output data by utilizing both the region s occupied by the desired output data and a normal distribution $g(x)$ which is defined by both a variance $\sigma^2$ and a

difference $x_+$ between the output data and the desired output data, the distribution function $s_*g(x_+)$ being defined by an equation

$$s_*g(x_+) = s_*[1/(2\pi)^{1/2}\sigma] * \exp[-x_+{}^2/(2\sigma^2)];$$

defining a distribution function $1 - s_*g(x_-)$ of the undesirable output data by utilizing both the region s occupied by the desired output data and a normal distribution $g(x_-)$ which is defined by both a variance $\sigma^2$ and a difference $x_-$ between the output data and the undesirable output data, the distribution function $1 - s_*g(x_-)$ being defined by an equation

$$1 - s_*g(x_-) = 1 - s_*[1/(2\pi)^{1/2}\sigma] * \exp[-x_-{}^2/(2\sigma^2)];$$

providing the input data to the first neurons;

providing the teaching signal data for the learning apparatus;

calculating a value of the output data by weighting the input data with the weight parameters and subtracting the threshold values from the weighted input data;

calculating a value of the output data by converting a value of the input data by utilizing values of the control parameters;

deriving an attraction term $r_+ = \ln(\sigma) + x_+{}^2/(2\sigma^2)$ and a repulsion term $r_- = s/[(2\pi)^{1/2}\sigma] * \exp[-x_-{}^2/(2\sigma^2)]$ from a logarithmic-likelihood $l_E(x)$ based on a statistical entropy as follows,

$$-l_E(x) = -\ln g(x_+) + s_*g(x_-)$$
$$r_+ = -\ln g(x_+)$$
$$r_- = s_*g(x_-)$$

calculating a value of the attraction term $r_+$ in cases where the desired output data is provided to the learning apparatus as teaching signal data, a value of the attraction term $r_+$ being decreased along with the decrease of the difference $x_+$;

calculating a value of the repulsion term $r_-$ in cases where the undesirable output data is provided to the learning apparatus as teaching signal data, a value of the repulsion term $r_-$ being decreased along with the increase of the difference $x_-$;

calculating a loss function r found by adding the repulsion term $r_-$ and the attraction term $r_+$ together;

iteratively calculating the value of the loss function r by renewing the values of the weight parameters, the threshold values, and the variance $\sigma^2$ to decrease the value of the loss function r until the value of the loss function r is less than a prescribed value in cases where the value of the loss function is equal to or greater than the prescribed value; and

adjusting the weight parameters, the threshold values, and the variance $\sigma^2$ of the learning apparatus to newest values of the weight parameters, the threshold values, and the variance $\sigma^2$ when the value of the loss function r is less than the prescribed value.

In the above steps, the output data is considered to be distributed according to the distribution function $s_*g(x)$ by utilizing both the region s and the density distribution function $g(x)$ equivalent to a normal distribution.

Both the attraction term $r_+$ and the repulsion term $r_-$ are derived from both the function $g(x)$ and a statistical entropy $p_*\ln(q/p)$. The function p is a true probability distribution p and the function q is an approximated function q. The entropy is the maximum value when the approximated function q most appropriately approximates the true probability distribution p.

In the present invention, the distribution function $s_*g(x)$ is adopted as the approximated function q. Therefore, because the loss function r is set to be at a minimum when the output data approaches close to the desired output data, the attraction term $r_+$ related to the desired output data is $r_+ = -\ln s_*g(x_+)$. That is, $r_+ = \ln(\sigma) + x_+{}^2/(2\sigma^2)$ is found by eliminating constant values such as $-\ln s$.

On the other hand, in the case of the undesirable output data, the approximate function $1-q$ is applicable because the output data is shifted far from the undesirable output data. Therefore, the repulsion term $r_-$ related to the undesirable output data is $r_- = -\ln[1 - s_*g(x_-)]$. The loss function $r_-$ approximates a function $r_- = s_*g(x_-)$ so that $r_- = s/[(2\pi)^{1/2}\sigma] * \exp[-x_-{}^2/(2\sigma^2)]$ is found.

In the present invention, because the learning method utilizes the artificial neural network, the input data provided to the first neurons is automatically transmitted to the final neurons according to a predetermined calculation so that the input data is automatically converted to the output data. The calculation in the artificial neural network is also applied to a non-linear data conversion. For example, because the input data

EP 0 492 641 A2

is converted by the prescribed monotone increasing function in the hidden and final neurons, the input data is non-linearly converted to output data.

In detail, the attraction and repulsion terms $r_+$ and $r_-$ are gradually decreased by iteratively calculating the value thereof while the values of both the weight parameters and the variance $\sigma^2$ are changed. Therefore, the output data approaches the desired output data, while the output data is shifted far from the undesirable output data.

Accordingly, both the control parameters and the variance $\sigma^2$ of the learning apparatus can be adjusted to obtain the most appropriate approximated function.

The second object is achieved by the provision of a learning method for adjusting control parameters of a learning apparatus in which many items of input data are converted into N items of output data by utilizing the control parameters and teaching signal data, comprising steps of:

defining an output vector designated by N items of output data in N dimensions, the output vector indicating output coordinates of which components are equal to values of the output data;

defining boundary specifying data which specifies a boundary surface dividing a desired region from an undesired region in N-dimensional space, the boundary specifying data being a type of the teaching signal data;

defining a loss function which decreases when the output coordinates indicated by the output vector are shifted toward the desired region from the undesired region specified by the boundary specifying data;

providing both the input data and the boundary specifying data for the learning apparatus;

calculating the output vector designated by the output data obtained by respectively converting each value of the input data by utilizing values of the control parameters;

calculating a value of the loss function by utilizing both the output coordinates indicated by the calculated output vector and the boundary surface specified by the boundary specifying data;

iteratively calculating the value of the loss function by renewing the values of the control parameters to decrease the value of the loss function until the value of the loss function is less than a prescribed value in cases where the value of the loss function is equal to or greater than the prescribed value; and

adjusting the control parameters of the learning apparatus to newest values of the control parameters when the value of the loss function is less than the prescribed value.

In the above steps, the boundary specifying data specifies not only the boundary surface but also the direction toward the desired region by specifying the desired and undesired regions. Moreover, the output coordinates are expected to be positioned within the desired region and are expected not to be positioned within the undesired region.

Therefore, because the value of the loss function is gradually decreased by iteratively calculating the value of the loss function, the output coordinates are shifted toward the desired region from the undesired region while the control parameters of the learning apparatus are changed.

Accordingly, the output coordinates specified by N items of the output data can be finally positioned in the desired region.

The second object is also achieved by the provision of a learning method for adjusting both weight parameters and threshold values of a learning apparatus by utilizing teaching signal data and a plurality of neurons interconnected in an artificial neural network in which input data provided to first neurons of a first stage is weighted with the weight parameters and the threshold values is subtracted from the weighted input data so that the weighted input data is transmitted to final neurons of a final stage through hidden stages in which the data is weighted with the weight parameters, subtracted the threshold values, and converted by applying a prescribed monotone increasing function, after which output data is provided from the final neurons, comprising steps of:

defining an output vector designated by N items of output data in N dimensions, the output vector designating output coordinates of which components are equal to values of the output data;

defining boundary specifying data which specifies a boundary surface dividing a desired region from an undesired region in N-dimensional space, the boundary specifying data being a type of the teaching signal data;

defining a loss function which decreases when the output coordinates designated by the output vector are shifted toward the desired region from the undesired region specified by the boundary specifying data;

providing the input data to the first neurons;

providing the boundary specifying data to the learning apparatus;

calculating the output vector designated by the output data obtained by respectively weighting the input data with the weight parameters and subtracting the threshold values from the weighted input data;

calculating a value of the loss function by utilizing both the output coordinates designated by the calculated output vector and the boundary surface specified by the boundary specifying data;

7

iteratively calculating the value of the loss function by renewing the weight parameters and the threshold values to decrease the value of the loss function until the value of the loss function is less than a prescribed value in cases where the value of the loss function is equal to or greater than the prescribed value; and

adjusting the weight parameters and the threshold values of the learning apparatus to the newest weight parameters and the newest threshold values when the value of the loss function is less than the prescribed value.

In the present invention, because the learning method utilizes the artificial neural network, the input data provided for the first neurons is automatically transmitted to the final neurons according to a predetermined calculation so that the input data is automatically converted to output data. The calculation in the artificial neural network is also applied to a non-linear data conversion. For example, because the input data is converted by the prescribed monotone increasing function in the hidden and final neurons, the input data is non-linearly converted to output data.

In the above steps, the boundary specifying data specifies not only the boundary surface but also the direction toward the desired region by specifying the desired and undesired regions. Moreover, the output coordinates are expected to be within the desired region and are expected not to be within the undesired region.

Therefore, because the value of the loss function is gradually decreased by iteratively calculating the value of the loss function, the output coordinates are moved to the desired region from the undesired region while the weight parameters and the threshold values of the learning apparatus are changed.

Accordingly, the output coordinates specified by N items of output data can be finally positioned in the desired region.

BRIEF DESCRIPTION OF THE DRAWINGS

Fig. 1 is a block diagram of a learning apparatus according to a first modification of the present invention, the learning apparatus being conceptually shown.

Fig. 2 is a block diagram of a learning apparatus for learning by utilizing a back-propagation learning method in a 3-layer feedforward artificial neural network according to the first embodiment of the first modification.

Fig. 3 is a graphic view of a repulsion term $r_-$ of a loss function utilized in the first embodiment of the first modification, showing the relation between $|O^p-y^p|$ and $r_-$.

Fig. 4 is a flowchart showing a learning method utilized in the learning apparatus shown in Fig. 2 according to the first embodiment of the first modification.

Fig. 5 is a graphic view showing the relation between the input data and the output data which is obtained in the learning apparatus according to the first embodiment of the first modification of the present invention.

Fig. 6 is a graphic view showing a repulsion term $r_-^p$ of a loss function according to a second embodiment of the first modification.

Fig. 7 is a graphic view showing a repulsion term $r_-^p$ of a loss function related to the undesirable output data according to a third embodiment of the first modification.

Fig. 8 is a graphic view showing a repulsion term $r_-^p$ of a loss function according to a fourth embodiment of the first modification.

Fig. 9 is a block diagram of learning apparatus for learning by utilizing a back-propagation learning method in a 3-layer feedforward artificial neural network according to a fifth embodiment of the first modification.

Fig. 10 is a graphic view showing the relation between the input data and the output data which is obtained by the learning in the learning apparatus according to the fifth embodiment of the first modification of the present invention.

Fig. 11 is a flowchart showing a learning method utilized in the learning apparatus shown in Fig. 2 according to the sixth embodiment of the first modification.

Fig. 12 is a graphic view of the generalized Gaussian distribution function $Ga(x|\theta)$.

Fig. 13 is a flowchart showing a learning method utilized in the learning apparatus shown in Fig. 2 according to the seventh embodiment of the first modification.

Fig. 14 is a block diagram of learning apparatus according to a second modification of the present invention, the apparatus being conceptually shown.

Fig. 15 is a block diagram of learning apparatus for learning by utilizing the back-propagation learning method in a 3-layer feedforward artificial neural network according to a first embodiment of the second

EP 0 492 641 A2

modification.

Fig. 16 shows the boundary surface specified by the boundary vectors $\vec{y}$, $\vec{v}$ in a three-dimensional space.

Fig. 17 shows the relation among the vectors $\vec{O}$, $\vec{y}$ and $\vec{v}$ in the 3 dimensional space.

Fig. 18 is a graphic view of the relation between a boundary term $r_>$ of a loss function and the value of the inner product d.

Fig. 19 is a flowchart showing a learning method performed in the learning apparatus shown in Fig. 15 according to the first embodiment of the second modification.

Fig. 20 is a graphic view showing a boundary term $r_>^p$ relating to a loss function according to a second embodiment of the second modification.

Fig. 21 is a graphic view showing a boundary term $r_>^p$ a loss function according to a third embodiment of the second modification.

## DETAILED DESCRIPTION OF THE PREFERRED EMBODIMENTS

Preferred embodiments of learning apparatus and a learning method by which the learning apparatus learns according to the present invention are described with reference to drawings.

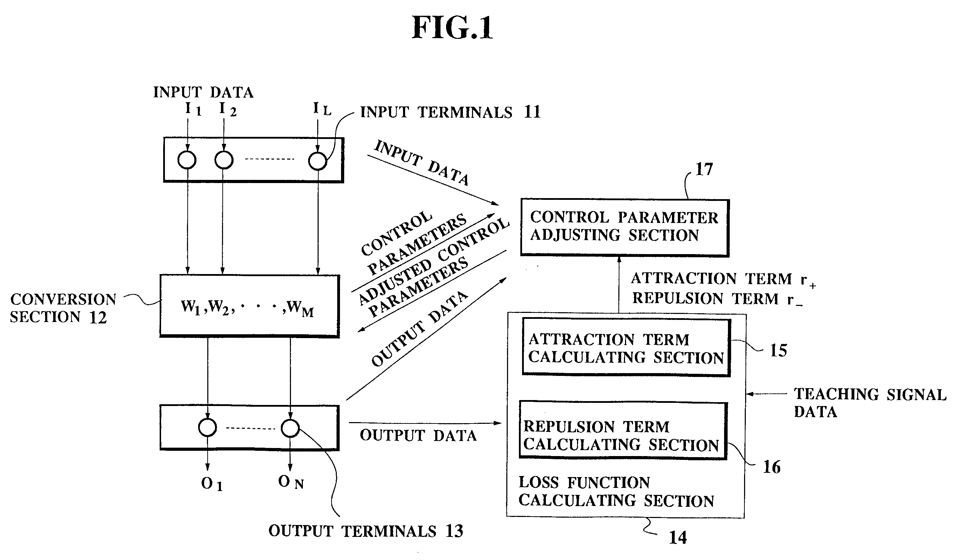

Fig. 1 is a block diagram of a learning apparatus according to a first modification of the present invention, the learning apparatus being conceptually shown.

As shown in Fig. 1, the learning apparatus for adjusting control parameters by which input data $I_i$ (i = 1 to L) is converted to provide output data $O_k$ (k = 1 to N) corresponding to teaching signal data $y_k$ composed of both desired output data and undesirable output data, comprises:

a plurality of input terminals 11 for respectively receiving the input data $I_i$, the terminals 11 being L in number;

a conversion section 12 for converting the input data $I_i$ into intermediate data by utilizing control parameters $W_j$ (j = 1 to M) according to a prescribed calculation;

a plurality of output terminals 13 for respectively reconverting the intermediate data converted in the conversion section 12 according to a prescribed calculation to obtain the output data $O_k$ and for outputting the output data $O_k$, the terminals 13 being N in number;

a loss function calculating section 14 for calculating a value of a loss function r by utilizing both the teaching signal data which is provided by an operator and the output data $O_k$ provided from the output terminals 13;

an attraction term calculating section 15 included in the section 14 for calculating an attraction term $r_+$ of the loss function r by utilizing both the output data and the desired output data in cases where the desired output data is provided to the learning apparatus as teaching signal data, the value of the attraction term $r_+$ being decreased when the output data $O_k$ is shifted to the desired output data $y_k$;

a repulsion term calculating section 16 included in the section 14 for calculating a repulsion term $r_-$ of the loss function by utilizing both the output data and the undesirable output data in cases where the undesirable output data is provided to the learning apparatus as the teaching signal data, the value of the repulsion term $r_-$ being decreased when the output data $O_k$ is shifted far from the undesirable output data $y_k$; and

a control parameter adjusting section 17 for adjusting the control parameters Wj utilized in the conversion section 12 to decrease the sum of the values of the attraction and repulsion terms $r_+$, $r_-$ calculated in the attraction and repulsion terms calculating sections 15, 16 by utilizing N items of teaching signal data (the desired output data or the undesirable output data) $y_k$, the input data $I_i$, the output data $O_k$, and the control parameters Wj, the adjusted control parameters Wj being replaced with the control parameters Wj stored in the conversion section 12.

Output data $O_k$ which is close to the desired output data and which is not close to the undesirable output data is desirable.

The teaching signal data is provided to the learning apparatus with the corresponding input data and a symbol indicating whether the teaching signal data is the desired output data or undesirable output data. Therefore, training example data provided by an operator is composed of the input data, the teaching signal data, and the symbol.

The input data is sometimes provided to the learning apparatus after the learning has been completed.

In the above configuration, the input data $I_i$ is initially received in the input section 11, and the teaching signal data is received in the loss function calculating section 14. The input data $I_i$ received in the input section 11 is converted in the conversion section 12 and is transmitted to the output section 13 to provide the output data $O_k$ for the loss function calculating section 14.

9

In the loss function calculating section 14, the value of the loss function $r = r_+ + r_-$ is calculated by utilizing both the teaching signal data and the output data.

For example, in cases where the desired output data is provided to the loss function calculating section 14 by the operator, the value of the attraction term $r_+$ of the loss function is calculated in the loss function calculating section 15 in the same manner as in a conventional method. On the other hand, in cases where undesirable output data is provided to the loss function calculating section 14 by the operator, the value of the repulsion term $r_-$ of the loss function is calculated in the loss function calculating section 16.

The value of the loss function calculated in the loss function calculating section 14 is then transmitted to the control parameter adjusting section 17.

In the control parameter adjusting section 17, the control parameters Wj are adjusted according to a prescribed calculation method to decrease the value of the attraction or repulsion term $r_+$, or $r_-$ of the loss function. The control parameters Wj adjusted in the control parameter adjusting section 17 are then replaced with the control parameters Wj which have already been stored in the conversion section 12.

Thereafter, the replaced control parameters Wj are utilized to iteratively convert the input data $I_i$ and provide new output data $O_k$ for the loss function calculating section 14.

Therefore, the control parameters Wj are iteratively adjusted in the control parameter adjusting section 17 and are replaced with the adjusted control parameters Wj. As a result, the loss function r is decreased to a prescribed value.

Accordingly, the control parameters Wj can be adjusted to the most appropriate values for shifting the output data $O_k$ close to the desired output data and for shifting the output data $O_k$ far from the undesirable output data. In other words, the learning apparatus according to the first modification of the present invention can learn by utilizing the undesirable output data.

The details of the repulsion term $r_-$ of the loss function are described in the following embodiments.

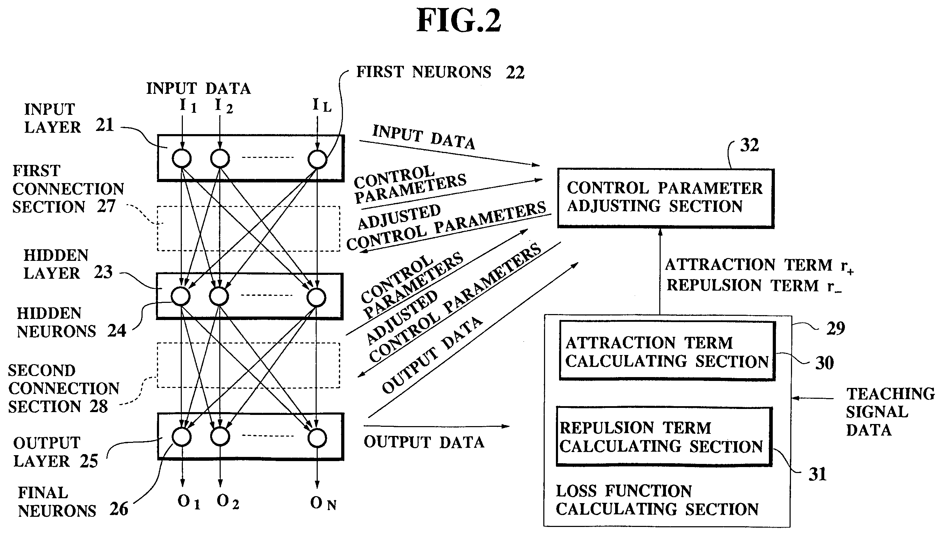

Next, a learning apparatus and a learning method by which the learning apparatus learns according to a first embodiment of the first modification are described with reference to Figs. 2 to 5.

Fig. 2 is a block diagram of the learning apparatus for learning by utilizing a back-propagation learning method in a 3-layer feedforward artificial neural network according to the first embodiment of the first modification.

As shown in Fig. 2, a learning apparatus forlearning by utilizing both teaching signal data $y_k$ and input data $I_i$ ($i = 1$ to L), which is provided by an operator in a 3-layer feedforward artificial neural network, consists of:

an input layer 21 provided with a plurality of first neurons 22 for receiving the input data $I_i$ to the i-th neuron 22, the input data $I_i$ being weighted by a prescribed weight parameter;

a hidden layer 23 provided with a plurality of hidden neurons 24 for receiving both the weighted input data from the first neurons 22 and a threshold value $\theta^H_j$ ($j = 1$ to M') to the j-th hidden neuron 24 and for outputting hidden data $O^H_j$ from the j-th hidden neuron 24, the hidden data $O^H_j$ being weighted by a prescribed weight parameter;

an output layer 25 provided with a plurality of final neurons 26 for receiving both the weighted hidden data from the hidden neurons 24 and a threshold value $\theta^O_k$ ($k = 1$ to N) to the k-th final neuron 26, and for outputting data $O_k$ from the k-th final neuron 26;

a first connection section 27 connected between the input layer 21 and the hidden layer 23 for multiplying the input data Ii by a weight parameter $W^{HI}_{ji}$, the input data Ii being transmitted from the i-th first neuron 22 to the j-th hidden neuron 24;

a second connection section 28 connected between the hidden layer 23 and the output layer 25 for multiplying the hidden data $O^H_j$ by a weight parameter $W^{OH}_{kj}$, the hidden data $O^H_j$ being transmitted from the the j-th hidden neuron 24 to the k-th final neuron 26;

a loss function calculating section 29 for calculating a value of a loss function by utilizing both the output data $O_k$ provided from the k-th final neuron 26 and the teaching signal data $y_k$ corresponding to the output data $O_k$, the teaching signal data $y_k$ being either desired output data or undesirable output data;

an attraction term calculating section 30 included in the section 29 for calculating an attraction term $r_+$ of the loss function by utilizing both the output data $O_k$ and the desired output data $y_k$ in cases where the desired output data $y_k$ is provided to the learning apparatus as the teaching signal data $y_k$, the value of the attraction term $r_+$ being decreased when the output data $O_k$ is shifted close to the desired output data $y_k$;

a repulsion term calculating section 31 included in the section 29 for calculating a repulsion term $r_-$ of the loss function relating to the undesirable output data $y_k$ by utilizing both the output data $O_k$ and the undesirable output data $y_k$ in cases where the undesirable output data $y_k$ is provided to the learning apparatus as the teaching signal data $y_k$, the value of the repulsion term $r_-$ being decreased when the output data $O_k$ is shifted far from the undesirable output data $y_k$; and

a control parameter adjusting section 32 for adjusting control parameters such as the weight parameters $W^{HI}_{ji}$, $W^{OH}_{kj}$ utilized in the first and second connection sections 27, 28 and the threshold values $\theta^{H}_{j}$, $\theta^{O}_{k}$ to decrease the value of the loss function by utilizing the teaching signal data $y_k$ (the desired output data or undesirable output data), the input data $I_i$, the output data $O_k$, the weight parameters $W^{HI}_{ji}$, $W^{OH}_{kj}$, and the threshold values $\theta^{H}_{j}$, $\theta^{O}_{k}$. The value of the loss function is obtained by adding both the attraction and repulsion terms $r_+$, $r_-$ calculated in the attraction and repulsion terms calculating sections 30, 31.

Relational equations for finding the output data $O_k$ by utilizing the input data $I_i$, the weight parameters $W^{HI}_{ji}$, $W^{OH}_{kj}$, and the threshold values $\theta^{H}_{j}$, $\theta^{O}_{k}$. are as follows.

$$I^{H}_{j} = \sum_{1}^{L} W^{HI}_{ji} * I_i - \theta^{H}_{j} \qquad ---(1)$$

$$O^{H}_{j} = f(I^{H}_{j}) \qquad (2)$$

$$I^{O}_{k} = \sum_{j}^{M'} W^{OH}_{kj} * O^{H}_{j} - \theta^{O}_{k} \qquad ---(3)$$

$$O_k = f(I^{O}_{k}) \qquad (4)$$

$$f(x) = \{1 + \exp(-x)\}^{-1} \qquad (5)$$

where, $I^{H}_{j}$ is a value of the data provided to the j-th hidden neuron 24, and $I^{O}_{k}$ is a value of the data provided to the k-th final neuron 26. Moreover, the function f indicates the conversion in the neurons 24, 26.

In the present invention, Q sets of training example data composed of the input data $I_i$, the teaching signal data $y_k$, and the symbol Tp are provided to the learning apparatus. Whether the teaching signal data $y_k$ is the desired output data or undesirable output data is distinguished by utilizing a symbol Tp. That is, the p-th (p = 1 to Q) set of teaching signal data $y_k$ is the desired output data when Tp is indicated by a symbol + (Tp = +), while the p-th set of teaching signal data $y_k$ is the undesirable output data when Tp is indicated by a symbol - (Tp = -).

In this case, the p-th set of training example data $I_i$, $y_k$ is indicated by $I_i^p$, $y_k^p$, and the output data $O_k$ calculated by applying the equations (1) to (5) is indicated by $O_k^p$. Moreover, the attraction and repulsion terms $r_+$, $r_-$ of the loss function calculated in the loss function calculating section 29 are indicated by $r_+^p$, $r_-^p$, and the others are indicated by attaching the letter p.

The attraction term $r_+^p$ of the loss function and the repulsion term $r_-^p$ of the loss function are respectively defined by the following equations.

$$r_+^p = (1/2) * \sum_{k}^{N} (O_k^p - y_k^p)^2 \qquad ---(6)$$

$$r_-^p = \gamma_- * \beta_- * \exp\{1/2 - \sum_{k}^{N} (O_k^p - y_k^p)^2 / (2 * \beta_-^2)\} \qquad ---(7)$$

where, $\gamma_-$ is a parameter for adjusting a contributory ratio of the undesirable output data to the desired output data, and $\beta_-$ is a parameter for adjusting the influence of the undesirable output data on the output data.

The feature of the attraction and repulsion terms $r_+^p$, $r_-^p$ is as follows. The attraction term $r_+^p$ is decreased when the output data $O_k^p$ is shifted close to the desired output data $y_k$. That is, because output of the desired output as output data is desired, the decrease of the attraction term $r_+^p$ is adequate.

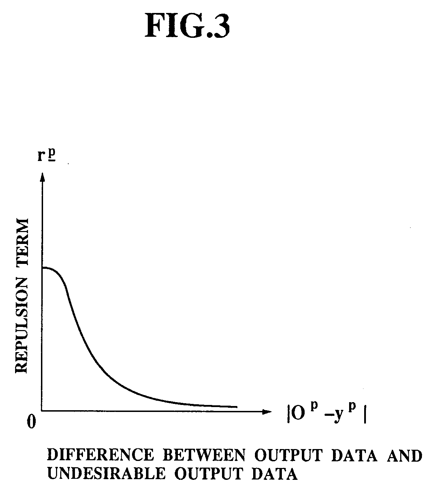

Fig. 3 is a graphic view of the repulsion term $r_-^p$ utilized in the first embodiment of the first modification, showing the relation between $\{\Sigma(O_k^p - y_k^p)^2\}^{1/2}$ and $r_-^p$. $\{\Sigma(O_k^p - y_k^p)^2\}^{1/2}$ is shown by a simple indication $|O^p - y^p|$ for a Y-axis in Fig. 3.

As shown in Fig. 3, the repulsion term $r_-^p$ is decreased when the output data $O_k^p$ is shifted far from the undesirable output data $y_k^p$. That is, because output of the undesired output as output data is not desired, the decrease of the repulsion term $r_-^p$ relating to the undesirable output data is adequate.

Therefore, in cases where the desired output data is provided to the learning apparatus as prescribed sets of teaching signal data and the undesirable output data is provided to the learning apparatus as the remaining sets of teaching signal data, adjusment of the control parameters to decrease the sum of the attraction and repulsion terms $\Sigma (r_+^p + r_-^p)$ is adequate because both the attraction and repulsion terms $r_+^p$, $r_-^p$ tend to be decreased.

Accordingly, a loss function r is defined for adjusting the control parameters such as the weight parameters $W^{HI}_{ji}$, $W^{OH}_{kj}$ and the threshold values $\theta^H_j$, $\theta^O_k$ to the most appropriate values by utilizing the Q sets of the training example data as follows.

$$
\begin{aligned}
r &= (1/Q)*\sum_{p}^{Q} r_{Tp}^p \\
&= (1/Q)*( \ r_+ \ + \ r_- \ ) \\
&= (1/Q)*(\sum_{p:D} r_+^p \ + \sum_{p:U} r_-^p ) \qquad\qquad ---(8)
\end{aligned}
$$

where $r_{Tp}^p$ is a value of the loss function obtained when the p-th learning data is provided to the learning apparatus. Therefore, $r_{Tp}^p$ is either $r_+^p$ or $r_-^p$ according to the type of teaching signal data. $\Sigma_{p:D}$ indicates the sum of all attraction terms, and $\Sigma_{p:U}$ indicates the sum of all repulsion terms.

That is, when the value of the loss function r is decreased to less than a prescribed value, the control parameters $W^{HI}_{ji}$, $W^{OH}_{kj}$, $\theta^H_j$, and $\theta^O_k$ are judged to be adjusted to the most appropriate values.

The contributory ratio $\Sigma r_-^p/\Sigma r_+^p$ of the undesirable output data to the desired output data generally variesaccording to properties of the teaching signal data. Therefore, the contributory ratio $\Sigma r_-^p/\Sigma r_+^p$ is adjusted by utilizing the parameter $\gamma_-$. That is, in cases where the parameter $\gamma_-$ is increased, the repulsion term $r_-$ of the loss function is increased so that the influence of the undesirable output data is increased.

Moreover, the influence of the undesirable output data on the output data can be specified by adjusting the parameter $\beta_-$.

The repulsion term $r_-$ is adopted because the shape of the repulsion term $r_-$ is simple and the value of the repulsion term $r_-$ is promptly decreased when the output data $O_k^p$ provided from the output layer 25 is shifted far from the undesirable output data. The feature of the repulsion term $r_-$ relating to the undesirable output data are described as follows.

As shown in Fig. 3, a partial derivative of $r_-$ with respect to $|O^p-y^p|$ gradually approaches the zero value as $|O^p-y^p|$ becomes larger. Therefore, when the output data $O_k^p$ is furthest from the corresponding undesirable output data $y_k^p$, the repulsion term $r_-$ is not shifted in practice regardless of whether the control parameters $W^{HI}_{ji}$, $W^{OH}_{kj}, \theta^H_j$, and $\theta^O_k$ are adjusted to new values. In other words, the influence on the output data of items of undesirable output data furthest from the output data is small, and the control parameters $W^{HI}_{ji}$, $W^{OH}_{kj}$, $\theta^H_j$, and $\theta^O_k$ are adjusted by utilizing the other items of undesirable output data $y_k^p$ which are comparatively close to the corresponding output data $O_k^p$. Therefore, the learning can be stably implemented.

Moreover, the partial derivative $\partial r_-/\partial |O^p-y^p|$ equals zero when $|O^p-y^p|$ equals zero. Therefore, when each item of output data $O_k^p$ is close to the corresponding undesirable output data $y_k^p$, the output data $O_k^p$ can be easily shifted in any direction in an N-dimensional space.

Accordingly, the learning method in which the undesirable output data $y_k^p$ is utilized can be utilized for general purposes such as robot control.

Moreover, because the repulsion term $r_-$ is exponentially decreased with respect to $|O^p-y^p|$, the influence of the undesirable output data on the output data $O_k^p$ is limited to a short range.

Next, a method for adjusting the control parameters $W^{HI}_{ji}$, $W^{OH}_{kj}, \theta^H_j$, and $\Delta\theta^O_k$ is described.

Renewed values $\Delta W^{HI}_{ji}$, $\Delta W^{OH}_{kj}$ for slightly adjusting the weight parameters $W^{HI}_{ji}$, $W^{OH}_{kj}$ for each iterative calculation are defined as follows.

$$
\partial r/\partial W^{HI}_{ji} = (1/Q)*(\sum_{p:D} \partial r_+^p/\partial W^{HI}_{ji} \ + \sum_{p:U} \partial r_-^p/\partial W^{HI}_{ji} ) \quad ---(9)
$$

$$
\Delta W^{HI}_{ji}(t+1) = -(1-\alpha)^\bullet \eta * \partial r/\partial W^{HI}_{ji} \ + \ \alpha * \Delta W^{HI}_{ji}(t) \qquad (10)
$$

$$\partial r / \partial W^{OH}{}_{kj} = (1/Q) * (\sum_{p:D} \partial r_{+}{}^{p} / \partial W^{OH}{}_{kj} + \sum_{p:U} \partial r_{-}{}^{p} / \partial W^{OH}{}_{kj}) \quad ---(11)$$

$\Delta W^{OH}{}_{kj}(t+1) = -(1-\alpha) \cdot \eta * \partial r / \partial W^{OH}{}_{kj} + \alpha * \Delta W^{OH}{}_{kj}(t)$ (12)

where, t is an iteration number of the calculations implemented to adjust the control parameters so that both $\Delta W^{HI}{}_{ji}(t)$ and $\Delta W^{OH}{}_{kj}(t)$ indicate the renewed values at the iteration t. Moreover,$\eta$ is a learning rate, and $\alpha$ is a momentum parameter. 1/Q is a standardization term for standardizing the partial derivatives.

That is, each renewed value at the iteration $(t+1)$ is influenced by the renewed value at the iteration t while being adjusted by the momentum parameter $\alpha$. The contribution of the partial derivatives $\partial r / \partial W^{HI}{}_{ji}$, $\partial r / \partial W^{OH}{}_{kj}$ on the renewed values $\Delta W^{HI}{}_{ji}(t)$, $\Delta W^{OH}{}_{kj}(t)$ is determined by the learning parameter $\eta$.

Moreover, renewed values $\Delta \theta^{H}{}_{j}$, $\Delta \theta^{O}{}_{k}$ for slightly adjusting the threshold values $\theta^{H}{}_{j}$, $\theta^{O}{}_{k}$ for each iterative calculation are defined as follows.

$$\partial r / \partial \theta^{H}{}_{j} = (1/Q) * (\sum_{p} \partial r_{+}{}^{p} / \partial \theta^{H}{}_{j} + \sum_{p} \partial r_{-}{}^{p} / \partial \theta^{H}{}_{j}) \quad ---(13)$$

$\Delta \theta^{H}{}_{j}(t+1) = -(1-\alpha) \cdot \eta * \partial r / \partial \theta^{H}{}_{j} + \alpha * \Delta \theta^{H}{}_{j}(t)$ (14)

$$\partial r / \partial \theta^{O}{}_{k} = (1/Q) * (\sum_{D} \partial r_{+}{}^{p} / \partial \theta^{O}{}_{k} + \sum_{D} \partial r_{-}{}^{p} / \partial \theta^{O}{}_{k}) \quad ---(15)$$

$\Delta \theta^{O}{}_{k}(t+1) = -(1-\alpha) \cdot \eta * \partial r / \partial \theta^{O}{}_{k} + \alpha * \Delta \theta^{O}{}_{k}(t)$ (16)

Therefore, renewed weight parameters $W^{HI}{}_{ji}(t+1)$, $W^{OH}{}_{kj}(t+1)$ and the renewed threshold values $\theta^{H}{}_{j}$-$(t+1)$, $\theta^{O}{}_{k}(t+1)$ are found as follows.

$W^{HI}{}_{ji}(t+1) = W^{HI}{}_{ji}(t) + \Delta W^{HI}{}_{ji}(t+1)$ (17)

$W^{OH}{}_{kj}(t+1) = W^{OH}{}_{kj}(t) + \Delta W^{OH}{}_{kj}(t+1)$ (18)

$\theta^{H}{}_{j}(t+1) = \theta^{H}{}_{j}(t) + \Delta \theta^{H}{}_{j}(t+1)$ (19)

$\theta^{O}{}_{k}(t+1) = \theta^{O}{}_{k}(t) + \Delta \theta^{O}{}_{k}(t+1)$ (20)

As a result, the loss function r is decreased by utilizing the control parameters such as the weight parameters $W^{HI}{}_{ji}(t)$, $W^{OH}{}_{kj}(t)$ and the threshold values $\theta^{H}{}_{j}(t)$, $\theta^{O}{}_{k}(t)$ which are iteratively adjusted by applying the equations (9) to (16). Finally, the loss function r is minimized by utilizing the control parameters adjusted to the most appropriate values. A method of minimization based on the equations (9) to (20) is well known as the steepest-descent method.

A condition for stopping the iterative calculations for adjusting the control parameters to the most appropriate values is determined as follows.

$r < E_{L}$ (21)

where, $E_{L}$ is a finishing parameter for determining the finishing conditions.

Next, a learning method by which the learning apparatus shown in Fig. 2 learns by adjusting the control parameters such as the weight parameters $W^{HI}{}_{ji}$, $W^{OH}{}_{kj}$ and the threshold values $\theta^{H}{}_{j}$, $\theta^{O}{}_{k}$ is described. In the learning method, the attraction and repulsion terms $r_{+}$, $r_{-}$ defined by the equations (6), (7) are utilized.

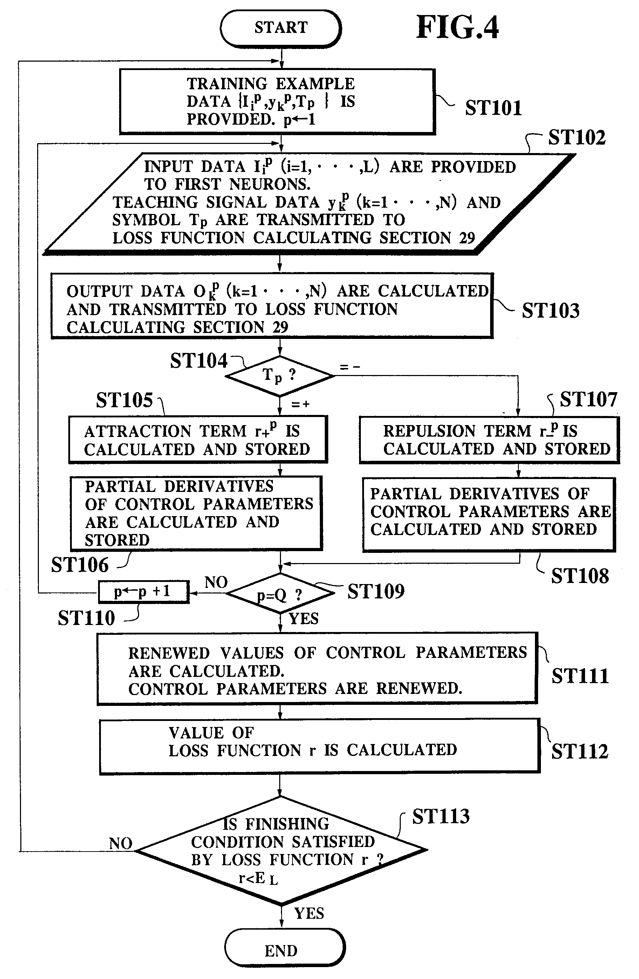

Fig. 4 is a flowchart showing a learning method for the learning apparatus shown in Fig. 2 according to the first embodiment of the first modification.

As shown in Fig. 4, a parameter p designating a set number of training example data $\{l_{i}{}^{p}, y_{k}{}^{p}, Tp\}$ composed of the teaching signal data $y_{k}{}^{p}$, the input data $l_{i}{}^{p}$, and the symbol Tp is set to 1 (p = 1) in a step 101 when the training example data $\{l_{i}{}^{p}, y_{k}{}^{p}, Tp\}$ is provided to the learning apparatus by an operator. Thereafter, L items of input data $l_{i}{}^{p}$ are provided to the first neurons 22, and N items of teaching signal data $y_{k}{}^{p}$ and the symbol Tp are automatically transmitted to the lose function calculating section 29 in a step 102.

Thereafter, N items of output data $O_k^P$ are calculated in the 3-layer feedforward artificial neural network by applying the equations (1) to (5) before the output data $O_k^P$ is transmitted to the loss function calculating section 29 in a step 103.

Thereafter, whether the teaching signal data $y_k^P$ is the desired output data or undesirable output data is judged by inspecting the symbol Tp in a prescribed control section (not shown) in a step 104. That is, in cases where Tp indicates the symbol +, the teaching signal data $y_k^P$ transmitted to the section 29 is judged to be the desired output data. On the other hand, in cases where Tp indicates the symbol -, the teaching signal data $y_k^P$ transmitted to the section 29 is judged to be the undesirable output data.

In cases where the teaching signal data $y_k^P$ is judged to be the desired output data in the step 104, a value of the attraction term $r_+^P$ is calculated in the attraction term calculating section 30 by utilizing the N items of desired output data according to the equation (6), and the calculated value is stored in a prescribed memory (not shown) of the section 30 in a step 105. Thereafter, the control parameters $W^{HI}_{ji}$, $W^{OH}_{kj}$, $\theta^H_j$, and $\theta^O_k$ utilized in the first and second connection sections 27, 28 are transmitted to the control parameter adjusting section 32 so that partial derivatives $\partial r_+^P/\partial W^{HI}_{ji}$, $\partial r_+^P/\partial W^{OH}_{kj}$, $\partial r_+^P/\partial\theta^H_j$, and $\partial r_+^P/\partial\theta^O_k$ are calculated by utilizing the value $r_+^P$ stored in the section 30 in the control parameter adjusting section 32 and are stored in a memory (not shown) of the section 32 in a step 106.

In cases where the teaching signal data $y_k^P$ is judged to be the undesirable output data in the step 104, a value of the repulsion term $r_-^P$ is calculated in the repulsion term calculating section 31 by utilizing the N items of undesirable output data according to the equation (7), and the calculated value is stored in a prescribed memory (not shown) of the section 31 in a step 107. Thereafter, the control parameters $W^{HI}_{ji}$, $W^{OH}_{kj}$, $\theta^H_j$, and $\theta^O_k$ utilized in the first and second connection sections 27, 28 are transmitted to the control parameter adjusting section 32 so that partial derivatives $\partial r_-^P/\partial W^{HI}_{ji}$, $\partial r_-^P/\partial W^{OH}_{kj}$, $\partial r_-^P/\partial\theta^H_j$, and $\partial r_-^P/\partial\theta^O_k$ are calculated by utilizing the values $r_-^P$ stored in the section 31 in the control parameter adjusting section 32 and are stored in the memory of the section 32 in a step 108.

Thereafter, whether or not the parameter p equals the number Q of items of training example data is judged in the prescribed control section in a step 109. In cases where the parameter p is judged not to equal the number Q, the parameter p is incremented by 1 in a step 110 so that the procedures from the step 102 to the step 109 are repeated until the attraction and repulsion terms $r_+^P$, $r_-^P$ and the partial derivatives $\partial r_+^P/\partial W^{HI}_{ji}$, $\partial r_+^P/\partial W^{OH}_{kj}$, $\partial r_+^P/\partial\theta^H_j$, $\partial r_+^P/\partial\theta^O_k$, $\partial r_-^P/\partial W^{HI}_{ji}$, $\partial r_-^P/\partial W^{OH}_{kj}$, $\partial r_-^P/\partial\theta^H_j$, and $\partial r_-^P/\partial\theta^O_k$ are stored throughout all the entire sets of training example data in the memory of the sections 29, 32.

In cases where the parameter p is judged to equal the number Q in the step 109, this judgement means that all sets of training example data have been calculated to provide Q sets of output data for the section 29. Moreover, the judgement means that the attraction and repulsion terms $r_+^P$, $r_-^P$ and the partial derivatives $\partial r_+^P/\partial W^{HI}_{ji}$, $\partial r_+^P/\partial W^{OH}_{kj}$, $\partial r_+^P/\partial\theta^H_j$, $\partial r_+^P/\partial\theta^O_k$, $\partial r_-^P/\partial W^{HI}_{ji}$, $\partial r_-^P/\partial W^{OH}_{kj}$, $\partial r_-^P/\partial\theta^H_j$, and $\partial r_-^P/\partial\theta^O_k$ are stored throughout all the sets of training example data in the memory of the sections 29, 32. Therefore, renewed values $\Delta W^{HI}_{ji}(t)$, $\Delta W^{OH}_{kj}(t)$ $\Delta\theta^H_j(t)$, and $\Delta\theta^O_k(t)$ are calculated by applying the equations (9) to (16) so that the weight parameters $W^{HI}_{ji}(t)$, $W^{OH}_{kj}(t)$ and the threshold values $\theta^H_j(t)$, $\theta^O_k(t)$ are slightly renewed by applying the equations (17) to (20) in a step 111. That is, renewed weight parameters $W^{HI}_{ji}(t+1)$, $W^{OH}_{kj}(t+1)$ and renewed threshold values $\theta^H_j(t+1)$, $\theta^O_k(t+1)$ are determined. Moreover, the value of the loss function r is then found by utilizing the attraction and repulsion terms $r_+^P$, $r_-^P$ stored in the memory of the section 29 according to the equation (8) in a step 112. In cases where the calculations in the steps 111, 112 are implemented for the first time, the iteration number t equals 1.

Thereafter, whether or not the value of the loss function r satisfies the finishing condition is judged by applying the equation (21) in a step 113. That is, in cases where the value of the loss function r is equal to or greater than $E_L$, the finishing condition is not satisfied, thereforethe iteration number t is incremented by 1. Thereafter, the procedures from the step 101 to the step 113 are iterated while utilizing the renewed control parameters $W^{HI}_{ji}(t+1)$, $W^{OH}_{kj}(t+1)$, $\theta^H_j(t+1)$, and $\theta^O_k(t+1)$ in place of the control parameters $W^{HI}_{ji}(t)$, $W^{OH}_{kj}(t)$, $\theta^H_j(t)$, and $\theta^O_k(t)$.

The iteration of the procedures from the step 101 to the step 113 is continued until the finishing condition is satisfied.

In cases where the value of the loss function r is less than $E_L$, the finishing condition is satisfied in the step 113 so that the learning in the learning apparatus is finished. That is, the control parameters such as the weight parameters and the threshold values are adjusted to the most appropriate values.

Accordingly, after the weight parameters and the threshold values are adjusted to the most appropriate values, the operator can accomplish the most appropriate diagnosis, the most appropriate robot control, or the like without utilizing the section 29.

Next, the results of the learning in the learning apparatus are shown.

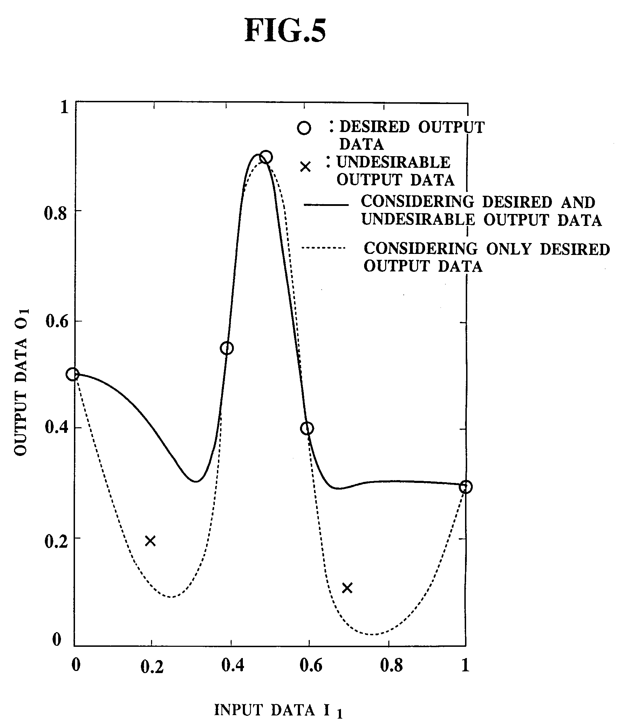

Fig. 5 is a graphic view showing the relation between the input data and the output data which is obtained by the learning in the learning apparatus according to the first embodiment of the first modification of the present invention.

The values of the parameters utilized for implementing the learning are as follows.

$L = 1$, $M' = 5$, $N = 1$, $\gamma_- = 1$, $\alpha = 0.5$, $\beta = 0.05$, $\eta = 10$, and $E_L = 10^{-5}$

Moreover, five items of desired output data are provided, and two items of undesirable output data are provided.

The initial values of the weight parameters and the threshold values are as follows.

$\theta^H_1(0) = 0$, $\theta^H_2(0) = 2.5$, $\theta^H_3(0) = 5$, $\theta^H_4(0) = 7.5$, $\theta^H_5(0) = 10$, $\theta^O_1(0) = 0$

$W^{OH}_{11}(0) = 0$, $W^{OH}_{12}(0) = 0$, $W^{OH}_{13}(0) = 0$, $W^{OH}_{14}(0) = 0$, $W^{OH}_{15}(0) = 0$, $W^{HI}_{11}(0) = 10$, $W^{HI}_{21}(0) = 10$, $W^{HI}_{31}(0) = 10$, $W^{HI}_{41}(0) = 10$, $W^{HI}_{51}(0) = 10$

As shown in Fig. 5, a large number of items of input data of which values are between 0 and 1 are provided one by one for the learning apparatus, and the output data is obtained for each item of input data.

A curved dash line indicates the result of the learning implemented by utilizing five items of desired output data without utilizing any undesired output. A curved solid line indicates the result of the learning implemented by utilizing both five items of desired output data and two items of undesirable output data.

The curved dash line passes through five items of desired output data without avoiding the two items of undesirable output data. On the other hand, the curved solid line passes through the five items of desired output data while avoiding the two items of undesirable output data.

That is, the learning in the learning apparatus is implemented to decrease the difference between the desired output data and the output data, while the learning is implemented to increase the difference between the undesirable output data and the output data.

Accordingly, the learning can be implemented with ease regardless of whether the teaching signal data is the desired output data or undesirable output data, so that the learning performance can be improved. That is, the learning can be implemented according to a learning condition.

In the first embodiment of the first modification, the loss function r occasionally does not reach the finishing condition because the artificial neural network is a non-linear type. In this case, it is preferable that a maximum iteration number $t_{MAX}$ be added to the finishing condition. That is, the learning for adjusting the control parameters is stopped when the number of iterations reaches the maximum iteration number $t_{MAX}$ regardless of whether the finishing condition designated by the equation (21) is satisfied. Thereafter, initial values of the control parameters are reset by the operator before the learning is resumed.

Moreover, either undesirable output data or desired output data is provided to the learning apparatus as a set of training example data in the first embodiment. However, it is preferable that both the undesirable output data and the desired output data be intermingled in the same set of training example data.

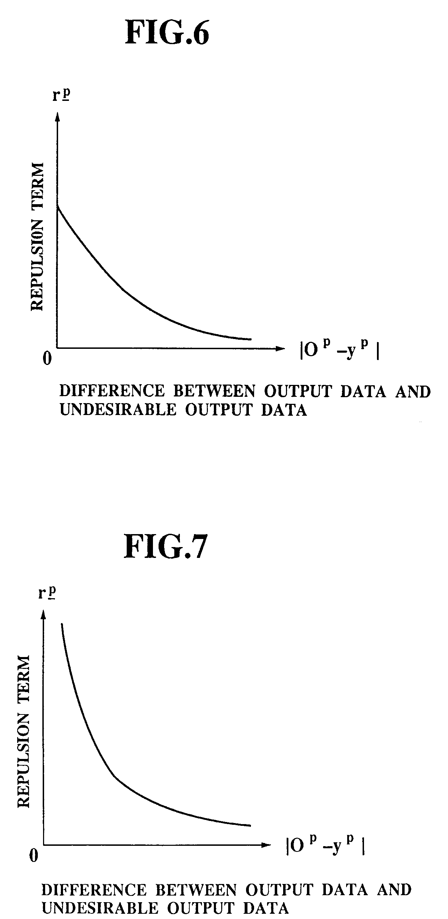

Next, learning methods according to the other embodiments of the first modification are described with reference to Figs. 6 to 8.

Fig. 6 is a graphic view showing a repulsion term $r_-^p$ of the loss function according to a second embodiment of the first modification. $\{\Sigma(O_k^p-y_k^p)^2\}^{1/2}$ is shown by a simple indication $|O^p-y^p|$ for a Y-axis in Fig. 6.

The repulsion term $r_-^p$ shown in Fig. 6 is defined by utilizing the following equation.

$$r_- = \sum_{p:U} r_-^p$$

$$= \gamma_- * \beta_- * \sum_{p:U} \exp\left(-\{\sum_k (O_k^p - y_k^p)^2\}^{1/2} / \beta_-\right) \qquad ---(22)$$

The features of the repulsion term $r_-^p$ defined by the equation (22) are as follows.

A partial derivative of the repulsion term $r_-^p$ with respect to the difference $|O^p-y^p|$ between the teaching signal data and the output data is large when $|O^p-y^p|$ is a small value. Therefore, the weight parameters and the threshold values are largely renewed so as to increase $|O^p-y^p|$ in early iterative calculations. That is, the output data is rapidly shifted far from the undesirable output data.

Accordingly, though the speed of learning is fast, the direction of learning is decided in the early iterative calculations. In other words, the direction of learning is limited in the N-dimensional space.

Fig. 7 is a graphic view showing a repulsion term $r_-^p$ of the loss function according to a third embodiment of the first modification. $\{\Sigma(O_k^p-y_k^p)^2\}^{1/2}$ is shown by a simple indication $|O^p-y^p|$ for a Y-axis in Fig. 7.

The repulsion term $r_-^p$ shown in Fig. 7 is defined by utilizing the following equation.

$$r_- = \sum_{p:U} r_-^p$$

$$= \gamma_- * \sum_{p:U} \{\sum_k (O_k^p - y_k^p)^2\}^{-n/2} \qquad \qquad ---(23)$$

The features of the repulsion term $r_-^p$ defined by the equation (23) are as follows.

A partial derivative of the repulsion term $r_-^p$ with respect to the difference $|O^p-y^p|$ between the teaching signal data and the output data diverges when $|O^p-y^p|$ equals the zero value. Therefore, the repulsion between the undesirable output data and the output data is large so that the output data is fully shifted far from the undesirable output data. However, the reliability of the calculation is not superior because the value of the repulsion term $r_-^p$ is rapidly decreased in the early iterative calculations. The extent of the repulsion can be adjusted by varying the value n. Moreover, because the value of the repulsion term $r_-^p$ is algebraically decreased when $|O^p-y^p|$ is decreased, the influence of the undesirable output data is exerted on the output data which is positioned far from the undesirable output data as compared with that of the first and second embodiments in which the repulsion term $r_-^p$ is exponentially decreased.

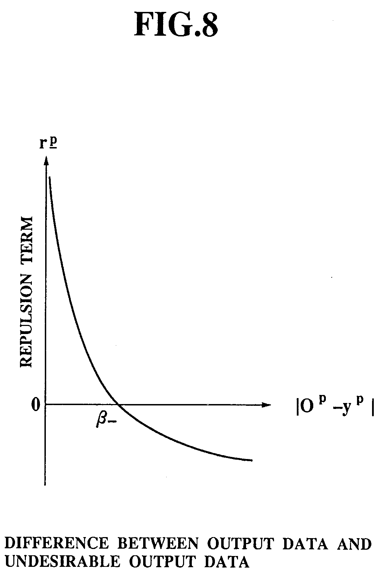

Fig. 8 is a graphic view showing a repulsion term $r_-^p$ relating to the undesirable output data according to a fourth embodiment of the first modification. $\{\sum(O_k^p - y_k^p)^2\}^{1/2}$ is shown by a simple indication $|O^p-y^p|$ for a Y-axis in Fig. 8.

The repulsion term $r_-^p$ shown in Fig. 8 is defined by utilizing the following equation.

$$r_- = \sum_{p:U} r_-^p$$

$$= -\gamma_- * \sum_{p:U} \ln[\{\sum_k (O_k^p - y_k^p)^2\}^{1/2}/\beta_-] \qquad \qquad ---(24)$$

The features of the repulsion term $r_-^p$ defined by the equation (24) are as follows.

A partial derivative of the repulsion term $r_-^p$ with respect to the difference $|O^p-y^p|$ between the teaching signal data and the output data diverges when $|O^p-y^p|$ equals the zero value. Therefore, the repulsion between the undesirable output data and the output data is large so that the output data is shifted as far as possible from the undesirable output data in the same manner as in the third embodiment. However, the reliability of the calculation is not superior in the same manner as in the third embodiment. Moreover, the value of the repulsion term $r_-^p$ does not gradually approach the zero value when $|O^p-y^p|$ is increased. Therefore, the finishing conditions must be changed. That is, the finishing condition of the repulsion term $r_- = \sum r_-^p$ is judged independent of that of the attraction term $r_+$. In detail, the finishing condition of the attraction term $r_+$ is as follows.

$$r_+ < EL_+ \qquad (25)$$

where $EL_+$ is a finishing parameter of the loss function $r_+$. On the other hand, when each repulsion term $r_-^p$ is less than a prescribed positive value, the finishing condition of the repulsion term $r_-$ is satisfied.

Next, a fifth embodiment of the first modification is described.

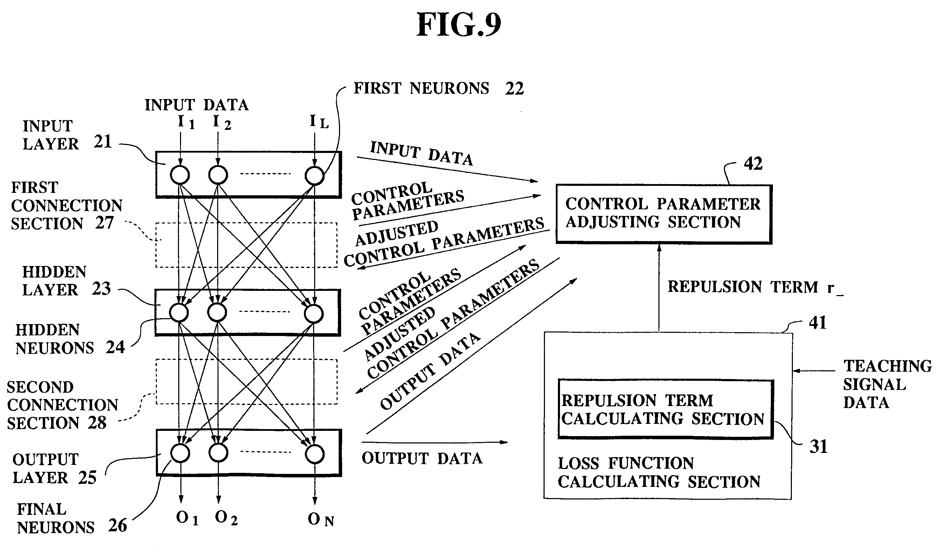

Fig. 9 is a block diagram of a learning apparatus which learns by utilizing a back-propagation learning method in a 3-layer feedforward artificial neural network according to a fifth embodiment of the first modification.

As shown in Fig.9, the learning apparatus according to the fifth embodiment comprises;

the input layer 21 provided with the first neurons 22;

the hidden layer 23 provided with the hidden neurons 24;

the output layer 25 provided with the final neurons 26;

the first and second connection sections 27, 28;

a loss function calculating section 41 for calculating the repulsion term $r_-^p$ defined by the equation (7), (22), (23), or (24) by utilizing both the output data $O_k^p$ provided from the k-th final neuron 26 and the undesirable output data $y_k^p$;

the repulsion term calculating section 31 included in the section 41; and

a control parameter adjusting section 42 for adjusting control parameters such as the weight parameters $W^{HI}_{ji}$, $W^{OH}_{kj}$ utilized in the first and second connection sections 27, 28 and the threshold values $\theta^H_j$, $\theta^O_k$ to decrease the values of the repulsion term $r_-$ calculated in the repulsion term calculating section 31 by utilizing the undesirable output data $y_k$, the input data $I_i$, the output data $O_k$, the weight parameters $W^{HI}_{ji}$, $W^{OH}_{kj}$, and the threshold values $\theta^H_j$, $\theta^O_k$.

In the above configuration, the learning apparatus receives the input data $I_i^p$ and the undesirable output data $y_k^p$ in which the symbol Tp is not included. Thereafter, as shown in Fig. 4, the procedures from the step 101 to the step 103 and the procedures from the step 107 to the step 113 are implemented in the same manner as in the first embodiment.

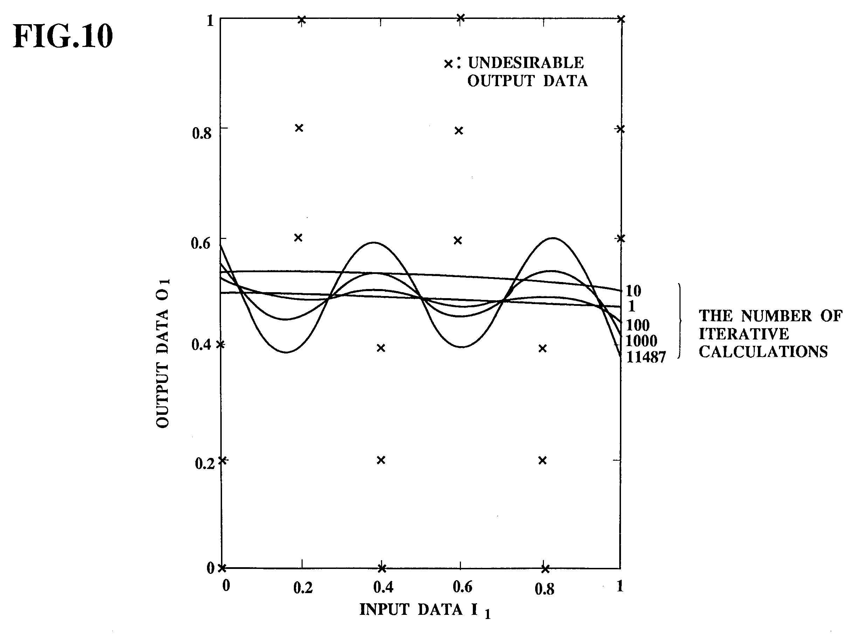

Fig. 10 is a graphic view showing the relation between the input data and the output data which is obtained by the learning in the learning apparatus according to the fifth embodiment of the first modification of the present invention.

The values of the parameters utilized for learning are the same as those utilized for learning as shown in Fig. 5. The initial values of the control parameters are the same as those utilized for learning as shown in Fig. 5. Moreover, 18 items of undesirable output data are provided, and a large number of items of input data of which values are between 0 and 1.0 are provided to the learning apparatus. Therefore, the output data is obtained for each item of input data.

As shown in Fig. 10, four types of half-finished learning results and a final learning result were obtained. These results are indicated by solid lines. A first half-finished result is obtained by once implementing the procedures from the step 101 to the step 113 (t = 1). A second half-finished result is obtained by iterating the procedures 10 times (t = 10). A third half-finished result is obtained by iterating the procedures 100 times (t = 100). A fourth half-finished result is obtained by iterating the procedures 1000 times (t = 1000). The final result is obtained by iterating the procedures 11487 times (t = 11487).

The repulsion term $r_-$ satisfied the finishing condition when the procedures were iterated 11487 times.

As shown in Fig. 10, the learning result shifted far from all the undesirable output data can be gradually obtained by iterating the procedures. Moreover, the undesirable output data close to the output data exerts a strong influence on the output data, while the undesirable output data far from the output data does not exert a strong influence on the output data. On the other hand, the desired output data generally exerts a strong influence on the output data.

Accordingly, the adjustment of the control parameters such as the weight parameters and the threshold values can be learned to increase the difference between the undesirable output data and the output data.

Next, a sixth embodiment of the first modification is described.

Generally, a statistical entropy Se is utilized to implement a method for approximating a true probability distribution $p_i$ (i = 1 to m) by utilizing a probability model $q_i$ (i = 1 to m) which is defined to assume the true probability distribution $p_i$. That is, the statistical entropy Se is defined by the following equation.

$$\text{Se} = \sum_{i}^{m} \{ p_i * \ln(q_i / p_i) \} \qquad ---(26)$$

where $p_i$ is the probability of generating an event $\omega_i$, and $p_i > 0$ and $p_1 + p_2 + \cdots + pm = 1$ are satisfied. Moreover, $q_i$ is an assumed probability to assume the probability $p_i$, and $q_i > 0$ and $q_1 + q_2 + \cdots + q_m = 1$ are satisfied.

The statistical entropy Se satisfies the following equation according to statistics.

$$\text{Se} \fallingdotseq 1/n * \ln(\text{Pa}) \qquad (27)$$

where Pa is the probability that an assumed distribution of n actual values determined by utilizing the assumed probability model $q_i$ is in accord with the true probability distribution $p_i$,

In short, a model for maximizing Se is the most appropriate model to assume the true probability distribution $p_i$. That is, it is possible to provide the most appropriate output data by converting input data.

When the learning must be implemented by utilizing a limited number of items of training example data, it is necessary to select the most appropriate model in which the attraction and repulsion terms $r_+$, $r_-$, the weight parameters, and the threshold values are included. In this case, the true probability distribution $p_i$ is equivalent to a distribution of the difference between the teaching signal data and the output data.

The equation (26) is changed to the following equation.

$$Se = \sum_{i}^{m} \{p_i * \ln(q_i)\} - \sum_{i}^{m} \{p_i * \ln(p_i)\} \qquad ---(28)$$

Because the second term of the equation (28) depends only on the true probability distribution $p_i$, the second term can be omitted.

A logarithmic likelihood l(q) is defined as follows.

$$l(q) = \sum_{i}^{m} \{ni * \ln(q_i)\} \qquad ---(29)$$

In this case, the following equation is approved according to the law of large numbers.

$$n_1 + n_2 + --- + n_m = n$$
$$\lim_{n \to \infty} l(q) = \lim_{n \to \infty} [n * \sum_{i}^{m} \{p_i * \ln(q_i)\}] \qquad ---(30)$$

where $n_i$ is the number of times that an event $\omega_i$ is really occurred.

In short, when a model is selected so as to increase the value of the logarithmic likelihood l(q), the model is appropriate because the statistical entropy Se is increased.

Generally, a model for maximizing the value of the logarithmic likelihood 1(q) is called a model of the maximum likelihood procedure in statistics. The model of the maximum likelihood procedure is well-known.

Based on the above well-known theory, the inventor of the present invention has provided a learning method and learning apparatus as follows.

The event $\omega_i$ is equivalent to the desired output data because it is desired to generate the event $\omega_i$. On the other hand, another true probability distribution $1-p_i$ is defined to estimate the probability that a repulsive event $r_i$ except for the event $\omega_i$ is generated. And, another model $1-q_i$ assuming the true probability distribution $1-p_i$ is defined. Therefore, the repulsive event $r_i$ is equivalent to the undesirable output data because the generation of the repulsive event $r_i$ is not desired.

In this case, the logarithmic likelihood l(q) can be rewritten by adding a term relating to the repulsive event as follows.

$$l(q) = \sum_{i}^{m} \{n_i * \ln(N_i * q_i / N_0)\} + \sum_{i}^{m} [(N_i - n_i) * \ln\{N_i * (1-q_i)/N_0\}]$$
$$---(31)$$

where $N_0$ is the number of observations, $N_i$ is the number of times that the event $\omega_i$ is payed attention, and

$$N_0 = N_1 + N_2 + --- + N_m .$$

Moreover, $N_i - n_i$ is the number of repulsive events $r_i$ which are really observed when the event $\omega_i$ is payed attension.

In short, the model of the maximum likelihood procedure is determined according to information that either the event $\omega_i$ or the repulsive event $r_i$ is observed when attention is paid to the event $\omega_i$.

$N_i/N_0$ in the equation (31) is not related to the determination of the model, so $N_i/N_0$ can be deleted. Therefore, the equation (31) is rewritten as follows.

$$l_E(q) = \sum_{i}^{m} \{n_i * \ln(q_i)\} + \sum_{i}^{m} \{(N_i - n_i) * \ln(1-q_i)\} \qquad ---(32)$$

A new logarithmic likelihood $l_E(q)$ is then extended to a continuous variable model so that the attraction and repulsion terms $r_+$, $r_-$ are determined.

Therefore, the assumed probability distribution $q_i$ is replaced with a density distribution function $g(x|\Theta)$

in the continuous variable model. A variable x representing an event is the difference between the teaching signal data and the output data, and a variable $\Theta$ represents all variable parameters in the model of the maximum likelihood procedure.

Thereafter, a region $S_i$ adjacent to a prescribed variable $x_i$ is defined so that the density distribution function $g(x|\Theta)$ is integrated in the region $S_i$ to represent a distribution function $G(x_i|\Theta)$ in a discrete variable model as follows.

$G(x_i|\Theta) = \int S_i\, g(x|\Theta)\, dx$     (33)

Therefore, the logarithmic likelihood $l_E(q)$ is rewritten by utilizing the integrated distribution function $G(x_i|\Theta)$.

$$l_E(\Theta) = \sum_1^m \{n_i * \ln G(x_i|\Theta)\} + \sum_1^m [(N_i - n_i) * \ln\{1 - G(x_i|\Theta)\}]$$

$$---(34)$$

where it is defined that an attractive event x is generated when an event is generated in the region S adjacent to the variable x, and it is defined that a repulsive event $x_R$ is generated when an event is generated in an external region except for the region S.

Accordingly, the sum of one probability to generate the attractive event x and another probability to generate the repulsive event $x_R$ equals 1.

The shape or the size of the region S is determined according to properties of the teaching signal data.

Generally, it is preferable that the region S be an hypersphere or an hypercube. Moreover, it is not necessary that the region S be closed.

The logarithmic likelihood $l_E(\Theta)$ defined in the equation (34) can be rewritten by considering that the calculation is implemented when the event x, or $x_R$ is generated.

$$l_E(\Theta) = \sum_{p:D} \ln G(x_p|\Theta) + \sum_{p:U} \ln\{1 - G(x_p|\Theta)\} \qquad ---(35)$$

where p is an index for identifying the teaching signal data. $\Sigma_{p:D}$ indicates that the addition is made when the attractive event x is generated, and $\Sigma_{p:U}$ indicates that the addition is made when the repulsive event $x_R$ is generated.

In short, a model for maximizing the logarithmic likelihood $l_E(\Theta)$ defined in the equation (35) is the model of the maximum likelihood procedure. Therefore, the parameters $\Theta$ are adjusted to obtain the maximum likelihood model.

In the present invention, because the loss function r to be minimized by adjusting the control parameters is utilized, the loss function r is defined in the sixth embodiment of the first modification as follows.

$r = - l_E(\Theta)$     (36)

To simplify the description of the sixth embodiment, $N = 1$ is assumed. Moreover, the region S is represented for the p-th set of training example data by the following equation.

$x_p - s/2 \leqq x \leqq x_p + s/2$     (37)

A parameter s is the width of the region S and is determined on condition that the shift of the density distribution function $g(x_p|\Theta)$ in the region S does not exert an influence on the adjustment of the parameters. Therefore, $G(x_p|\Theta) = s*g(x_p|\Theta)$ is effected. Moreover, because $s*g(x_p|\Theta)$ equals a very small value in a practical calculation, $\ln\{1 - s*g(x_p|\Theta)\} = -s*g(x_p|\Theta)$ is effected. Therefore, the logarithmic likelihood $l_E(\Theta)$ defined in the equation (35) can be rewritten as follows.

$$l_E(\Theta) = \sum_{p:D} \{\ln\ g(x_p\,|\Theta)\}\ -\ s*\sum_{p:U} g(x_p\,|\Theta) \qquad\qquad ---(38)$$

Therefore, the loss function r is defined by applying the equations (36), (38) as follows.

$$r = -\sum_{p:D} \{\ln\ g(x_p\,|\Theta)\}\ +\ s*\sum_{p:U} g(x_p\,|\Theta) \qquad\qquad ---(39)$$

where constants not depending on the parameter are omitted in the equations (38), (39).

The density distribution function $g(x|\Theta)$ is assumed to be represented by a normal distribution in which the mean value is zero and the variance is $\sigma^2$. That is, the density distribution function $g(x|\Theta)$ is defined as follows.

$$g(x|\Theta) = \{1/(2\pi)^{1/2}\sigma\}\ \exp\{-x^2/(2\sigma^2)\} \qquad (40)$$

The attraction and the repulsion terms $r_+$, $r_-$ are respectively effected according to the equations (39), (40) as follows.

$$
\begin{aligned}
r_+\ &=\ \Sigma\ r_+{}^p\\
&=\ -\sum_{p:D}\ \{\ln\ g(x_p\,|\Theta)\}\\
&=\ \sum_{p:D}\{\ln\ \sigma\ +\ x_p{}^2/(2\sigma^2)\} \qquad\qquad ---(41)\\
r_-\ &=\ \Sigma\ r_-{}^p\\
&=\ s*\sum_{p:U} g(x_p\,|\Theta)\\
&=\{s/(2\pi)^{1/2}\sigma\}*\sum_{p:U} \exp\{-x_p{}^2/(2\sigma^2)\} \qquad\qquad ---(42)
\end{aligned}
$$

where $x_p = O^p{}_1 - y^p{}_1$ is effected by utilizing both the output data $O^p{}_1$ and the teaching signal data $y^p{}_1$, and the parameter s designating the width of the region S is a parameter for adjusting the ratio of the contribution of the undesirable output data to the contribution of the desired output data.

The attraction and repulsion terms $r_+$, $r_-$ are respectively minimized by adjusting the control parameters $W^{HI}{}_{ji}$, $W^{OH}{}_{kj}$, $\theta^H{}_j$, and $\theta^O{}_k$ and the variance $\sigma^2$ in the learning apparatus shown in Fig. 2.

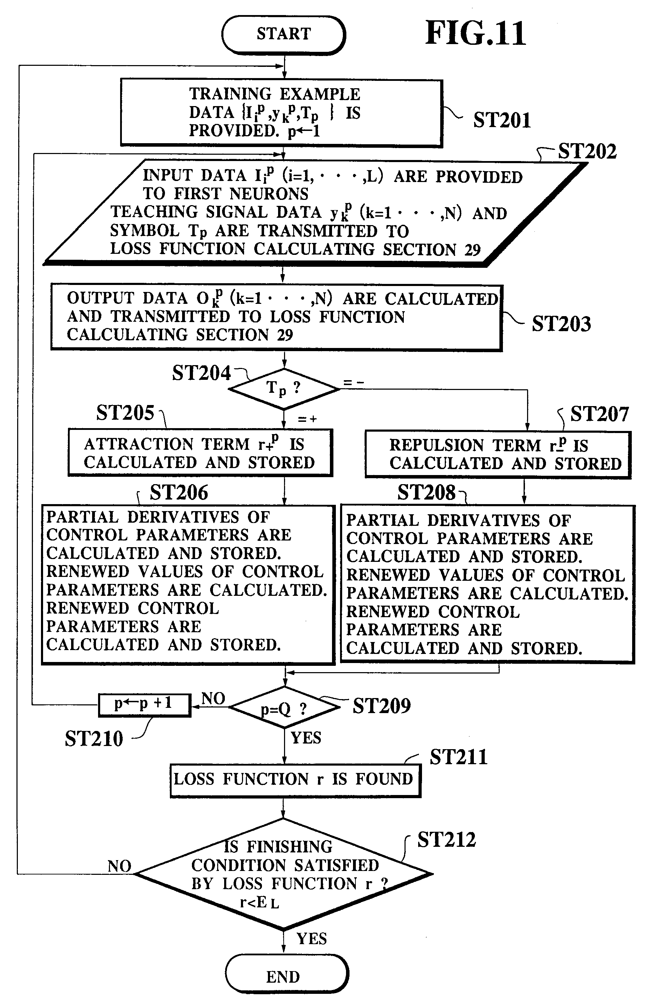

Fig. 11 is a flowchart showing a learning method performed in the learning apparatus shown in Fig. 2 according to the sixth embodiment of the first modification.

As shown in Fig. 11, a parameter p designating a set number of items of training example data $\{l_i^p, y_k^p, Tp\}$ composed of the teaching signal data $y_k^p$, the input data $l_i^p$, and the symbol Tp is set to 1 (p = 1) in a step 201 when the training example data $\{l_i^p, y_k^p, Tp\}$ is provided to the learning apparatus by an operator. Thereafter, L items of input data $l_i^p$ are provided to the first neurons 22, and N items of teaching signal data $y_k^p$ and the symbol Tp are automatically transmitted to the loss function calculation section 29 in a step 202.

Thereafter, N items of output data $O_k^p$ are calculated in the 3-layer feedforward artificial neural network by applying the equations (1) to (5) before the output data $O_k^p$ is transmitted to the loss function calculation section 29 in a step 203.

Thereafter, whether the teaching signal data $y_k^p$ is the desired output data or the undesirable output data is judged by inspecting the symbol Tp in a prescribed control section (not shown) in a step 204. That is, in cases where Tp indicates the symbol +, the teaching signal data $y_k^p$ transmitted to the section 29 is judged to be the desired output data. On the other hand, in cases where Tp indicates the symbol -, the teaching signal data $y_k^p$ transmitted to the section 29 is judged to be the undesirable output data.

In cases where the teaching signal data $y_k^p$ is judged to be the desired output data in the step 204, a value of the attraction term $r_+^p$ is calculated in the attraction term calculating section 30 by utilizing the N items of desired output data according to the equation (41), and the calculated value is stored in a prescribed memory (not shown) of the section 30 in a step 205. Thereafter, the control parameters $W^{HI}_{ji}$, $W^{OH}_{kj}$, $\theta^H_j$, and $\theta^O_k$ utilized in the first and second connection sections 27, 28 are transmitted to the control parameter adjusting section 32 so that partial derivatives $\partial r_+^P/\partial W^{HI}_{ji}$, $\partial r_+^P/\partial W^{OH}_{kj}$, $\partial r_+^P/\partial \theta^H_j$, $\partial r_+^P/\partial \theta^O_k$, and $\partial r_+^P/\partial \sigma$ are calculated by utilizing the value $r_+^P$ stored in the section 30 in the control parameter adjusting section 32. Then, renewed values $\Delta W^{HI}_{ji}$, $\Delta W^{OH}_{kj}$, $\Delta \theta^H_j$, $\Delta \theta^O_k$, and $\Delta \sigma$ are calculated to minimize the attraction term $r_+^P$ as follows.

$$\Delta W^{OH}_{kj}(t+1) = -(1-\alpha)^{\bullet}\eta_*\partial r_+^P/\partial W^{OH}_{kj} + \alpha_*\Delta W^{OH}_{kj}(t) \qquad (43)$$

$$\Delta W^{HI}_{ji}(t+1) = -(1-\alpha)^{\bullet}\eta_*\partial r_+^P/\partial W^{HI}_{ji} + \alpha_*\Delta W^{HI}_{ji}(t) \qquad (44)$$

$$\Delta \theta^H_j(t+1) = -(1-\alpha)^{\bullet}\eta_*\partial r_+^P/\partial \theta^H_j + \alpha_*\Delta \theta^H_j(t) \qquad (45)$$

$$\Delta \theta^O_k(t+1) = -(1-\alpha)^{\bullet}\eta_*\partial r_+^P/\partial \theta^O_k + \alpha_*\Delta \theta^O_k(t) \qquad (46)$$

$$\Delta \sigma(t+1) = -(1-\alpha)^{\bullet}\eta_*\partial r_+^P/\partial \sigma + \alpha_*\Delta \sigma(t) \qquad (47)$$

A method of minimization based on the above equations (43) to (47) is well known as the probabilistic-descent method in a probability theory (Amari, S.,:IEEE Trans. EC-16, 279(1967)).

Thereafter, renewed control parameters $W^{HI}_{ji}$, $W^{OH}_{kj}$, $\theta^H_j$, $\theta^O_k$, and $\sigma$ are calculated by applying the equations (17) to (20) and stored in a memory (not shown) of the section 32 in a step 206. The calculation for finding $\sigma$ is the same as that of the other control parameters.

In cases where the teaching signal data $y_k^P$ is judged to be the undesirable output data in the step 204, a value of the repulsion term $r_-^P$ is calculated in the repulsion term calculating section 31 by utilizing the N items of undesirable output data according to the equation (42), and the calculated value is stored in a prescribed memory (not shown) of the section 31 in a step 207. Thereafter, the control parameters $W^{HI}_{ji}$, $W^{OH}_{kj}$, $\theta^H_j$, and $\theta^O_k$ utilized in the first and second connection sections 27, 28 are transmitted to the control parameter adjusting section 32 so that partial derivatives $\partial r_-^P/\partial W^{HI}_{ji}$, $\partial r_-^P/\partial W^{OH}_{kj}$, $\partial r_-^P/\partial \theta^H_j$, $\partial r_-^P/\partial \theta^O_k$, and $\Delta \sigma$ are calculated by utilizing the values $r_-^P$ stored in the section 31 in the control parameter adjusting section 32. Then, renewed values $\Delta W^{HI}_{ji}$, $\Delta W^{OH}_{kj}$, $\Delta \theta^H_j$, $\Delta \theta^O_k$, and $\Delta \sigma$ are calculated to minimize the attraction term $r_-^P$ as follows.

$$\Delta W^{OH}_{kj}(t+1) = -(1-\alpha)^{\bullet}\eta_*\partial r_-^P/\partial W^{OH}_{kj} + \alpha_*\Delta W^{OH}_{kj}(t) \qquad (48)$$

$$\Delta W^{HI}_{ji}(t+1) = -(1-\alpha)^{\bullet}\eta_*\partial r_-^P/\partial W^{HI}_{ji} + \alpha_*\Delta W^{HI}_{ji}(t) \qquad (49)$$

$$\Delta \theta^H_j(t+1) = -(1-\alpha)^{\bullet}\eta_*\partial r_-^P/\partial \theta^H_j + \alpha_*\Delta \theta^H_j(t) \qquad (50)$$

$$\Delta \theta^O_k(t+1) = -(1-\alpha)^{\bullet}\eta_*\partial r_-^P/\partial \theta^O_k + \alpha_*\Delta \theta^O_k(t) \qquad (51)$$

$$\Delta \sigma(t+1) = -(1-\alpha)^{\bullet}\eta_*\partial r_-^P/\partial \sigma + \alpha_*\Delta \sigma(t) \qquad (52)$$

Thereafter, renewed control parameters $W^{HI}_{ji}$, $W^{OH}_{kj}$, $\theta^H_j$, $\theta^O_k$, and $\Delta \sigma$ are calculated by applying the equations (17) to (20) and stored in a memory (not shown) of the section 32 in a step 208.

Thereafter, whether or not the parameter p equals the number Q of training example data is judged in the prescribed control section in a step 209. In cases where the parameter p is judged not to equal the number Q, the parameter p is incremented by 1 in a step 210 so that the procedures from the step 202 to the step 209 are repeated until the attraction and repulsion terms $r_+^P$, $r_-^P$ are stored throughout all the sets of training example data in the memory of the sections 29, 32.

In cases where the parameter p is judged to equal the number Q in the step 209, the judgement means that all sets of training example data have been calculated to provide Q sets of output data for the section 29. Moreover, the judgement means that the attraction and repulsion terms $r_+^P$, $r_-^P$ are stored throughout all the sets of training example data in the memory of the sections 29, 32. Therefore, the value of the loss function r is found by utilizing the attraction and repulsion terms $r_+^P$, $r_-^P$ stored in the memory of the section 29 according to the equation (8) in a step 211.

Thereafter, whether or not the value of the loss function r satisfies the finishing condition is judged by applying the equation (21) in a step 212. That is, in cases where the value of the loss function r is equal to or greater than $E_L$, the finishing condition is not satisfied. Therefore, the procedures from the step 201 to the step 212 are repeated.

The repetition of the procedures from the step 201 to the step 212 is continued until the finishing condition is satisfied.

In cases where the value of the loss function r is less than $E_L$, the finishing condition is satisfied in the step 212 so that the learning in the learning apparatus is completed. That is, the control parameters such as the weight parameters, the threshold values, and the variances have been adjusted to the most appropriate values.

Accordingly, after the control parameters are adjusted to the most appropriate values, the operator can accomplish the most appropriate diagnosis, the most appropriate robot control, or the like without utilizing the section 29.

Moreover, the learning can be smoothly implemented in the same manner as in the first embodiment of the first modification.

Because the variance $\sigma^2$ is adjusted, the application of the learning method utilizing the undesirable output data can be enlarged.

In cases where N is larger than 1, the density distribution function $g(x|\theta)$ is represented by an N-dimensional normal distribution.

In the sixth embodiment of the first modification, the density distribution function $g(x|\theta)$ is defined according to the equation (40). However, it is preferable that the function $g(x|\theta)$ utilized in early iterative calculations be halfway replaced with a desired function. The desired function is detemined by referring the actual difference between the teaching signal data and the output data which is obtained by iteratively calculating the loss function.

Moreover, N items of teaching signal data corresponding to a p-th set of input data in the N dimensions are either N items of desired output data or N items of undesirable output data in the sixth embodiment. However, it is preferable that both the desired output data and the undesirable output data be intermingled in the N items of teaching signal data.

Specifically, in cases where an N-dimensional space is divided between an $L_A$ dimensional space $S_A$ and an $L_B$ dimensional space $S_B$, either $L_A$ items of desired or undesirable output data are provided in the space $S_A$ andeither $L_B$ items of desired or undesirable output data are provided in the space $S_B$.

Moreover, the density distribution function $g^A(x^A|\theta^A)$ is assumed in the space $S_A$, and the density distribution function $g^B(x^B|\theta^B)$ is assumed in the space $S_B$. And, the integrated distribution function $G^A(x_p^A|\theta^A)$ is assumed in the space $S_A$, and the integrated distribution function $G^B(x_p^B|\theta^B)$ is assumed in space $S_B$.

In this case, the loss function r is effected by applying the equations (35), (36) as follows.

$$
\begin{aligned}
r = & -\sum_{p:DD} \ln\{G^A(x_p{}^A|\theta^A) * G^B(x_p{}^B|\theta^B)\} \\
& -\sum_{p:DU} \ln[G^A(x_p{}^A|\theta^A) * \{1-G^B(x_p{}^B|\theta^B)\}] \\
& -\sum_{p:UD} \ln[\{1-G^A(x_p{}^A|\theta^A)\} * G^B(x_p{}^B|\theta^B)] \\
& -\sum_{p:UU} \ln[\{1-G^A(x_p{}^A|\theta^A)\} * \{1-G^B(x_p{}^B|\theta^B)\}] \quad ---(53)
\end{aligned}
$$

where p:DD indicates that the desired output data is provided in both the spaces $S_A$, $S_B$, p:DU indicates that the desired output data is provided in the space $S_A$ and the undesirable output data is provided in the space $S_B$, p:UD indicates that the undesirable output data is provided in the space $S_A$ and the desired output data is provided in the space $S_B$, and p:UU indicates that the undesirable output data is provided in both the spaces $S_A$, $S_B$.

The loss function r defined by the equation (53) is rewritten by applying the equation (39) as follows.

$$
\begin{aligned}
r = & -\sum_{p:D} \ln\{s_A * g^A(x^A|\theta^A) \quad -\sum_{p:D}\ln\{s_B * g^B(x^B|\theta^B)\} \\
& + s_A * \sum_{p:U} g^B(x^B|\theta^B) + s_B * \sum_{p:U} g^A(x^A|\theta^A) \\
= & \ r_+{}^A + r_+{}^B + r_-{}^A + r_-{}^B \quad ---(54)
\end{aligned}
$$

The parameter Θ in the sixth embodiment represents the weight parameters $W^{HI}_{ji}$, $W^{OH}_{kj}$, the threshold values $\theta^H_j, \theta^O_k$, and the variance $\sigma^2$. Therefore, the variance $\sigma^2$ is, for example, slightly renewed as follows.

$$\Delta\sigma^A(t+1) = -(1-\alpha)^\bullet\eta_*\partial r_+^A/\partial\sigma + \alpha_*\Delta\sigma^A(t) \qquad (55)$$

$$\Delta\sigma^B(t+1) = -(1-\alpha)^\bullet\eta_*\partial r_+^B/\partial\sigma + \alpha_*\Delta\sigma^B(t) \qquad (56)$$

$$\Delta\sigma^A(t+1) = -(1-\alpha)^\bullet\eta_*\partial r_-^A/\partial\sigma + \alpha_*\Delta\sigma^A(t) \qquad (57)$$

$$\Delta\sigma^B(t+1) = -(1-\alpha)^\bullet\eta_*\partial r_-^B/\partial\sigma + \alpha_*\Delta\sigma^B(t) \qquad (58)$$

Accordingly, the learning can be implemented by minimizing the loss function r regardless of whether the desired output data and the undesirable output data are intermingled in the same set of teaching signal data.

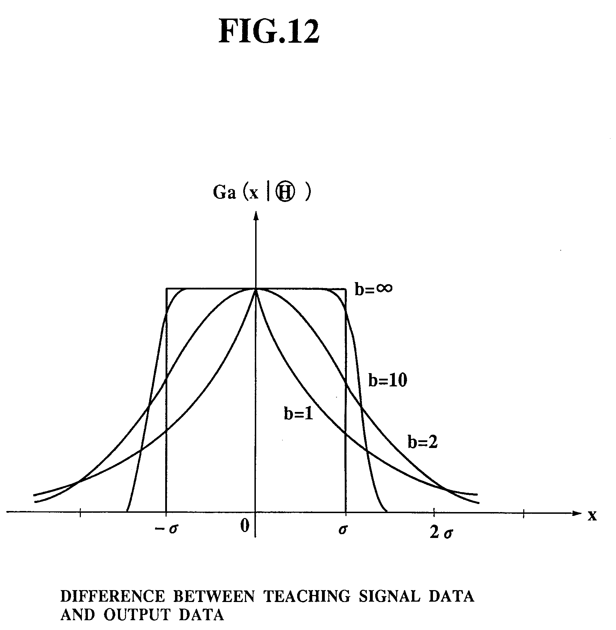

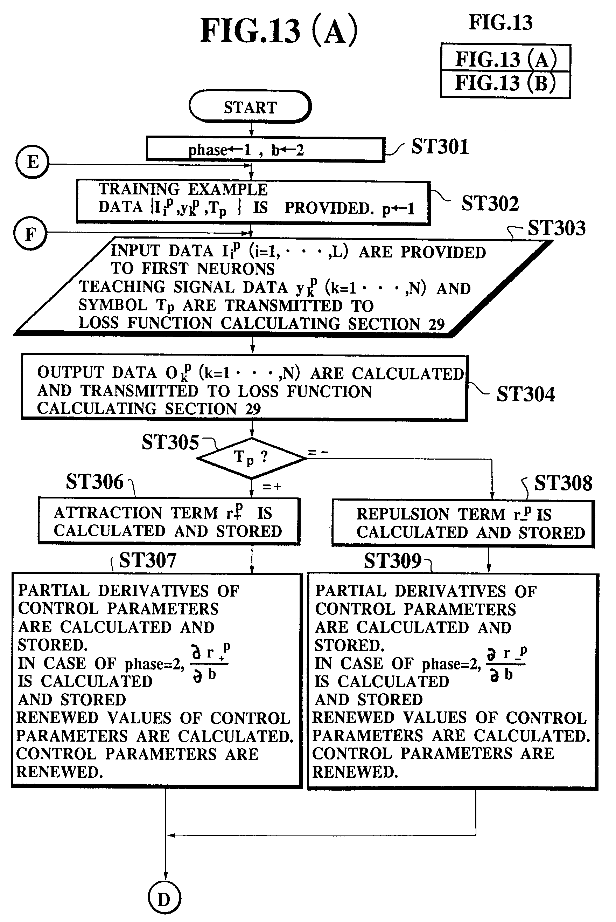

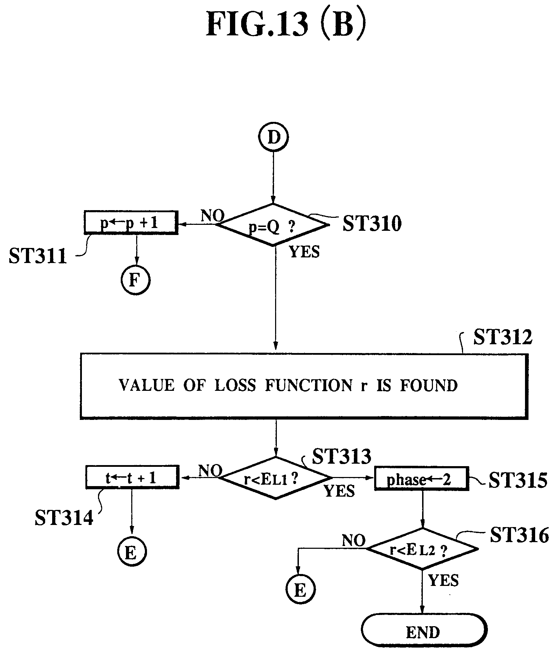

Next, a seventh embodiment of the first modification is described with reference to Figs. 12, 13.

In the seventh embodiment, the probability density function $g(x|\Theta)$ defined by the equation (40) is replaced with a generalized Gaussian distribution function $Ga(x|\Theta)$.

That is, the function $Ga(x|\Theta)$ is defined as follows.

$$Ga(x|\Theta) = \{2_*b^{1/b}{}_*\sigma_*\Gamma(1/b + 1)\}^{-1}{}_*\exp\{-|x|^b/(b_*\sigma^b)\} \qquad (59)$$

where $\Gamma()$ is a Gamma function, $\sigma$ and b are parameters.

The parameter b is added to the control parameter Θ as compared with the sixth embodiment.

Fig. 12 is a graphic view of the generalized Gaussian distribution function $Ga(x|\Theta)$.

As shown in Fig. 12, generalized Gaussian distributions are shown in cases of $b=1$, $b=2$, $b=10$, and $b=\infty$.

In cases where the parameter b equals 2 ($b=2$), the function $Ga(x|\Theta)$ is in accord with the function $g(x|\Theta)$ defined by the equation (40). In other words, in cases where the distribution of the difference x between the teaching signal data and the output data deviates from the normal distribution $g(x|\Theta)$, the learning can be implemented by utilizing the function $Ga(x|\Theta)$ in the seventh embodiment.

A loss function r according to the seventh embodiment is defined by the following equation (60) in the same manner as in the sixth embodiment in which the loss function r is defined by the equation (39).

$$r = -\sum_{p:D}\{\ln Ga(x_p|\Theta)\} + s_*\sum_{p:U} Ga(x_p|\Theta) \qquad ---(60)$$

The loss function r defined by the equation (60) is rewritten by substituting the function $Ga(x|\Theta)$ defined by the equation (59) for the equation (60) after $x_p = O_k^p - y_k^p$ is substituted in the equation (59).

$$r = r_+ + r_- \qquad (61)$$

$$r_+ = - \sum_{p:D} \{\ln Ga(x_p|\Theta)\}$$

$$= \sum_{p:D} r_+{}^p$$

$$= \sum_{p:D} \{\ln \sigma + (1/b)*\ln b + \ln \Gamma(1/b + 1) + e_p/\sigma^b\} \quad ---(62)$$

$$r_- = s*\sum_{p:U} Ga(x_p|\Theta)$$

$$= \sum_{p:U} r_-{}^p$$

$$= \sum_{p:U} [s/\{2*b^{1/b}*\sigma*\Gamma(1/b + 1)\}*\exp(-e_p/\sigma^b) \quad ---(63)$$

$$e_p = (1/b)*\sum_k (O_k{}^p - y_k{}^p)^b \quad ---(64)$$

In cases where N is larger than 1, the distribution function Ga(x|Θ) is represented by an N-dimensional generalized Gaussian distribution distribution.

The learning is implemented by renewing the control parameter Θ for each set of training example data.

Therefore, a renewed value of the control parameter Θ is found in the same manner as in the sixth embodiment as follows.

In cases where the teaching signal data $y_1{}^p$ is the desired output data,

$$\Delta\Theta(t+1) = -(1-\alpha)*\eta*\partial r_+{}^p/\partial\Theta + \alpha*\Delta\Theta(t) \quad (65)$$

where the control parameter Θ represents the weight parameters $W^{HI}{}_{ji}, W^{OH}{}_{kj}$, the threshold values $\theta^H{}_j, \theta^O{}_k$, and the parameters $\sigma$, b.

In cases where the teaching signal data $y_1{}^p$ is the undesirable output data,

$$\Delta\Theta(t+1) = -(1-\alpha)*\eta*\partial r_-{}^p/\partial\Theta + \alpha*\Delta\Theta(t) \quad (66)$$

Therefore, the renewed control parameter Θ is found as follows.

$$\Theta(t+1) = \Theta(t) + \Delta\Theta(t+1) \quad (67)$$

The learning is implemented by being divided into two phases. The parameter b is set at 2 (b = 2) in a first phase, so that the learning in the first phase is continued until the value of the loss function r decreases to less than a certain small value $E_{L1}$. After the first phase is accomplished, the control parameter Θ including the parameter b is re-adjusted in a second phase. The learning in the second phase is continued until the value of the loss function r decreases to less than a certain small value $E_{L2}$.

The above learning for renewing the control parameter Θ and for minimizing the loss function r is implemented by utilizing the probabilistic-descent method in the same manner as in the sixth embodiment.

Fig. 13 is a flowchart showing a learning method performed in the learning apparatus shown in Fig. 2 according to the seventh embodiment of the first modification. The learning method is implemented in case of N = 1 in the seventh embodiment.

As shown in Fig. 13, the first phase is set and the parameter b is set to 2 in a step 301. Therefore, phase = 1 and b = 2 are effected. Thereafter, a parameter p designating a set number of training example data $\{I_i{}^p, y_1{}^p, Tp\}$ composed of the teaching signal data $y_1{}^p$, the input data $I_i{}^p$, and the symbol Tp is set to 1 (p = 1) in a step 302 when the training example data $\{I_i{}^p, y_1{}^p, Tp\}$ is provided to the learning apparatus by an operator. Thereafter, L items of input data $I_i{}^p$, are provided to the first neurons 22, and the teaching signal data $y_1{}^p$ and the symbol Tp are automatically transmitted to the loss function calculating section 29 in a step 303.

Thereafter, output data $O_1{}^p$ is calculated in the 3-layer feedforward artificial neural network by applying the equations (1) to (5) before the output data $O_1{}^p$ is transmitted to the loss function calculation section 29 in a step 304.

Thereafter, whether the teaching signal data $y_1{}^p$ is the desired output data or the undesirable output data is judged by inspecting the symbol Tp in a prescribed control section (not shown) in a step 305. That is, in cases where Tp indicates the symbol +, the teaching signal data $y_1{}^p$ transmitted to the section 29 is judged to be the desired output data. On the other hand, in cases where Tp indicates the symbol -, the teaching signal data $y_1{}^p$ transmitted to the section 29 is judged to be the undesirable output data.

In cases where the teaching signal data $y_1{}^p$ is judged to be the desired output data in the step 305, a value of the attraction term $r_+{}^p$ is calculated in the attraction term calculating section 30 by utilizing the desired output data according to the equations (62), (64) and the calculated value is stored in a prescribed memory (not shown) of the section 30 in a step 306. Thereafter, the control parameters $W^{HI}{}_{ji}$, $W^{OH}{}_{kj}$, $\theta^H{}_j$, $\theta^O{}_k$, and $\sigma$ utilized in the first and second connection sections 27, 28 are transmitted to the control parameter adjusting section 32 so that partial derivatives $\partial r_+{}^p/\partial W^{HI}{}_{ji}$, $\partial r_+{}^p/\partial W^{OH}{}_{kj}$, $\partial r_+{}^p/\partial \theta^H{}_j$, $\partial r_+{}^p/\partial \theta^O{}_k$, and $\partial r_+{}^p/\partial \sigma$ are calculated by utilizing the value $r_+{}^p$ stored in the section 30 in the control parameter adjusting section 32 and are stored in a memory (not shown) of the section 32 in a step 307. In addition, renewed values $\Delta W^{HI}{}_{ji}(t)$, $\Delta W^{OH}{}_{kj}(t)$ $\Delta \theta^H{}_j(t)$, $\Delta \theta^O{}_k(t)$ and $\Delta \sigma(t)$ are calculated by applying the equation (65) so that the control parameters $\Theta$ {$W^{HI}{}_{ji}(t)$, $W^{OH}{}_{kj}(t)$ $\theta^H{}_j(t)$, $\theta^O{}_k(t)$ and $\sigma(t)$) are slightly renewed by applying the equation (67). That is, renewed control parameters $W^{HI}{}_{ji}(t+1)$, $W^{OH}{}_{kj}(t+1)$, $\theta^H{}_j(t+1)$, $\theta^O{}_k(t+1)$, and $\sigma(t+1)$ are determined in the step 307.

In cases where the teaching signal data $y_1{}^p$ is judged to be the undesirable output data in the step 305, a value of the repulsion term $r_-{}^p$ is calculated in the repulsion term calculating section 31 by utilizing the undesirable output data according to the equations (63), (64), and the calculated value is stored in a prescribed memory (not shown) of the section 31 in a step 308. Thereafter, the control parameters $W^{HI}{}_{ji}$, $W^{OH}{}_{kj}$, $\theta^H{}_j$, $\theta^O{}_k$, and $\sigma$ utilized in the first and second connection sections 27, 28 are transmitted to the control parameter adjusting section 32 so that partial derivatives $\partial r_-{}^p/\partial W^{HI}{}_{ji}$, $\partial r_-{}^p/\partial W^{OH}{}_{kj}$, $\partial r_-{}^p/\partial \theta^H{}_j$, $\partial r_-{}^p/\partial \theta^O{}_k$, $\partial r_-{}^p/\partial \sigma$ are calculated by utilizing the values $r_-{}^p$ stored in the section 31 in the control parameter adjusting section 32 and are stored in the memory of the section 32 in a step 309. In addition, renewed values $\Delta W^{HI}{}_{ji}(t)$, $\Delta W^{OH}{}_{kj}(t)$ $\Delta \theta^H{}_j(t)$, $\Delta \theta^O{}_k(t)$ and $\Delta \sigma(t)$ are calculated by applying the equation (66) so that the control parameters $\Theta$ {$W^{HI}{}_{ji}(t)$, $W^{OH}{}_{kj}(t)$ $\theta^H{}_j(t)$, $\theta^O{}_k(t)$ and $\sigma(t)$} are slightly renewed by applying the equation (67). That is, renewed control parameters $W^{HI}{}_{ji}(t+1)$, $W^{OH}{}_{kj}(t+1)$, $\theta^H{}_j(t+1)$, $\theta^O{}_k(t+1)$, and $\sigma(t+1)$ are determined in the step 309.

Thereafter, whether or not the parameter p equals the number Q of items of training example data is judged in the prescribed control section in a step 310. In cases where the parameter p is judged not to equal the number Q, the parameter p is incremented by 1 in a step 311 so that the procedures from the step 303 to the step 310 are repeated until the attraction and repulsion terms $r_+{}^p$, $r_-{}^p$ and the partial derivatives $\partial r_+{}^p/\partial W^{HI}{}_{ji}$, $\partial r_+{}^p/\partial W^{OH}{}_{kj}$, $\partial r_+{}^p/\partial \theta^H{}_j$, $\partial r_+{}^p/\partial \theta^O{}_k$, $\partial r_-{}^p/\partial W^{HI}{}_{ji}$, $\partial r_-{}^p/\partial W^{OH}{}_{kj}$, $\partial r_-{}^p/\partial \theta^H{}_j$, $\partial r_-{}^p/\partial \theta^O{}_k$, $\partial r_+{}^p/\partial \sigma$, and $\partial r_-{}^p/\partial \sigma$ are stored throughout all the sets of training example data in the memory of the sections 29, 32. In addition, the renewed values of the control parameres and the renewed control parameters are stored throughout all the sets of training example data.

In cases where the parameter p is judged to equal the number Q in the step 310, the judgement means that all sets of training example data have been calculated to provide Q sets of output data to the section 29. Moreover, the judgement means that the attraction and repulsion terms $r_+{}^p$, $r_-{}^p$ and the partial derivatives $\partial r_+{}^p/\partial W^{HI}{}_{ji}$, $\partial r_+{}^p/\partial W^{OH}{}_{kj}$, $\partial r_+{}^p/\partial \theta^H{}_j$, $\partial r_+{}^p/\partial \theta^O{}_k$, $\partial r_-{}^p/\partial W^{HI}{}_{ji}$, $\partial r_-{}^p/\partial W^{OH}{}_{kj}$, $\partial r_-{}^p/\partial \theta^H{}_j$, $\partial r_-{}^p/\partial \theta^O{}_k$ $\partial r_+{}^p/\partial \sigma$, and $\partial r_-{}^p/\partial \sigma$ are stored throughtout all the sets of training example data in the memory of the sections 29, 32. In addition, the judgement means that the renewed values of the control parameres and the renewed control parameters are stored throughout all the sets of training example data. Moreover, the value of the loss function r is then found by utilizing the attraction and repulsion terms $r_+{}^p$, $r_-{}^p$ stored in the memory of the section 29 according to the equations (61) to (64) in a step 312.

Thereafter, whether or not the value of the loss function r satisfies a first finishing condition is judged in a step 313. That is, in cases where the value of the loss function r is equal to or greater than $E_{L1}$, the first finishing condition is not satisfied, so the iteration number t is incremented by 1 in a step 314. Thereafter, the procedures from the step 302 to the step 313 are iterated while utilizing the renewed control parameters $W^{HI}{}_{ji}(t+1)$, $W^{OH}{}_{kj}(t+1)$, $\theta^H{}_j(t+1)$, $\theta^O{}_k(t+1)$, and $\sigma(t+1)$ in place of the control parameters $W^{HI}{}_{ji}(t)$, $W^{OH}{}_{kj}(t)$, $\theta^H{}_j(t)$, $\theta^O{}_k(t)$, and $\sigma(t)$.

The iteration of the procedures from the step 302 to the step 314 is continued until the first finishing condition is satisfied.

In cases where the value of the loss function r is less than $E_{L1}$, the first finishing condition is satisfied in the step 313 so that the second phase is set in a step 315. That is, phase = 2 is effected and the parameter b is handled as one of the control parameters. After the second phase is set, whether or not the value of the loss function r satisfies a second finishing condition is judged in a step 316. That is, in cases where the value of the loss function r is equal to or greater than $E_{L2}$, the second finishing condition is not satisfied so that the procedures from the step 302 to the step 316 are iterated until the second finishing condition is satisfied. In this case, the partial derivatives of the control parameters including $\partial r_+{}^P/\partial b$, $\partial r_-{}^P/\partial b$ are renewed and stored in the steps 307, 309.

When the second finishing condition is satisfied in the step 316, the learning in the learning apparatus is completed. That is, the control parameters are adjusted to the most appropriate values.

In cases where the learning is implemented by utilizing the normal distribution $g(x_p|\Theta)$, as well known, the learning can be implemented at highest speed by applying the random fall method in a probability theory.

However, in cases where the control parameters $\sigma$, b must be adjusted, the iterative calculations becomes complicated, and the calculation time is largely increased. Therefore, the learning in the seventh embodiment is divided into two phased. That is, the parameter b is fixed so that the calculation time can be largely decreased in the first phase. And, because the control parameters $W^{HI}{}_{ji}$, $W^{OH}{}_{kj}$, $\theta^H{}_j$, $\theta^O{}_k$, and $\sigma$ are almost adjusted to the most appropriate values, the learning in the second phase is rapidly converged so that the second finishing condition can be rapidly satisfied.

Accordingly, after the control parameters are adjusted to the most appropriate values, the operator can accomplish the most appropriate diagnosis, the most appropriate robot control, or the like without utilizing the section 29.

Moreover, the learning in the seventh embodiment is generalized as compared with the sixth embodiment.

The second phase is continued in the seventh embodiment until the second finishing condition is satisfied. However it is preferable that the procedures from the step 302 to the step 315 be repeated several times before the procedures from the step 302 to the step 315 be repeated by utilizing the fixed parameter b until the second finishing condition is satisfied.

Next, a learning method and learning apparatus according to a second modification of the present invention is described.

In the second modification, the teaching signal data provided to a learning apparatus is the desired output data, the undesirable output, or boundary specifying data. The boundary specifying data specifies a boundary surface which divide a desired region from an undesired region in N-dimensional space. Output data provided from the learning apparatus is expected to be positioned within the desired region and is expected not to be positioned within the undesired region.

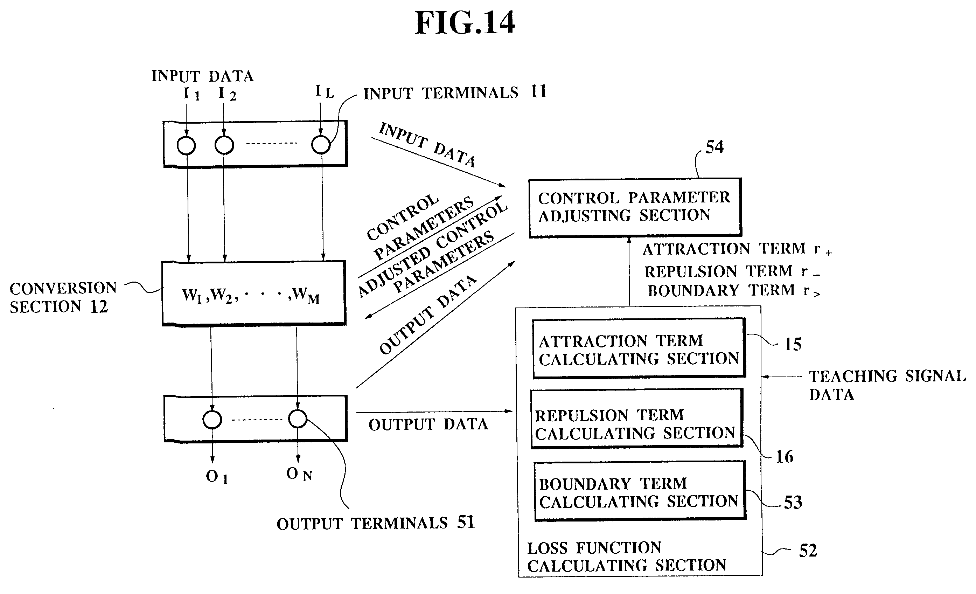

Fig. 14 is a block diagram of a learning apparatus according to the second modification of the present invention, the apparatus being conceptually shown.

As shown in Fig. 14, the learning apparatus according to the second modification, consists of;

the input terminal 11;

the conversion section 12;

a plurality of output terminals 51 for re-converting the intermediate data converted in the conversion section 12 according to a prescribed calculation and for providing N items of output data $O_k$ ($k = 1$ to N) which represent an N-dimensional output vector indicating output coordinates;

a loss function calculating section 52 for calculating a loss function by utilizing the teaching signal data which is provided by an operator;

the attraction term calculating section 15 included in the section 52;

the repulsion term calculating section 16 included in the section 52;

a boundary term calculating section 53 included in the section 52 for calculating a boundary term $r_>$ of the loss function by utilizing both the output data $O_k$ provided from the output terminals 51 and the boundary specifying data, the value of the boundary specifying data being decreased when the output coordinates indicated by the N items of output data $O_k$ are shifted towards the desired region from the undesired region divided by the boundary surface which is specified by the boundary specifying data; and

a control parameter adjusting section 54 for adjusting the control parameters Wj utilized in the conversion section 12 to decrease values of the attraction, repulsion, and boundary terms $r_+$, $r_-$, and $r_>$ calculated in the attraction, repulsion, and boundary terms calculating section 15, 16, 53 by utilizing the teaching signal data, the input data, the output data, and the control parameters.

The output data $O_k$ is preferably close to the desired output data and should not be close to the undesirable output data in the same manner as in the first modification. Moreover, it is desired that the output coordinates indicated by the N items of output data $O_k$ be shifted from the undesired region to the desired region.

In the above configuration, in cases where the desired output data or the undesirable output is provided to the learning apparatus, the output data is provided to the attraction or repulsion term calculating section 15, or 16 so that the value of the attraction or repulsion term $r_+$, or $r_-$ is calculated in the same manner as in the first modification. Thereafter, the control parameters are adjusted so as to decrease the value of the attraction or repulsion term $r_+$, or $r_-$ in the control parameter adjusting section 54 in the same manner as in the first modification.

On the other hand, in cases where the boundary specifying data is provided to the learning apparatus, the output vector represented by the N items of output data $O_k$ is provided to the boundary term calculating section 53. The value of the boundary term $r_>$ is then calculated by utilizing both the output vector and the boundary specifying data. Thereafter, the control parameters are adjusted to decrease the value of the boundary term $r_>$ in the control parameter adjusting section 54.

Accordingly, in cases where the boundary specifying data is provided to the learning apparatus, the output vector can be positioned within the desired region because the value of the boundary term $r_>$ is decreased.

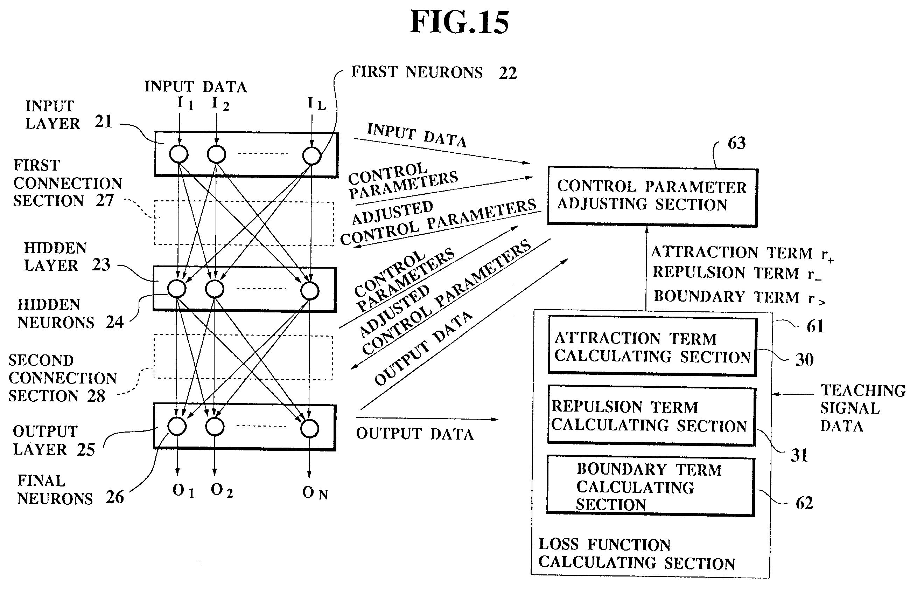

Next, a learning apparatus and a learning method for performing the learning of the learning apparatus according to a first embodiment of the second modification are described with reference to Figs. 15 to 19.

Fig. 15 is a block diagram of a learning apparatus for learning by utilizing the back-propagation learning method in a 3-layer feedforward neural network according to the first embodiment of the second modification.

As shown in Fig. 15, the learning apparatus for learning by utilizing training example data composed of both teaching signal data $(y_k, a_k)$ $(k = 1$ to $N)$ and input data $I_i$ $(i = 1$ to $L)$ which is provided by an operator in a 3-layer feedforward neural network, consists of:

the input layer 21 provided with the first neurons 22;

the hidden layer 23 provided with the hidden neurons 24;

the output layer 25 provided with the final neurons 26;

the first connection section 27;

the second connection section 28;

a loss function calculating section 61 for calculating a value of a loss function relating to the teaching signal data $(y_k, a_k)$ by utilizing the output data $O_k$ provided from k-th final neurons 26 and the teaching signal data corresponding to the output data $O_k$, the teaching signal data $(y_k, a_k)$ being desired output data, undesirable output data, or boundary specifying data;

the attraction term calculating section 30 included in the section 61;

the repulsion term calculating section 31 included in the section 61;

a boundary term calculating section 62 included in the section 61 for calculating the value of a boundary term $r_>$ of the loss function by utilizing both the output data $O_k$ and the boundary specifying data $(y_k, a_k)$, the value of the boundary term $r_>$ being decreased when the output data $O_k$ is shifted towards a desired region from an undesired region which are divided by a boundary surface designated by the boundary specifying data; and

a control parameter adjusting section 63 for adjusting control parameters such as the weight parameters $W^{HI}_{ji}$, $W^{OH}_{kj}$ utilized in the first and second connection sections 27, 28 and the threshold values $\theta^H_j, \theta^O_k$ to decrease values of the terms $r_+$, $r_-$, and $r_>$ calculated in the section 30, 31, and 62 by utilizing the teaching signal data $(y_k, a_k)$, the input data $I_i$, the output data $O_k$, the weight parameters $W^{HI}_{ji}$, $W^{OH}_{kj}$, and the threshold values $\theta^H_j, \theta^O_k$.

The 3-layer feedforward neural network is composed of the input layer 21, the hidden layer 23, and the output layer 25.

Relational equations for finding the output data $O_k$ by utilizing the input data $I_i$ are defined in the equations (1) to (5).

In the second modification, $y_k$ included in each item of teaching signal data designates a meaningful physical quantity such as temperature or pressure in cases where the teaching signal data is either the desired output data or the undesirable output data. Therefore, $a_k$ included in each item of teaching signal data is ignored in cases where the teaching signal data is either the desired output data or the undesirable output data.

Moreover, the attraction term $r_+$ relating to the desired output data is defined by the equation (6) and the repulsion term $r_-$ of the loss function is defined by the equation (7) in the same manner as in the first embodiment of the first modification.

On the other hand, in cases where the teaching signal data is the boundary specifying data, N items of output data $O_k$ represent an output vector $\vec{O}$ in an N-dimensional space. That is,

$$\vec{O} = (O_1, O_2, ---, O_N)$$

27

is effected. Moreover, N items of boundary specifying data $y_k$, $a_k$ represent boundary vectors $\vec{y}$, $\vec{v}$ in the N-dimensional space. That is,

$$\vec{y} = (y_1, y_2, ---, y_N) \text{ and } \vec{v} = (a_1, a_2, ---, a_N)$$

are effected. The boundary surface in the N-dimensional space is defined by utilizing the boundary vectors $\vec{y}$, $\vec{v}$.

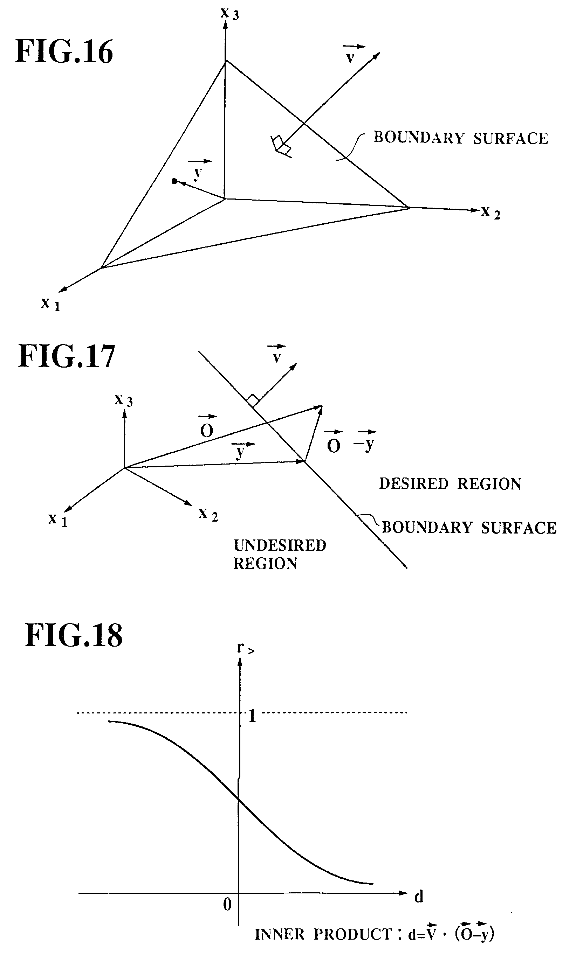

Fig. 16 shows the boundary surface specified by the boundary vectors $\vec{y}$, $\vec{v}$ in a three-dimensional space.

As shown in Fig. 16, the boundary vector $\vec{v}$ gives a normal vector of the boundary surface to specify a plane direction of the boundary surface. Moreover, the direction of the boundary vector $\vec{v}$ is directed towards the desired region from the undesired region. The boundary surface specified the plane direction by the boundary vector $\vec{v}$ is given a passing point by the boundary vector $\vec{y}$. That is, the boundary surface passes the passing point.

The repulsion term $r_>$ relating to the boundary specifying data is defined by utilizing an inner product

$$d = \vec{v} * (\vec{O} - \vec{y})$$

determined by both the output vector $\vec{O}$ and the boundary vectors $\vec{y}$, $\vec{v}$ as follows.

$$r_> = 1/\{1 + \exp(d)\} \qquad (68)$$

Fig. 17 shows the relation among the vectors $\vec{O}$, $\vec{y}$, and $\vec{v}$ in the 3 dimensional space.

As shown in Fig. 17, the value of the inner product d is equivalent to the distance between the boundary surface and the output coordinates designated by the output vector $\vec{O}$ on the assumption that the boundary vector $\vec{v}$ is a unit vector. Moreover, the distance is a negative value when the output coordinates are positioned in the undesired region, and a positive value when the output coordinates are positioned in the desired region.

Therefore, the value of the inner product d is increased when the output vector $\vec{O}$ is shifted in the direction specified by the boundary vector $\vec{v}$.

Fig. 18 is a graphic view of the relation between the boundary term $r_>$ and the value of the inner product d.

As shown in Fig. 18, the value of the boundary term $r_>$ is decreased when the output vector $\vec{O}$ is shifted to the desired region because the value of the inner product d is increased.

In the above configuration, Q sets of training example data composed of both the input data and the teaching signal data are provided to the learning apparatus in turn. Therefore, parameters, terms, data, and the like are indicated by attaching a letter p as follows.

$I_i{}^p, O_k{}^p, r_+{}^p, r_-{}^p, r_>{}^p, y_k{}^p, a_k{}^p, d^p$

For example, the boundary term $r_>{}^p$ relating to the p-th boundary specifying data is indicated as follows.

$$r_>p = \gamma_> * 1/\{ + \exp(d^p)\} \qquad (69)$$

where $\gamma_>$ is a positive parameter for adjusting the influence of the boundary specifying data on the output vector

$$\vec{O^p} = (O_1{}^p, O_2{}^p, ---, O_N{}^p).$$

The boundary term $r_>$ relating to Q sets of teaching signal data is defined as follows.

$$r_> = \sum_{p:B} r_>^p$$

$$= \gamma_> * \sum_{p:B} 1/\{1 + \exp(d^p)\} \qquad ---(70)$$

where $\sum_{p:B}$ indicates the sum of all boundary terms $r_>^p$.

Moreover, the teaching signal data is distinguished by utilizing a symbol Tp (p = 1 to Q). That is, the p-th set of teaching signal data $y_k^p$, $a_k^p$ is the desired output data when Tp indicates a symbol +, the p-th set of teaching signal data $y_k^p$, $a_k^p$ is the undesirable output when Tp indicates a symbol -, and the p-th set of teaching signal data $y_k^p$, $a_k^p$ is the boundary specifying data when Tp indicates a symbol >.

When the p-th set of training example data is provided to the learning apparatus, k items of output data $O_k^p$ are obtained by applying the equations (1) to (5) so that the value of the term $r_+^p$, $r_-^p$, or $r_>^p$ is calculated by applying the equation (6),(7), or (69). Therefore, the loss function r relating to Q sets of teaching signal data is defined as follows.

$$r = (1/Q) * \sum_{p} r_{Tp}^p$$

$$= (1/Q) * (r_+ + r_- + r_>)$$

$$= (1/Q) * (\sum_{p:D} r_+^p + \sum_{p:U} r_-^p + \sum_{p:B} r_>^p) \qquad ---(71)$$

Therefore, because the values of the terms $r_+$, $r_-$, and $r_>$ are respectively decreased to adjust the parameters and the threshold values, the parameters and the threshold values can be adjusted to the most appropriate values by decreasing only the total loss function r regardless of whether the desired output data, the undesirable output data, and the boundary specifying data are intermingled in the Q set of training example data.

Generally, the contributory ratio among the desired output data, the undesirable output, and the boundary specifying data is shifted according to the properties of the training example data. Therefore, the contribution ratio of the undesirable output data to the other learning data is adjusted by the parameter $\gamma_-$ in the same manner as in the first embodiment of the first modification. Moreover, the contribution ratio of the boundary specifying data to the other training example data is adjusted by the parameter $\gamma_>$. That is, when the parameter $\gamma_>$ is increased, the boundary term $r_>$ is increased so that the influence of the boundary specifying data is increased.

An absolute value of the boundary vector $\vec{v}$ is considered as a parameter for adjusting the influence of the boundary specifying data on the output data.

Next, the feature of the boundary term $r_>$ relating to the boundary specifying data is described.

As shown in Fig. 18, because a partial derivative of the boundary term $r_>$ with respect to the inner product $d^p$ gradually approaches the zero value as the distance between the boundary surface and the output vector becomes larger in the undesired region, a large number of iterated calculations are required to bring the output data within the desired region when the output vector is deeply positioned within the undesired region.

However, because the value of the boundary term $r_>$ is gradually shifted, the learning of the learning apparatus can be stably implemented. That is, the output vector is reliably shifted within the desired region. In addition, because the shape of the boundary term $r_>$ is simple, it is easy to analytically handle the boundary term $r_>$.

Moreover, because the value of the boundary term $r_>$ is exponentially decreased, the influence of the boundary specifying data is exerted on the limited output vectors which are positioned close to the boundary surface. Therefore, the output vectors which have already been shifted within the desired region are not influenced so much so that the iterative calculations are implemented for only the other output vectors which are still positioned within the undesired region. Accordingly, the iterative calculations are guaranteed to be stably implemented.

Next, a learning method for implementing the learning of the learning apparatus to adjust the weight parameters $W^{HI}_{ji}$, $W^{OH}_{kj}$, and the threshold values $\theta^H_j, \theta^O_k$ to the most appropriate values by utilizing the terms $r_+^p$, $r_-^p$, and $r_>^p$ in cases where Q sets of training example data are provided to the learning apparatus is described.

In the learning method according to the first embodiment of the second modification, partial derivatives $\partial r/\partial W^{HI}_{ji}$, $\partial r/\partial W^{OH}_{kj}$, $\partial r/\partial \theta^H_j$, and $\partial r/\partial \theta^O_k$ are calculated as follows.

$$\partial r/\partial W^{HI}_{ji} = (1/Q) \cdot \sum_p (\partial r_+{}^p/\partial W^{HI}_{ji} + \partial r_-{}^p/\partial W^{HI}_{ji} + \partial r_>{}^p/\partial W^{HI}_{ji}) \quad ---(72)$$

$$\partial r/\partial W^{OH}_{kj} = (1/Q) \cdot \sum_p (\partial r_+{}^p/\partial W^{OH}_{kj} + \partial r_-{}^p/\partial W^{OH}_{kj} + \partial r_>{}^p/\partial W^{OH}_{kj}) \quad ---(73)$$

$$\partial r/\partial \theta^H_j = (1/Q) \cdot \sum_p (\partial r_+{}^p/\partial \theta^H_j + \partial r_-{}^p/\partial \theta^H_j + \partial r_>{}^p/\partial \theta^H_j) \quad ---(74)$$

$$\partial r/\partial \theta^O_k = (1/Q) \cdot \sum_p (\partial r_+{}^p/\partial \theta^O_k + \partial r_-{}^p/\partial \theta^O_k + \partial r_>{}^p/\partial \theta^O_k) \quad ---(75)$$

The renewed values $\Delta W^{HI}_{ji}$, $\Delta W^{OH}_{kj}$, $\Delta \theta^H_j$, and $\Delta \theta^O_k$ are obtained according to the equations (10), (12), (14), and (16) in the same manner as in the first embodiment of the first modification.

Therefore, renewed weight parameters $W^{HI}_{ji}(t+1)$, $W^{OH}_{kj}(t+1)$ and the renewed threshold values $\theta^H_j(t+1)$, $\theta^O_k(t+1)$ are found according to the equations (17) to (20) in the same manner as in the first embodiment of the first modification.

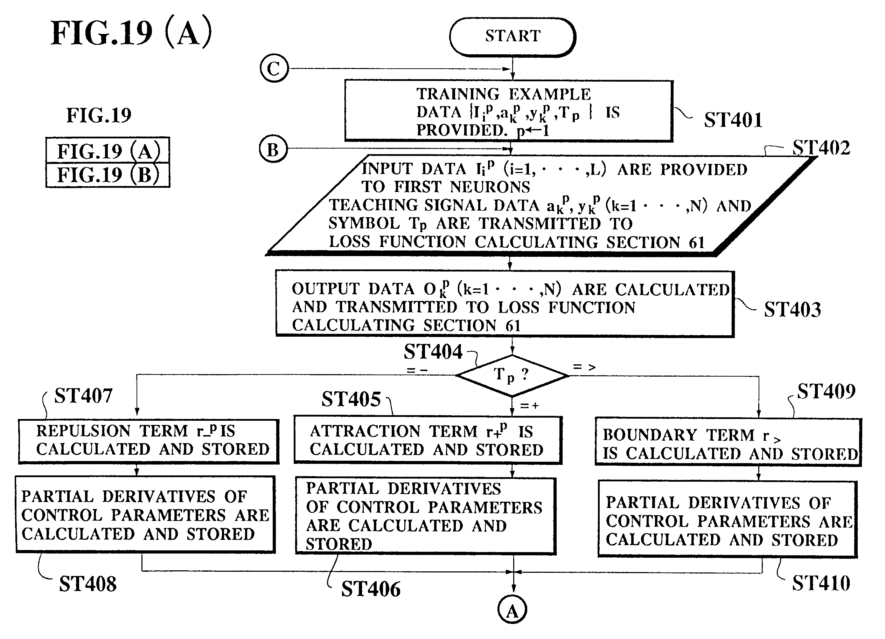

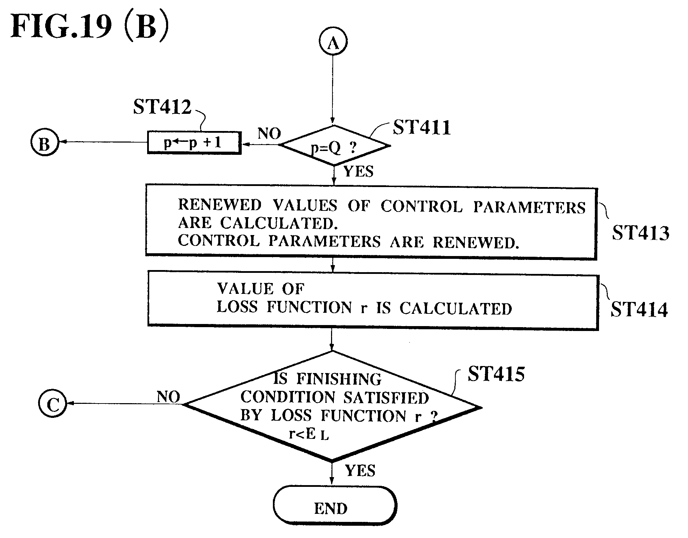

Fig. 19 is a flowchart showing a learning method performed in the learning apparatus shown in Fig. 14 according to the first embodiment of the second modification.

As shown in Fig. 19, a parameter p designating a set number of items of training example data $\{I_i{}^p, a_k{}^p, y_k{}^p, Tp\}$ composed of the teaching signal data $a_k{}^p$, $y_k{}^p$, the input data $I_i{}^p$, and the symbol Tp is set to 1 (p = 1) in a step 401 when the training example data $\{I_i{}^p, a_k{}^p, y_k{}^p, Tp\}$ is provided to the learning apparatus by an operator. Thereafter, L items of input data $I_i{}^p$ are provided to the first neurons 22, and N items of teaching signal data $a_k{}^p$, $y_k{}^p$ and the symbol Tp are automatically transmitted to the loss function calculation section 61 in a step 402.

Thereafter, N items of output data $O_k{}^p$ are calculated in the 3-layer feedforward neural network by applying the equations (1) to (5) before the output data $O_k{}^p$ is transmitted to the loss function calculation section 61 in a step 403.

Thereafter, whether the teaching signal data $a_k{}^p$, $y_k{}^p$ is the desired output data, the undesirable output data, or the boundary specifying data is judged by inspecting the symbol Tp in a prescribed control section (not shown) in a step 404. That is, the teaching signal data $a_k{}^p$, $y_k{}^p$ transmitted to the section 61 is judged to be the desired output data in cases where Tp indicates the symbol +, and the teaching signal data $a_k{}^p$, $y_k{}^p$ transmitted to the section 61 is judged to be the undesirable output data in cases where Tp indicates the symbol -. On the other hand, the teaching signal data $a_k{}^p$, $y_k{}^p$ transmitted to the section 61 is judged to be the boundary specifying data in cases where Tp is the symbol >.

In cases where the teaching signal data $a_k{}^p$, $y_k{}^p$ is judged to be the desired output data in the step 404, the value of the attraction term $r_+{}^p$ is calculated in the attraction term calculating section 30 by utilizing the N items of desired output data according to the equation (6) and the calculated value is stored in a prescribed memory (not shown) of the section 30 in a step 405. Thereafter, the control parameters $W^{HI}_{ji}$, $W^{OH}_{kj}$, $\theta^H_j$, and $\theta^O_k$ utilized in the first and second connection sections 27, 28 are transmitted to the control parameter adjusting section 63 so that partial derivatives $\partial r_+{}^p/\partial W^{HI}_{ji}$, $\partial r_+{}^p/\partial W^{OH}_{kj}$, $\partial r_+{}^p/\partial \theta^H_j$, and $\partial r_+{}^p/\partial \theta^O_k$ are calculated by utilizing the value $r_+{}^p$ stored in the section 30 in the control parameter adjusting section 63 and are stored in a memory (not shown) of the section 63 in a step 406.

In cases where the teaching signal data $a_k{}^p$, $y_k{}^p$ is judged to be the undesirable output data in the step 404, a value of the repulsion term $r_-{}^p$ is calculated in the repulsion term calculating section 31 by utilizing the N items of undesirable output data according to the equation (7) and the calculated value is stored in a prescribed memory (not shown) of the section 31 in a step 407. Thereafter, the control parameters $W^{HI}_{ji}$, $W^{OH}_{kj}$, $\theta^H_j$, and $\theta^O_k$ utilized in the first and second connection sections 27, 28 are transmitted to the control parameter adjusting section 63 so that partial derivatives $\partial r_-{}^p/\partial W^{HI}_{ji}$, $\partial r_-{}^p/\partial W^{OH}_{kj}$, $\partial r_-{}^p/\partial \theta^H_j$, and $\partial r_-{}^p/\partial \theta^O_k$ are calculated by utilizing the values $r_-{}^p$ stored in the section 31 in the control parameter adjusting section 63 and are stored in the memory of the section 32 in a step 408.

In cases where the teaching signal data $a_k{}^p$, $y_k{}^p$ is judged to be the boundary specifying data in the step 404, the value of the boundary term $r_>{}^p$ is calculated in the boundary term calculation section 62 by utilizing the N items of boundary specifying data according to the equation (69) and the calculated value is stored in a prescribed memory (not shown) of the section 62 in a step 409. Thereafter, the control parameters $W^{HI}_{ji}$, $W^{OH}_{kj}$, $\theta^H_j$, and $\theta^O_k$ utilized in the first and second connection sections 27, 28 are transmitted to the control parameter adjusting section 63 so that partial derivatives $\partial r_>{}^P/\partial W^{HI}_{ji}, \partial r_>{}^P/\partial W^{OH}_{kj}$, $\partial r_>{}^P/\partial\theta^H_j$, and $\partial r_>{}^P/\partial\theta^O_k$ are calculated by utilizing the values $r_>{}^P$ stored in the section 62 in the control parameter adjusting section 63 and are stored in the memory of the section 63 in a step 410.

Thereafter, whether or not the parameter p equals the number Q of items of training example data is judged in the prescribed control section in a step 411. In cases where the parameter p is judged not to equal the number Q, the parameter p is incremented by 1 in a step 412 so that the procedures from the step 402 to the step 411 are repeated. until the terms $r_+{}^P$, $r_-{}^P$, $r_>{}^P$ and partial derivatives

$\partial r_+{}^P/\partial W^{HI}_{ji}$, $\quad \partial r_+{}^P/W^{OH}_{kj}$, $\quad \partial r_+{}^P/\partial\theta^H_j$, $\quad \partial r_+{}^P/\partial\theta^O_k$, $\quad \partial r_-{}^P/\partial W^{HI}_{ji}$, $\quad \partial r_-{}^P/\partial W^{OH}_{kj}$, $\quad \partial r_-{}^P/\partial\theta^H_j$, $\quad \partial r_-{}^P/\partial\theta^O_k$, $\partial r_>{}^P/\partial W^{HI}_{ji}$, $\partial r_>{}^P/\partial W^{OH}_{kj}$, $\partial r_>{}^P/\partial\theta^H_j$, and $\partial r_>{}^P/\partial\theta^O_k$ are stored throughout all the sets of training example data in the memory of the sections 61,63.

In cases where the parameter p is judged to equal the number Q in the step 411, the judgement means that all sets of training example data have been calculated to provide Q sets of output data for the section 61. Moreover, the judgement means that the attraction term, the repulsion term, and the boundary term $r_+{}^P$, $r_-{}^P$, $r_>{}^P$ and the partial derivatives $\partial r_+{}^P/\partial W^{HI}_{ji}$, $\partial r_+{}^P/\partial W^{OH}_{kj}$, $\partial r_+{}^P/\partial\theta^H_j$, $\partial r_+{}^P/\partial\theta^O_k$, $\partial r_-{}^P/\partial W^{HI}_{ji}$, $\partial r_-{}^P/\partial W^{OH}_{kj}$, $\partial r_-{}^P/\partial\theta^H_j$, $\partial r_-{}^P/\partial\theta^O_k \partial r_>{}^P/\partial W^{HI}_{ji}$, $\partial r_>{}^P/\partial W^{OH}_{kj}$, $\partial r_>{}^P/\partial\theta^H_j$, and $\partial r_>{}^P/\partial\theta^O_k$ are stored throughout all the sets of training example data in the memory of the sections 61, 63. Therefore, the renewed values $\Delta W^{HI}_{ji}(t)$, $\Delta W^{OH}_{kj}(t)$ $\Delta\theta^H_j(t)$, and $\Delta\theta^O_k(t)$ are calculated by applying the equations (72) to (75), (10), (12), (14), and (16) so that the weight parameters $W^{HI}_{ji}(t)$, $W^{OH}_{kj}(t)$ and the threshold values $\theta^H_j(t)$, $\theta^O_k(t)$ are slightly renewed by applying the equations (17) to (20) in a step 413. That is, the renewed weight parameters $W^{HI}_{ji}(t+1)$, $W^{OH}_{kj}$-$(t+1)$ and the renewed threshold values $\theta^H_j(t+1)$, $\theta^O_k(t+1)$ are determined. The value of the loss function r is then found by utilizing the terms $r_+{}^P$, $r_-{}^P$, and $r_>{}^P$ stored in the memory of the section 61 according to the equation (71) in a step 414. In cases where the calculation in the steps 213, 214 isimplemented, for example, for the first time, the iteration number t equals 1.

Thereafter, whether or not the value of the loss function r satisfies the finishing condition is judged by applying the equation (21) in a step 415. That is, in cases where the value of the loss function r is equal to or greaterthan $E_L$, the finishing condition is not satisfied so that the iteration number t is incremented by 1. Thereafter, the procedures from the step 401 to the step 415 are iterated while utilizing the renewed control parameters $W^{HI}_{ji}(t+1)$, $W^{OH}_{kj}(t+1)$, $\theta^H_j(t+1)$, and $\theta^O_k(t+1)$ in place of the control parameters $W^{HI}_{ji}(t)$, $W^{OH}_{kj}$-$(t)$, $\theta^H_j(t)$, and $\theta^O_k(t)$.

The iteration of the procedures between the step 401 and the step 415 is continued until the finishing condition is satisfied.

In cases where the value of the loss function r is less than $E_L$, the finishing condition is satisfied in the step 415 so that the learning in the learning apparatus is completed. That is, the control parameters such as the weight parameters and the threshold values are adjusted to the most appropriate values because the steepest-descent method is utilized.

Accordingly, after the weight parameters and the threshold values are adjusted to the most appropriate values, the operator can accomplish the most appropriate diagnosis, the most appropriate robot control, or the like without utilizing the section 63.

In the first embodiment of the second modification, the loss function occasionally does not reach the finishing conditions because the neural network is a non-linear type. In this case, it is preferable that a maximum iteration number $t_{MAX}$ be added to the finishing condition. That is, the learning for adjusting control parameters such as the weight parameters and the threshold values is stopped when the number of iterations reaches the maximum iteration number $t_{MAX}$. Thereafter, initial values of the control parameters are reset by the operator before the learning is resumed.

Moreover, either the desired output data, the undesirable output data, or the boundary specifying data is provided to the learning apparatus as a set of training example data in the first embodiment of the second modification. However, it is preferable that the desired output data, the undesirable output, and the boundary specifying data be intermingled in the same set of training example data. In this case, the output vector corresponding to the boundary specifying data is defined in prescribed dimensions of less than the N dimensions.

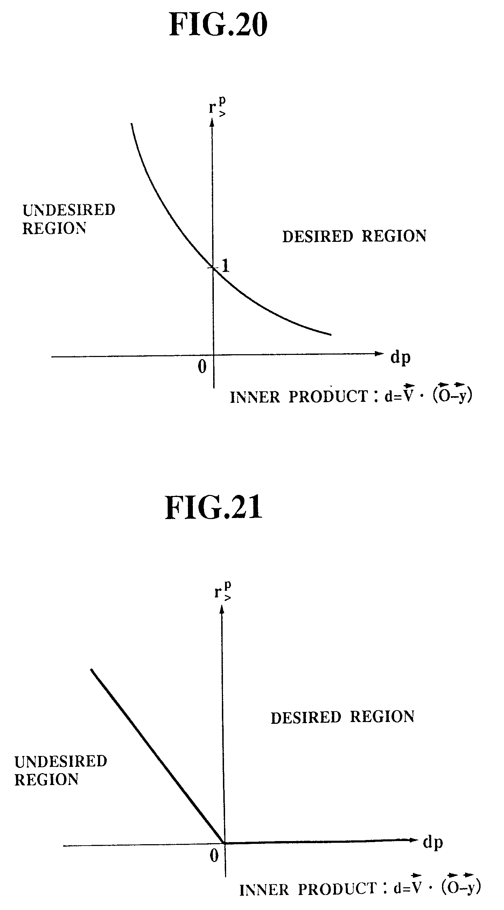

Next, learning methods according to other embodiments of the second modifications are described with reference to Figs. 20 and 21.

Fig. 20 is a graphic view showing a boundary term $r_>{}^P$ of the loss function according to a second embodiment of the second modification.

The boundary term $r_>{}^P$ shown in Fig. 20 is defined by utilizing the following equation.

$$r_>{}^p = \gamma_{>*}\exp(-d^p) \qquad (76)$$

The features of the boundary term $r_>{}^p$ defined by the equation (76) are as follows.

A partial derivative of the boundary term $r_>{}^p$ with respect to the inner product $d^p$ diverges when the output vector is positioned deep within the undesired region ($d^p = -\infty$). Moreover, the partial derivative $\partial r_>{}^p/\partial d^p$ gradually approaches the zero value when the output vector is positioned deep within the desired region ($d^p = +\infty$).

Therefore, the output vector is strongly shifted to the desired region in early iterative calculations because the absolute value of the partial derivative $\partial r_>{}^p/\partial d^p$ is large in the undesired region. Thereafter, the output vector is not shifted in practice because the absolute value of the partial derivative $\partial r_>{}^p/\partial d^p$ is small in the desired region. In other words, the learning is stabilized.

In addition, the shape of the boundary term $r_>{}^p$ is simple, and the value of the boundary term $r_>{}^p$ is smoothly shifted. Therefore, the boundary term $r_>{}^p$ can be easily handled.

Moreover, because the value of the boundary term $r_>{}^p$ is exponentially shifted, the value is not shifted in practice when the output vector is positioned deep within the desired region. In other words, the influence of the boundary specifying data on the output vector is largely reduced within a deep desired region.

On the other hand, because the value of the boundary term $r_>{}^p$ is large within a deep undesired region, the output vector positioned within the deep undesired region is strongly shifted to the desired region.

Fig. 21 is a graphic view showing a boundary term $r_>{}^p$ according to a third embodiment of the second modification.

The boundary term $r_>{}^p$ shown in Fig. 21 is defined by utilizing the following equation.

$$r_>{}^p = \gamma_{>*}d^p{}_*\{\mathrm{sgn}(d^p) - 1\} \qquad (77)$$

where $\mathrm{sgn}(d^p)$ is a sign function. That is,

$$\mathbf{sgn(d^p)} = \begin{cases} \mathbf{-1} & \mathbf{---\ \ d^p < 0} \\ \mathbf{+1} & \mathbf{---\ \ d^p \geq 0} \end{cases}$$

The features of the boundary term $r_>{}^p$ defined by the equation (77) are as follows.

A partial derivative of the boundary term $r_>{}^p$ with respect to the inner product $d^p$ equals a constant value when the output vector is positioned within the undesired region. Moreover, the partial derivative $\partial r_>{}^p/\partial d^p$ equals the zero value when the output vector is positioned within the desired region.

Therefore, the influence of the boundary specifying data on the output vector positioned within the undesired region is constant so that the output vector is gradually shifted to the desired region. Moreover, the output vector positioned within the desired region is not shifted regardless of whether the calculations are iterated. In other words, the boundary specifying data exerts no influence on the output vector positioned within the desired region.

Accordingly, because the partial derivative of the boundary term $\partial r_>{}^p/\partial d^p$ is constant within the undesired region, the learning is stabilized, although the speed of the learning is inferior.

In addition, because the shape of the boundary term $r_>{}^p$ is simple, it is easy to analytically handle the boundary term $r_>{}^p$.

As mentioned above, the learning is implemented to shift the output vector to the desired region which is designated by the boundary specifying data by utilizing the learning method and the learning apparatus according to the second modification. Therefore, the learning performance can be improved. That is, the learning can be accomplished according to learning conditions.

Moreover, the operator can freely utilize the desired output data, the undesirable output, and the boundary specifying data according to the objects of the learning.

Having illustrated and described the principles of our invention in a preferred embodiment thereof, it should be readily apparent to those skilled in the art that the invention can be modified in arrangement and detail without departing from such principles. We claim all modifications coming within the spirit and scope of the accompanying claims.

Reference signs in the claims are intended for better understanding and shall not limit the scope.

**Claims**

1. A learning method for adjusting control parameters Θ of a learning apparatus in which input data is converted into output data by utilizing the control parameters Θ and teaching signal data, comprising steps of:

defining undesirable output data which is not acceptable as output data, the undesirable output data being a type of the teaching signal data;

defining a loss function r of which a value decreases along with the increase of a difference x between the undesirable output data and the output data, the loss function r being designated by an equation $r = \exp(-x^2)$;

providing both the input data and the undesirable output data to the learning apparatus;

calculating a value of the output data by converting a value of the input data by utilizing values of the control parameters Θ;

calculating a value of the loss function r by utilizing both the value of the output data and a value of the undesirable output data;

iteratively calculating the value of the loss function r by renewing the values of the control parameters Θ to decrease the value of the loss function r until the value of the loss function r is less than a prescribed value in cases where the value of the loss function r is equal to or greater than the prescribed value; and

adjusting the control parameters Θ of the learning apparatus to newest values of the control parameters Θ when the value of the loss function is less than the prescribed value.

2. A learning method according to claim 1 in which a renewed value of the control parameter Θ in the step of iteratively calculating the value of the loss function r are designated by an equation

$$\Delta\Theta(t+1) = -(1-\alpha)_*\eta_*\partial r/\partial\Theta(t) + \alpha_*\Delta\Theta(t),$$

where $\Delta\Theta(t+1)$ is a renewed value of the control parameter Θ in the t-th iterative calculation, $\partial r/\partial\Theta(t)$ is a partial derivative of the loss function r with respect to the control parameter Θ in the t-th iterative calculation, $\alpha$ is a momentum parameter for adjusting the contribution of $\Delta\Theta(t)$ to $\Delta\Theta(t+1)$, $\eta$ is a learning rate for adjusting the contribution of $\partial r/\partial\Theta(t)$ to $\Delta\Theta(t+1)$.

3. A learning method for adjusting control parameters Θ of a learning apparatus in which input data is converted into output data by utilizing the control parameters Θ and teaching signal data, comprising steps of:

defining undesirable output data which is not acceptable as output data, the undesirable output data being a type of the teaching signal data;

defining desired output data which is desired as output data, the desired output data being another type of the teaching signal data;

defining an attraction term $r_+$ of which a value decreases along with the decrease of a difference $x_+$ between the desired output data and the output data, the attraction term $r_+$ being designated by an equation $r_+ = 1/2_*x_+^2$;

defining a repulsion term $r_-$ of which a value decreases along with the increase of a difference $x_-$ between the undesirable output data and the output data by utilizing a parameter $\gamma_-$ for adjusting a contributory ratio of the undesirable output data to the desired output data, the repulsion term $r_-$ being designated by an equation $r_- = \gamma_{-*}\exp(-x_-^2)$;

defining a loss function r found by adding the repulsion term $r_-$ and the attraction term $r_+$ together;

providing both the input data and the teaching signal data to the learning apparatus;

calculating a value of the output data by converting a value of the input data by utilizing values of the control parameters Θ;

calculating a value of the loss function r by utilizing both the value of the output data and a value of the teaching signal data;

iteratively calculating the value of the loss function r by renewing the values of the control parameters Θ to decrease the value of the loss function until the value of the loss function is less than a prescribed value in cases where the value of the loss function r is equal to or greater than the prescribed value; and

adjusting the control parameters Θ of the learning apparatus to newest values of the control parameters Θ when the value of the loss function r is less than the prescribed value.

4. A learning method for adjusting control parameters Θ such as weight parameters and threshold values of a learning apparatus by utilizing teaching signal data and a plurality of neurons interconnected in an artificial neural network in which input data provided to first neurons (22) of a first stage (21) is weighted with the weight parameters and the threshold values are subtracted from the weighted input data so that the weighted input data is transmitted to final neurons (26) of a final stage (25) through hidden stages (24) in which the data is weighted with the weight parameters, subtracted the threshold values, and converted by applying a prescribed monotone increasing function, after which output data is provided from the final neurons (26), comprising steps of:

defining undesirable output data which is not acceptable as output data, the undesirable output data being a type of the teaching signal data;

defining a loss function r which decreases along with the increase of the difference between the undesirable output data and the output data;

providing the input data to the first neurons (22);

providing the undesirable output data to the learning apparatus;

calculating a value of the output data obtained by converting the input data while utilizing the control parameters and the monotone increasing function;

calculating a value of the loss function r by utilizing both the value of the output data and a value of the undesirable output data;

iteratively calculating the value of the loss function r by renewing the control parameters to decrease the value of the loss function r until the value of the loss function r is less than a prescribed value in cases where the value of the loss function r is equal to or greater than the prescribed value; and

adjusting the control parameters of the learning apparatus to the newest control parameters when the value of the loss function r is less than the prescribed value.

5. A learning method according to claim 4 in which the loss function r in the step of defining a loss function r is designated by an equation $r = \exp(-x^2)$, where x is the difference between the undesirable output data and the output data.

6. A learning method according to claim 4 in which a renewed value of the control parameter Θ in the step of iteratively calculating the value of the loss function r are designated by an equation

$$\Delta\Theta(t+1) = -(1-\alpha)*\eta*\partial r/\partial\Theta(t) + \alpha*\Delta\Theta(t),$$

where $\Delta\Theta(t+1)$ is a renewed value of the control parameter Θ in the t-th iterative calculation, $\partial r/\partial\Theta(t)$ is a partial derivative of the loss function r with respect to the control parameter Θ in the t-th iterative calculation, $\alpha$ is a momentum parameter for adjusting the contribution of $\Delta\Theta(t)$ to $\Delta\Theta(t+1)$, $\eta$ is a learning rate for adjusting the contribution of $\partial r/\partial\Theta(t)$ to $\Delta\Theta(t+1)$.

7. A learning method for adjusting both weight parameters and threshold values of a learning apparatus by utilizing teaching signal data and a plurality of neurons interconnected in an artificial neural network in which input data provided to first neurons (22) of a first stage (21) is weighted with the weight parameters and the threshold values are subtracted from the weighted input data so that the weighted input data is transmitted to final neurons (26) of a final stage (25) through hidden stages (24) in which the data is weighted with the weight parameters, subtracted the threshold values, and converted by applying a prescribed monotone increasing function, after which output data is provided from the final neurons (26), comprising steps of:

defining undesirable output data which is not acceptable as output data, the undesirable output data being a type of the teaching signal data;

defining desired output data which is desired as output data, the desired output data being another type of the teaching signal data;

defining a repulsion term $r_-$ of which a value decreases along with the increase of a difference $x_-$ between the undesirable output data and the output data;

defining an attraction term $r_+$ of which a value decreases along with the decrease of a difference $x_+$ between the desired output data and the output data;

defining a loss function r found by adding the repulsion term $r_-$ and the attraction term $r_+$ together;

providing the input data to the first neurons (22);

providing the teaching signal data to the learning apparatus;

calculating a value of the output data obtained by converting the input data while utilizing the weight parameters, the threshold values, and the monotone increasing function;

calculating a value of the loss function r by utilizing both the value of the output data and a value of the teaching signal data;

iteratively calculating the value of the loss function r by renewing the weight parameters and the threshold values to decrease the value of the loss function r until the value of the loss function r is less than a prescribed value in cases where the value of the loss function r is equal to or greater than the prescribed value; and

adjusting the weight parameters and the threshold values of the learning apparatus to the newest weight parameters and the newest threshold values when the value of the loss function r is less than the prescribed value.

8. A learning method according to claim 7 in which the repulsion term $r_-$ in the step of defining a repulsion term $r_-$ is designated by an equation $r_- = \gamma_- {}_* \exp(-x_-^2)$ by utilizing a parameter $\gamma_-$ for adjusting a contributory ratio of the undesirable output data to the desired output data, and

the attracted term $r_+$ in the step of defining an attraction term $r_+$ is designated by an equation $r_+ = 1/2_* x_+^2$.

9. A learning method for adjusting control parameters $\Theta$ of a learning apparatus in which input data is converted into output data by utilizing the control parameters and teaching signal data, comprising steps of:

defining undesirable output data which is not acceptable as output data and is a type of the teaching signal data;

defining desired output data which is desired as output data and is another type of the teaching signal data;

defining a distribution function $G(x|\Theta)$ relating to the desired output data by utilizing both the control parameters $\Theta$ and a difference x between the output data and the desired output data:

defining a distribution function $1 - G(x|\Theta)$ relating to the undesirable output data by utilizing both the control parameters $\Theta$ and a difference x between the output data and the undesirable output data;

substituting the distribution functions $G(x|\Theta)$, $1 - G(x|\Theta)$ relating to the desired and undesirable output data for a logarithmic likelihood $l_E(x)$ of which a value is maximized when the difference between the output data and the desired output data is decreased and the difference between the output data and the undesirable output data is increased, the substituted logarithmic likelihood $l_E(x)$ being represented by a following equation

$$l_E(x) = \sum_{p:D} \ln G(x|\Theta) + \sum_{p:U} \ln\{1 - G(x|\Theta)\}$$

where $\Sigma_{p:D}$ indicates that the adding calculations are implemented when the desired output data is provided to the learning apparatus, and $\Sigma_{p:U}$ indicates that the adding calculations are implemented when the undesirable output data is provided to the learning apparatus;

defining a loss function $r = -l_E(x)$;

providing both the input data and the teaching signal data to the learning apparatus;

calculating a value of the output data by converting a value of the input data by utilizing values of the control parameters;

calculating a value of the loss function r;

iteratively calculating the value of the loss function r by renewing the values of both the control parameters $\Theta$ to decrease the value of the loss function r until the value of the loss function r is less than a prescribed value in cases where the value of the loss function r is equal to or greater than the prescribed value; and

adjusting the control parameters $\Theta$ of the learning apparatus to newest values of the control parameters $\Theta$ when the value of the loss function r is less than the prescribed value.

10. A learning method for adjusting control parameters $\Theta$ such as weight parameters and threshold values of a learning apparatus by utilizing teaching signal data and a plurality of neurons interconnected in an artificial neural network in which input data provided to first neurons (22) of a first stage (21) is weighted with the weight parameters and the threshold values are subtracted from the weighted input data so that the weighted input data is transmitted to final neurons (26) of a final stage (25) through hidden stages (24) in which the data is weighted with the weight parameters, subtracted the threshold values, and converted by applying a prescribed monotone increasing function, after which output data is provided from the final neurons (26), comprising steps of:

defining undesirable output data which is not acceptable as output data and is a type of the teaching signal data;

defining desired output data which is desired as output data and is another type of the teaching signal data;

defining a distribution function $G(x|\Theta)$ relating to the desired output data by utilizing both the control parameters $\Theta$ and a difference x between the output data and the desired output data:

defining a distribution function $1 - G(x|\Theta)$ relating to the undesirable output data by utilizing both the control parameters $\Theta$ and a difference x between the output data and the undesirable output data;

substituting the distribution functions $G(x|\Theta)$, $1 - G(x|\Theta)$ relating to the desired and undesirable output data for a logarithmic likelihood $l_E(x)$ of which a value is maximized when the difference between the output data and the desired output data is decreased and the difference between the output data and the undesirable output data is increased, the substituted logarithmic likelihood $l_E(x)$ being represented by a following equation

$$l_E(x) = \sum_{p:D} \ln G(x|\Theta) + \sum_{p:U} \ln\{1 - G(x|\Theta)\}$$

where $\Sigma_{p:D}$ indicates that the adding calculations are implemented when the desired output data is provided to the learning apparatus, and $\Sigma_{p:U}$ indicates that the adding calculations are implemented when the undesirable output data is provided to the learning apparatus;

defining a loss function $r = l_E(x)$;

providing the input data to the first neurons (22);

providing the teaching signal data to the learning apparatus;

calculating a value of the output data obtained by converting the input data while utilizing the control parameters;

calculating a value of the loss function r;

iteratively calculating the value of the loss function r by renewing the values of the control parameters $\Theta$ to decrease the value of the loss function r until the value of the loss function r is less than a prescribed value in cases where the value of the loss function r is equal to or greater than the prescribed value; and

adjusting the control parameters $\Theta$ of the learning apparatus to newest values of the control parameters $\Theta$ when the value of the loss function r is less than the prescribed value.

11. A learning method for adjusting control parameters of a learning apparatus in which input data is converted into output data by utilizing the control parameters and teaching signal data, comprising steps of:

defining undesirable output data which is not acceptable as output data and is a type of the teaching signal data;

defining desired output data which is desired as output data and is another type of the teaching signal data, the desired output data occupying a region s;

defining a distribution function $s_*g(x_+)$ relating to the desired output data by utilizing both the region s occupied by the desired output data and a normal distribution $g(x_+)$ which is defined by both a variance $\sigma^2$ and a difference $x_+$ between the output data and the desired output data, the distribution function $s_*g(x_+)$ being defined by an equation $s_*g(x_+) = s_*[1/(2\pi)^{1/2}\sigma] * \exp[-x_+^2/(2\sigma^2)]$;

defining a distribution function $1 - s_*g(x_-)$ relating to the undesirable output data by utilizing both the region s occupied by the desired output data and a normal distribution $g(x_-)$ which is defined by both the variance $\sigma^2$ and a difference $x_-$ between the output data and the undesirable output data, the distribution function $1 - s_*g(x_-)$ being defined by an equation

$1 - s_*g(x_-) = 1 - s_*[1/(2\pi)^{1/2}\sigma] * \exp[-x_-^2/(2\sigma^2)]$;

providing both the input data and the teaching signal data to the learning apparatus;

calculating a value of the output data by converting a value of the input data by utilizing values of the control parameters;

deriving an attraction term $r_+ = \ln(\sigma) + x_+^2/(2\sigma^2)$ and a repulsion term $r_- = s/[(2\pi)^{1/2}\sigma] * \exp[-x_-^2/(2\sigma^2)]$ from a logarithmic-likelihood $l_E(x)$ based on a statistical entropy as follows,

$$-l_E(x) = -\ln g(x_+) + s_* g(x_-)$$
$$r_+ = -\ln g(x_+)$$
$$r_- = s_* g(x_-);$$

calculating a value of the attraction term $r_+$ in cases where the desired output data is provided to the learning apparatus as the teaching signal data, a value of the attraction term $r_+$ being decreased along with the decrease of the difference $x_+$;

calculating a value of the repulsion term $r_-$ in cases where the undesirable output data is provided to the learning apparatus as the teaching signal data, a value of the repulsion term $r_-$ being decreased along with the increase of the difference $x_-$;

calculating a loss function r found by adding the repulsion term $r_-$ and the attraction term $r_+$ together;

iteratively calculating the value of the loss function r by renewing the values of both the control parameters and the variance $\sigma^2$ to decrease the value of the loss function r until the value of the loss function r is less than a prescribed value in cases where the value of the loss function is equal to or greater than the prescribed value; and

adjusting both the control parameters and the variance $\sigma^2$ of the learning apparatus to newest values of both the control parameters and the variance $\sigma^2$ when the value of the loss function r is less than the prescribed value.

12. A learning method according to claim 11 in which renewed values of both the control parameter $\Theta$ and the variance $\sigma^2$ in the step of iteratively calculating the value of the loss function r are designated by an equation

$$\Delta\Theta(t+1) = -(1-\alpha)_* \eta_* \partial r/\partial \Theta(t) + \alpha_* \Delta\Theta(t)$$
$$\Delta\sigma(t+1) = -(1-\alpha)_* \eta_* \partial r/\partial \sigma(t) + \alpha_* \Delta\sigma(t),$$

where $\Delta\Theta(t+1)$ and $\Delta\sigma(t+1)$ are renewed values of the control parameters $\Theta$, $\sigma$ in the t-th iterative calculation, $\partial r/\partial \Theta(t)$ and $\partial r/\partial \sigma(t)$ are partial derivatives of the loss function r with respect to the control parameters $\Theta$, $\sigma$ in the t-th iterative calculation, $\alpha$ is a momentum parameter for adjusting the contribution of $\Delta\Theta(t)$ and $\Delta\sigma(t)$ to $\Delta\Theta(t+1)$ and $\Delta\sigma(t+1)$, $\eta$ is a learning rate for adjusting the contribution of $\partial r/\partial \Theta(t)$ and $\partial r/\partial \sigma(t)$ to $\Delta\Theta(t+1)$ and $\Delta\sigma(t+1)$.

13. A learning method for adjusting control parameters $\Theta$ such as weight parameters and threshold values of a learning apparatus by utilizing teaching signal data and a plurality of neurons interconnected in an artificial neural network in which input data provided to first neurons (22) of a first stage (21) is weighted with the weight parameters and the threshold values are subtracted from the weighted input data so that the weighted input data is transmitted to final neurons (26) of a final stage (25) through hidden stages (24) in which the data is weighted with the weight parameters, subtracted the threshold values, and converted by applying a prescribed monotone increasing function, after which output data is provided from the final neurons (26), comprising steps of:

defining undesirable output data which is not acceptable as output data and is a type of the teaching signal data;

defining desired output data which is desired as output data and is another type of the teaching signal data, the desired output data occupying a region s;

defining a distribution function $s_* g(x_+)$ relating to the desired output data by utilizing both the region s occupied by the desired output data and a normal distribution $g(x_+)$ which is defined by both a variance $\sigma^2$ a difference $x_+$ between the output data and the desired output data, the distribution function $s_* g(x_+)$ being defined by an equation

$$s_* g(x_+) = s_*[1/(2\pi)^{1/2}\sigma] * \exp[-x_+^2/(2\sigma^2)];$$

defining a distribution function $1 - s_* g(x_-)$ relating to the undesirable output data by utilizing both the region s occupied by the desired output data and a normal distribution $g(x_-)$ which is defined by

both the variance $\sigma^2$ and a difference x− between the output data and the undesirable output data, the distribution function 1 - s∗g(x−) being defined by an equation

$$1 - s_*g(x_-) = 1 - s_*[1/(2\pi)^{1/2}\sigma] * \exp[-x_-^2/(2\sigma^2)];$$

providing the input data to the first neurons (22);

providing the teaching signal data to the learning apparatus;

calculating a value of the output data obtained by converting the input data while utilizing the control parameters;

deriving an attraction term $r_+ = \ln(\sigma) + x_+^2/(2\sigma^2)$ and a repulsion term $r_- = s/[(2\pi)^{1/2}\sigma] * \exp[-x_-^2/(2\sigma^2)]$ from a logarithmic-likelihood $l_E(x)$ based on a statistical entropy as follows,

$$-l_E(x) = -\ln g(x_+) + s_*g(x_-)$$
$$r_+ = -\ln g(x_+)$$
$$r_- = s_*g(x_-);$$

calculating a value of the attraction term $r_+$ in cases where the desired output data is provided to the learning apparatus as the teaching signal data, a value of the attraction term $r_+$ being decreased along with the decrease of the difference $x_+$;

calculating a value of the repulsion term $r_-$ in cases where the undesirable output data is provided to the learning apparatus as the teaching signal data, a value of the repulsion term $r_-$ being decreased along with the increase of the difference $x_-$;

calculating a loss function r found by adding the repulsion term $r_-$ and the attraction term $r_+$ together;

iteratively calculating the value of the loss function r by renewing the values of the control parameters and the variance $\sigma^2$ to decrease the value of the loss function r until the value of the loss function r is less than a prescribed value in cases where the value of the loss function r is equal to or greater than the prescribed value; and

adjusting the control parameters and the variance $\sigma^2$ of the learning apparatus to newest values of the control parameters and the variance $\sigma^2$ when the value of the loss function r is less than the prescribed value.

14. A learning method according to claim 13 in which renewed values of both the control parameter $\Theta$ and the variance $\sigma^2$ in the step of iteratively calculating the value of the loss function r are designated by an equation

$$\Delta\Theta(t+1) = -(1-\alpha)_*\eta_*\partial r/\partial\Theta(t) + \alpha_*\Delta\Theta(t)$$
$$\Delta\sigma(t+1) = -(1-\alpha)_*\eta_*\partial r/\partial\sigma(t) + \alpha_*\Delta\sigma(t),$$

where $\Delta\Theta(t+1)$ and $\Delta\sigma(t+1)$ are renewed values of the control parameters $\Theta$, $\sigma$ in the t-th iterative calculation, $\partial r/\partial\Theta(t)$ and $\partial r/\partial\sigma(t)$ are partial derivatives of the loss function r with respect to the control parameters $\Theta$, $\sigma$ in the t-th iterative calculation, $\alpha$ is a momentum parameter for adjusting the contribution of $\Delta\Theta(t)$ and $\Delta\sigma(t)$ to $\Delta\Theta(t+1)$ and $\Delta\sigma(t+1)$, $\eta$ is a learning rate for adjusting the contribution of $\partial r/\partial\Theta(t)$ and $\partial r/\partial\sigma(t)$ to $\Delta\Theta(t+1)$ and $\Delta\sigma(t+1)$.

15. A learning method for adjusting control parameters $\Theta$ such as weight parameters and threshold values of a learning apparatus by utilizing teaching signal data and a plurality of neurons interconnected in an artificial neural network in which input data provided to first neurons (22) of a first stage (21) is weighted with the weight parameters and the threshold values are subtracted from the weighted input data so that the weighted input data is transmitted to final neurons (26) of a final stage (25) through hidden stages (24) in which the data is weighted with the weight parameters, subtracted the threshold values, and converted by applying a prescribed monotone increasing function, after which output data is provided from the final neurons (26), comprising steps of:

defining undesirable output data which is not acceptable as output data and is a type of the teaching signal data;

defining desired output data which is desired as output data and is another type of the teaching signal data, the desired output data occupying a region s;

defining a distribution function s∗g(x+) relating to the desired output data by utilizing both a region s occupied by the desired output data and a normal distribution $g(x_+)$ which is defined by both a difference $x_+$ between the output data and the desired output data and a variance $\sigma^2$, the distribution function $s_*g(x_+)$ being defined by an equation

$$s_*g(x_+) = s_*[1/(2\pi)^{1/2}\sigma] * \exp[-x_+^2/(2\sigma^2)];$$

defining a distribution function $1 - s_*g(x_-)$ relating to the undesirable output data by utilizing both the region s occupied by the desired output data and a normal distribution $g(x_-)$ which is defined by both a difference $x_-$ between the output data and the undesirable output data and the variance $\sigma^2$, the distribution function $1 - s_*g(x_-)$ being defined by an equation

$$1 - s_*g(x_-) = 1 - s_*[1/(2\pi)^{1/2}\sigma] * \exp[-x_-^2/(2\sigma^2)];$$

providing the input data to the first neurons (22);

providing the teaching signal data to the learning apparatus;

calculating a value of the output data obtained by converting the input data while utilizing the control parameters;

deriving an attraction term $r_+ = \ln(\sigma) + x_+^2/(2\sigma^2)$ and a repulsion term $r_- = s/[(2\pi)^{1/2}\sigma] * \exp[-x_-^2/(2\sigma^2)]$ from a logarithmic-likelihood $l_E(x)$ based on a statistical entropy as follows,

$$-l_E(x) = -\ln g(x_+) + s_*g(x_-)$$
$$r_+ = -\ln g(x_+)$$
$$r_- = s_*g(x_-);$$

calculating a value of the attraction term $r_+$ in cases where the desired output data is provided to the learning apparatus as the teaching signal data, a value of the attraction term $r_+$ being decreased along with the decrease of the difference $x_+$;

calculating a value of the repulsion term $r_-$ in cases where the undesirable output data is provided to the learning apparatus as the teaching signal data, a value of the repulsion term $r_-$ being decreased along with the increase of the difference $x_-$;

calculating a loss function r found by adding the repulsion term $r_-$ and the attraction term $r_+$ together;

iteratively calculating the value of the loss function r by renewing the values of the control parameters and the variance $\sigma^2$ to decrease the value of the loss function r until the value of the loss function r is less than a first small value;

resetting the distribution functions $s_*g(x_+)$, $1-s_*g(x_+)$ relating to the desired and undesirable output data to a more proper distribution functions to practical distributions of the distances $x_+$, $x_-$ which are practically obtained by iteratively calculating the value of the loss function r when the value of the loss function r is less than the first small value;

iteratively calculating the value of the loss function r by renewing the values of the control parameters and the variance $\sigma^2$ according to the practical distributions to decrease the value of the loss function r until the value of the loss function r is less than a second small value; and

adjusting the control parameters and the variance $\sigma^2$ of the learning apparatus to newest values of the control parameters and the variance $\sigma^2$ when the value of the loss function r is less than the second small value.

16. A learning method for adjusting control parameters $\Theta$ such as weight parameters and threshold values of a learning apparatus by utilizing teaching signal data and a plurality of neurons interconnected in an artificial neural network in which input data provided to first neurons (22) of a first stage (21) is weighted with the weight parameters and the threshold values are subtracted from the weighted input data so that the weighted input data is transmitted to final neurons (26) of a final stage (25) through hidden stages (24) in which the data is weighted with the weight parameters, subtracted the threshold values, and converted by applying a prescribed monotone increasing function, after which output data is provided from the final neurons (26), comprising steps of:

dividing the final neurons (26) of the final stage (25) between neurons A and neurons B;

defining two items of undesirable output data A, B which are not acceptable as output data and is a type of the teaching signal data, the undesirable output data A corresponding to the neurons A and the undesirable output data B corresponding to the neurons B;

defining two items of desired output data A, B which are desired as output data and is another type of the teaching signal data, the desired output data A corresponding to the neurons A and the desired output data B corresponding to the neurons B;

defining a distribution function $s_A{*}g^A(x_A)$ by utilizing both a region $s_A$ occupied by the desired output data A provided from the neuron A and a normal distribution $g^A(x_A)$ which is defined by both a difference $x_A$ between the output data A and the desired output data A and a variance $\sigma_A^2$, the distribution function $s_A{*}g^A(x_A)$ being defined by an equation $s_A{*}g^A(x_A) = s_A{*}[1/(2\pi)^{1/2}\sigma_A] * \exp[-x_A^2/(2\sigma_A^2)]$;

defining a distribution function $s_B{*}g^B(x_B)$ by utilizing both a region $s_B$ occupied by the desired output data B provided from the neuron B and a normal distribution $g^B(x_B)$ which is defined by both a difference $x_B$ between the output data B and the desired output data B and a variance $\sigma_B^2$, the distribution function $s_B{*}g^B(x_B)$ being defined by an equation $s_B{*}g^B(x_B) = s_B{*}[1/(2\pi)^{1/2}\sigma_B] * \exp[-x_B^2/(2\sigma_B^2)]$;

defining a distribution function $1 - s_A{*}g^A(x_A)$ relating to the undesirable output data A;

defining a distribution function $1 - s_B{*}g^B(x_B)$ relating to the undesirable output data B;

providing the input data to the first neurons (22);

providing the teaching signal data to the learning apparatus;

calculating a value of the output data obtained by converting the input data while utilizing the control parameters;

deriving attraction terms $r_{A+} = \ln(\sigma_A) + x_{A+}^2/(2\sigma_A^2)$, $r_{B+} = \ln(\sigma_B) + x_{B+}^2/(2\sigma_B^2)$ and repulsion terms $r_{A-} = s_A/[(2\pi)^{1/2}\sigma_A] * \exp[-x_{A-}^2/(2\sigma_A^2)]$, $r_{B-} = s_B/[(2\pi)^{1/2}\sigma_B] * \exp[-x_{B-}^2/(2\sigma_B^2)]$ from a logarithmic-likelihood $l_E(x)$ based on a statistical entropy as follows,

$$-l_E(x) = -\ln g^A(x_{A+}) + s_A{*}g^A(x_{A-}) - \ln g^B(x_{B+})$$
$$+ s_B{*}g^B(x_{B-})$$
$$r_{A+} = -\ln g^A(x_{A+})$$
$$r_{A-} = s{*}g^A(x_{A-})$$
$$r_{B+} = -\ln g^B(x_{B+})$$
$$r_{B-} = s{*}g^B(x_{B-});$$

calculating a value of the attraction term $r_{A+}$, or $r_{B+}$ in cases where the desired output data A, or B is provided to the learning apparatus as the teaching signal data, a value of the attraction term $r_{A+}$, or $r_{B+}$ being decreased along with the decrease of the difference $x_{A+}$, or $x_{B+}$;

calculating a value of the repulsion term $r_{A-}$, or $r_{B-}$ in cases where the undesirable output data A, or B is provided to the learning apparatus as the teaching signal data, a value of the repulsion term $r_{A-}$, or $r_{B-}$ being decreased along with the increase of the difference $x_{A-}$, or $x_{B-}$;

calculating a loss function $r = r_{A+} + r_{B+} + r_{A-} + r_{B-}$;

iteratively calculating the value of the loss function r by renewing the values of the control parameters and the variance $\sigma_A^2, \sigma_B^2$ to decrease the value of the loss function r until the value of the loss function r is less than a prescribed value in cases where the value of the loss function r is equal to or greater than the prescribed value; and

adjusting the control parameters and the variance $\sigma_A^2, \sigma_B^2$ of the learning apparatus to newest values of the control parameters and the variance $\sigma_A^2, \sigma_B^2$ when the value of the loss function r is less than the prescribed value.

17. A learning method according to claim 16 in which renewed values of both the control parameter $\Theta$ and the variance $\sigma$ in the step of iteratively calculating the value of the loss function r are designated by an equation

$$\Delta\Theta(t+1) = -(1-\alpha){*}\eta{*}\partial r/\partial\Theta(t) + \alpha{*}\Delta\Theta(t)$$
$$\Delta\sigma(t+1) = -(1-\alpha){*}\eta{*}\partial r/\partial\Theta(t) + \alpha{*}\Delta\sigma(t),$$

where $\Delta\Theta(t+1)$ and $\Delta\sigma(t+1)$ are renewed values of the control parameters $\Theta$, $\sigma$ in the t-th iterative calculation, $\partial r/\partial\Theta(t)$ and $\partial r/\partial\sigma(t)$ are partial derivatives of the loss function r with respect to the control parameters $\Theta$, $\sigma$ in the t-th iterative calculation, $\alpha$ is a momentum parameter for adjusting the contribution of $\Delta\Theta(t)$ and $\Delta\sigma(t)$ to $\Delta\Theta(t+1)$ and $\Delta\sigma(t+1)$, $\eta$ is a learning rate for adjusting the contribution of $\partial r/\partial\Theta(t)$ and $\partial r/\partial\sigma(t)$ to $\Delta\Theta(t+1)$ and $\Delta\sigma(t+1)$.

**18.** A learning method for adjusting control parameters of a learning apparatus in which input data is converted into output data by utilizing the control parameters and teaching signal data, comprising steps of:

defining undesirable output data which is not acceptable as output data and is a type of the teaching signal data;

defining desired output data which is desired as output data and is another type of teaching signal data, the desired output data occupying a region s;

defining a distribution function $s_*Ga(x_+)$ of the desired output data by utilizing both the region s occupied by the desired output data and a generalized Gaussian distribution $Ga(x)$ which is defined by a parameter $\sigma$, a Gamma function $\Gamma$, a parameter b, and a difference $x_+$ between the output data and the desired output data, the distribution function $s_*Ga(x_+)$ being defined by an equation

$$s_*Ga(x_+) = s_*[\{(2_*b^{1/b}_*\sigma_*\Gamma(1/b + 1)\}^{-1}_*exp\{-|x_+|^b/(b_*\sigma^b)\}];$$

defining a distribution function $1 - s_*Ga(x_-)$ of the undesirable output data by utilizing both the region s and the generalized Gaussian distribution $Ga(x)$ which is defined by the parameter $\sigma$, the Gamma function $\Gamma$, the parameter b, and a difference $x_-$ between the output data and the undesirable output data, the distribution function $1 - s_*Ga(x_-)$ being defined by an equation

$$1 - s_*Ga(x_-) = 1 - s_*[\{(2_*b^{1/b}_*\sigma_*\Gamma(1/b + 1)\}^{-1} _*exp\{-|x_-|^b/(b_*\sigma^b)\}];$$

providing both the input data and the teaching signal data to the learning apparatus;

calculating a value of the output data by converting a value of the input data by utilizing values of the control parameters;

deriving an attraction term $r_+ = \ln(\sigma) + 1/b_*\ln b + \ln \Gamma(1/b + 1) + x_+^b/(b_*\sigma^b)$ and a repulsion term

$$r_- = s/[\{(2_*b^{1/b}_*\sigma_*\Gamma(1/b + 1)\}^{-1}_*exp\{-|x_-|^b/(b_*\sigma^b)\}]$$

from a logarithmic-likelihood $l_E(x)$ based on a statistical entropy as follows,

$$-l_E(x) = -\ln Ga(x_+) + s_*Ga(x_-)$$
$$r_+ = -\ln Ga(x_+)$$
$$r_- = s_*Ga(x_-);$$

calculating a value of the attraction term $r_+$ in cases where the desired output data is provided to the learning apparatus as the teaching signal data, a value of the attraction term $r_+$ being decreased along with the decrease of the difference $x_+$;

calculating a value of the repulsion term $r_-$ in cases where the undesirable output data is provided to the learning apparatus as the teaching signal data, a value of the repulsion term $r_-$ being decreased along with the increase of the difference $x_-$;

calculating a loss function r found by adding the repulsion term $r_-$ and the attraction term $r_+$ together;

iteratively calculating the value of the loss function r by renewing the values of both the control parameters and the parameter $\sigma$ to decrease the value of the loss function r until the value of the loss function r is less than a prescribed value in cases where the value of the loss function is equal to or greater than the prescribed value; and

adjusting both the control parameters and the parameter $\sigma$ of the learning apparatus to newest values of both the control parameters and the parameter $\sigma$ when the value of the loss function r is less than the prescribed value.

**19.** A learning method for adjusting control parameters $\Theta$ such as weight parameters and threshold values of a learning apparatus by utilizing teaching signal data and a plurality of neurons interconnected in an artificial neural network in which input data provided to first neurons (22) of a first stage (21) is weighted with the weight parameters and the threshold values are subtracted from the weighted input data so that the weighted input data is transmitted to final neurons (26) of a final stage (25) through hidden stages (24) in which the data is weighted with the weight parameters, subtracted the threshold values, and converted by applying a prescribed monotone increasing function, after which output data is provided from the final neurons (26), comprising steps of:

defining undesirable output data which is not acceptable as output data and is a type of the teaching signal data;

defining desired output data which is desired as output data and is another type of the teaching signal data, the desired output data occupying a region s;

defining a distribution function $s_*Ga(x_+)$ of the desired output data by utilizing both the region s occupied by the desired output data and a generalized Gaussian distribution $Ga(x)$ which is defined by a parameter $\sigma$, a Gamma function $\Gamma$, a parameter b, and a difference $x_+$ between the output data and the desired output data, the distribution function $s_*Ga(x_+)$ being defined by an equation

$$s_*Ga(x_+) = s_*[\{(2_*b^{1/b}_*\sigma_*\Gamma(1/b + 1)\}^{-1}_*exp\{-|x_+|^b/(b_*\sigma^b)\}];$$

defining a distribution function $1 - s_*Ga(x_-)$ of the undesirable output data by utilizing both the region s and the generalized Gaussian distribution $Ga(x)$ which is defined by the parameter $\sigma$, the Gamma function $\Gamma$, the parameter b, and a difference $x_-$ between the output data and the undesirable output data, the distribution function $1 - s_*Ga(x_-)$ being defined by an equation

$$1 - s_*Ga(x_-) = 1 - s_*[\{(2_*b^{1/b}_*\sigma_*\Gamma(1/b + 1)\}^{-1} _*exp\{-|x_-|^b/(b_*\sigma^b)\}];$$

providing the input data to the first neurons (22);

providing the teaching signal data to the learning apparatus;

calculating a value of the output data obtained by converting the input data while utilizing the control parameters;

deriving an attraction term $r_+ = \ln(\sigma) + 1/b_*\ln b + \ln \Gamma(1/b + 1) + x_+^b/(b_*\sigma^b)$ and a repulsion term

$$r_- = s/[\{(2_*b^{1/b}_*\sigma_*\Gamma(1/b + 1)\}^{-1}_*exp\{-|x_-|^b/(b_*\sigma^b)\}]$$

from a logarithmic-likelihood $l_E(x)$ based on a statistical entropy as follows,

$$-l_E(x) = -\ln Ga(x_+) + s_*Ga(x_-)$$
$$r_+ = -\ln Ga(x_+)$$
$$r_- = s_*Ga(x_-);$$

calculating a value of the attraction term $r_+$ in cases where the desired output data is provided to the learning apparatus as the teaching signal data, a value of the attraction term $r_+$ being decreased along with the decrease of the difference $x_+$;

calculating a value of the repulsion term $r_-$ in cases where the undesirable output data is provided to the learning apparatus as the teaching signal data, a value of the repulsion term $r_-$ being decreased along with the increase of the difference $x_-$;

calculating a loss function r found by adding the repulsion term $r_-$ and the attraction term $r_+$ together;

iteratively calculating the value of the loss function r by renewing the values of the control parameters and the parameter $\sigma$ to decrease the value of the loss function r until the value of the loss function r is less than a prescribed value in cases where the value of the loss function r is equal to or greater than the prescribed value; and

adjusting the control parameters and the parameter $\sigma$ of the learning apparatus to newest values of the control parameters and the parameter $\sigma$ when the value of the loss function r is less than the prescribed value.

20. A learning method for adjusting control parameters of a learning apparatus in which many items of input data are converted into N items of output data by utilizing the control parameters and teaching signal data, comprising steps of:

defining an output vector designated by N items of output data in N dimensions, the output vector indicating output coordinates of which components equal to values of the output data;

defining boundary specifying data which specifies a boundary surface dividing a desired region from an undesired region in N-dimensional space, the boundary specifying data being a type of teaching signal data;

defining a loss function which decreases when the output coordinates indicated by the output vector are shifted toward the desired region from the undesired region specified by the boundary

42

specifying data;

providing both the input data and the boundary specifying data to the learning apparatus;

calculating the output vector designated by the output data obtained by converting the input data by utilizing values of the control parameters;

calculating a value of the loss function by utilizing both the output coordinates indicated by the calculated output vector and the boundary surface specified by the boundary specifying data;

iteratively calculating the value of the loss function by renewing the values of the control parameters to decrease the value of the loss function until the value of the loss function is less than a prescribed value in cases where the value of the loss function is equal to or greater than the prescribed value; and

adjusting the control parameters of the learning apparatus to newest values of the control parameters when the value of the loss function is less than the prescribed value.

21. A learning method according to 20 in which the boundary specifying data specified in the step of defining boundary specifying data consists of a normal vector v for specifying a plane direction of the boundary surface and for directing towards the desired region from the undesired region, and a boundary vector y for specifying a passing point which the boundary surface passes.

22. A learning method for adjusting both weight parameters and threshold values of a learning apparatus by utilizing teaching signal data and a plurality of neurons interconnected in an artificial neural network in which input data provided to first neurons (22) of a first stage (21) is weighted with the weight parameters and the threshold values are subtracted from the weighted input data so that the weighted input data is transmitted to final neurons (26) of a final stage (25) through hidden stages (24) in which the data is weighted with the weight parameters, subtracted the threshold values, and converted by applying a prescribed monotone increasing function, after which output data is provided from the final neurons (26), comprising steps of:

defining an output vector designated by N items of output data in N dimensions, the output vector designating output coordinates of which components equal to values of the output data;

defining boundary specifying data which specifies a boundary surface dividing a desired region from an undesired region in N-dimensional space, the boundary specifying data being a type of the teaching signal data;

defining a loss function which decreases when the output coordinates designated by the output vector are shifted toward the desired region from the undesired region specified by the boundary specifying data;

providing the input data to the first neurons (22); providing the boundary specifying data to the learning apparatus;

calculating the output vector designated by the output data obtained by respectively weighting the input data with the weight parameters and subtracting the threshold values from the weighted input data;

calculating a value of the loss function by utilizing both the output coordinates designated by the calculated output vector and the boundary surface specified by the boundary specifying data;

iteratively calculating the value of the loss function by renewing the weight parameters and the threshold values to decrease the value of the loss function until the value of the loss function is less than a prescribed value in cases where the value of the loss function is equal to or greater than the prescribed value; and

adjusting the weight parameters and the threshold values of the learning apparatus to the newest weight parameters and the newest threshold values when the value of the loss function is less than the prescribed value.

# FIG.1

INPUT DATA $I_1$ $I_2$ $I_L$ — INPUT TERMINALS 11

INPUT DATA

CONTROL PARAMETERS

ADJUSTED CONTROL PARAMETERS

OUTPUT DATA

CONVERSION SECTION 12

$W_1, W_2, \cdots, W_M$

17

CONTROL PARAMETER ADJUSTING SECTION

ATTRACTION TERM $r_+$
REPULSION TERM $r_-$

ATTRACTION TERM CALCULATING SECTION — 15

TEACHING SIGNAL DATA

OUTPUT DATA

REPULSION TERM CALCULATING SECTION

16

LOSS FUNCTION CALCULATING SECTION

14

$O_1$ $O_N$

OUTPUT TERMINALS 13

EP 0 492 641 A2

# FIG.2

INPUT LAYER 21

FIRST NEURONS 22

INPUT DATA
$I_1$ $I_2$ $I_L$

FIRST CONNECTION SECTION 27

HIDDEN LAYER 23

HIDDEN NEURONS 24

SECOND CONNECTION SECTION 28

OUTPUT LAYER 25

FINAL NEURONS 26

$O_1$ $O_2$ $O_N$

INPUT DATA

CONTROL PARAMETERS

ADJUSTED CONTROL PARAMETERS

CONTROL PARAMETERS

ADJUSTED CONTROL PARAMETERS

OUTPUT DATA

OUTPUT DATA

32

CONTROL PARAMETER ADJUSTING SECTION

ATTRACTION TERM $r_+$
REPULSION TERM $r_-$

29

ATTRACTION TERM CALCULATING SECTION

30

REPULSION TERM CALCULATING SECTION

31

LOSS FUNCTION CALCULATING SECTION

TEACHING SIGNAL DATA

EP 0 492 641 A2

# FIG.3

DIFFERENCE BETWEEN OUTPUT DATA AND
UNDESIRABLE OUTPUT DATA

# FIG.4

```
              ( START )
                  │
                  ▼
   ┌──────────────────────────────┐
   │  TRAINING EXAMPLE            │
   │  DATA {Iᵢᵖ,yₖᵖ,Tₚ}  IS       │─── ST101
   │  PROVIDED. p←1              │
   └──────────────────────────────┘
                  │                        ST102
                  ▼
   ╱────────────────────────────────────╲
   │  INPUT DATA Iᵢᵖ (i=1,···,L) ARE PROVIDED │
   │  TO FIRST NEURONS.                      │
   │  TEACHING SIGNAL DATA yₖᵖ (k=1···,N) AND │
   │  SYMBOL Tₚ ARE TRANSMITTED TO          │
   │  LOSS FUNCTION CALCULATING SECTION 29   │
   ╲────────────────────────────────────╱
                  │
                  ▼
   ┌──────────────────────────────────────┐
   │  OUTPUT DATA Oₖᵖ (k=1···,N) ARE CALCULATED │
   │  AND TRANSMITTED TO LOSS FUNCTION      │─── ST103
   │  CALCULATING SECTION 29               │
   └──────────────────────────────────────┘
                  │
        ST104 ◇────────────◇ = −
              │    Tₚ ?    │
              ◇────────────◇
          = + │                      ┐ ST107
```

$I_i^p$ (i=1,···,L)

$y_k^p$ (k=1···,N)

$T_p$

$O_k^p$ (k=1···,N)

$T_p$ ?

**ST105** ATTRACTION TERM $r_+^p$ IS CALCULATED AND STORED

**ST107** REPULSION TERM $r_-^p$ IS CALCULATED AND STORED

**ST106** PARTIAL DERIVATIVES OF CONTROL PARAMETERS ARE CALCULATED AND STORED

**ST108** PARTIAL DERIVATIVES OF CONTROL PARAMETERS ARE CALCULATED AND STORED

p←p +1   NO   **ST109** p=Q ?

**ST110**   YES

**ST111** RENEWED VALUES OF CONTROL PARAMETERS ARE CALCULATED. CONTROL PARAMETERS ARE RENEWED.

**ST112** VALUE OF LOSS FUNCTION r IS CALCULATED

**ST113** IS FINISHING CONDITION SATISFIED BY LOSS FUNCTION r ? $r < E_L$   NO

YES

( END )

# FIG.5

## FIG.6

DIFFERENCE BETWEEN OUTPUT DATA AND
UNDESIRABLE OUTPUT DATA

## FIG.7

DIFFERENCE BETWEEN OUTPUT DATA AND
UNDESIRABLE OUTPUT DATA

# FIG.8

DIFFERENCE BETWEEN OUTPUT DATA AND
UNDESIRABLE OUTPUT DATA

# FIG.9

FIRST NEURONS 22

INPUT DATA

CONTROL PARAMETERS

ADJUSTED CONTROL PARAMETERS

CONTROL PARAMETERS

ADJUSTED CONTROL PARAMETERS

OUTPUT DATA

OUTPUT DATA

CONTROL PARAMETER ADJUSTING SECTION 42

REPULSION TERM r_

TEACHING SIGNAL DATA 41

REPULSION TERM CALCULATING SECTION

LOSS FUNCTION CALCULATING SECTION 31

INPUT DATA
$I_1$ $I_2$ ... $I_L$

$O_1$ $O_2$ ... $O_N$

INPUT LAYER 21

FIRST CONNECTION SECTION 27

HIDDEN LAYER 23

HIDDEN NEURONS 24

SECOND CONNECTION SECTION 28

OUTPUT LAYER 25

FINAL NEURONS 26

# FIG.10

x: UNDESIRABLE OUTPUT DATA

THE NUMBER OF ITERATIVE CALCULATIONS: 10, 1, 100, 1000, 11487

OUTPUT DATA $O_1$

INPUT DATA $I_1$

EP 0 492 641 A2

# FIG.11

```
        START
```

**TRAINING EXAMPLE DATA** $\{I_i^p, y_k^p, T_p\}$ **IS PROVIDED. p←1** — ST201

**INPUT DATA** $I_i^p$ **(i=1,···,L) ARE PROVIDED TO FIRST NEURONS**
**TEACHING SIGNAL DATA** $y_k^p$ **(k=1···,N) AND SYMBOL $T_p$ ARE TRANSMITTED TO LOSS FUNCTION CALCULATING SECTION 29** — ST202

**OUTPUT DATA** $O_k^p$ **(k=1···,N) ARE CALCULATED AND TRANSMITTED TO LOSS FUNCTION CALCULATING SECTION 29** — ST203

ST204 — $T_p$ ? — = −

= +

ST205 — **ATTRACTION TERM** $r_+^p$ **IS CALCULATED AND STORED**

ST207 — **REPULSION TERM** $r_-^p$ **IS CALCULATED AND STORED**

ST206 — **PARTIAL DERIVATIVES OF CONTROL PARAMETERS ARE CALCULATED AND STORED. RENEWED VALUES OF CONTROL PARAMETERS ARE CALCULATED. RENEWED CONTROL PARAMETERS ARE CALCULATED AND STORED.**

ST208 — **PARTIAL DERIVATIVES OF CONTROL PARAMETERS ARE CALCULATED AND STORED. RENEWED VALUES OF CONTROL PARAMETERS ARE CALCULATED. RENEWED CONTROL PARAMETERS ARE CALCULATED AND STORED.**

$p←p+1$ — NO — p=Q ? — ST209

ST210

YES

ST211 — **LOSS FUNCTION r IS FOUND**

ST212 — **IS FINISHING CONDITION SATISFIED BY LOSS FUNCTION r ?** $r<E_L$

NO

YES

```
        END
```

# FIG.12

DIFFERENCE BETWEEN TEACHING SIGNAL DATA
AND OUTPUT DATA

# FIG.13 (A)

FIG.13

| FIG.13 (A) |
|---|
| FIG.13 (B) |

START

(E)

phase←1 , b←2 —— ST301

TRAINING EXAMPLE
DATA $\{I_i^p, y_k^p, T_p\}$ IS PROVIDED. p←1 —— ST302

(F)

ST303

INPUT DATA $I_i^p$ (i=1,···,L) ARE PROVIDED TO FIRST NEURONS
TEACHING SIGNAL DATA $y_k^p$ (k=1···,N) AND SYMBOL $T_p$ ARE TRANSMITTED TO
LOSS FUNCTION CALCULATING SECTION 29

OUTPUT DATA $O_k^p$ (k=1···,N) ARE CALCULATED AND TRANSMITTED TO LOSS FUNCTION CALCULATING SECTION 29 —— ST304

ST305 — $T_p$ ? = -

= +

ST306
ATTRACTION TERM $r_+^p$ IS CALCULATED AND STORED

ST308
REPULSION TERM $r_-^p$ IS CALCULATED AND STORED

ST307
PARTIAL DERIVATIVES OF CONTROL PARAMETERS ARE CALCULATED AND STORED.
IN CASE OF phase=2, $\dfrac{\partial r_+^p}{\partial b}$ IS CALCULATED AND STORED
RENEWED VALUES OF CONTROL PARAMETERS ARE CALCULATED.
CONTROL PARAMETERS ARE RENEWED.

ST309
PARTIAL DERIVATIVES OF CONTROL PARAMETERS ARE CALCULATED AND STORED.
IN CASE OF phase=2, $\dfrac{\partial r_-^p}{\partial b}$ IS CALCULATED AND STORED
RENEWED VALUES OF CONTROL PARAMETERS ARE CALCULATED.
CONTROL PARAMETERS ARE RENEWED.

(D)

# FIG.13 (B)

# FIG.14

INPUT DATA
$I_1$   $I_2$              $I_L$   INPUT TERMINALS 11

INPUT DATA

CONVERSION
SECTION 12   |   $W_1, W_2, \cdots, W_M$

CONTROL PARAMETERS

ADJUSTED CONTROL PARAMETERS

OUTPUT DATA

$O_1$         $O_N$

OUTPUT TERMINALS 51

OUTPUT DATA

54

CONTROL PARAMETER
ADJUSTING SECTION

ATTRACTION TERM $r_+$
REPULSION TERM $r_-$
BOUNDARY TERM $r_>$

ATTRACTION TERM
CALCULATING SECTION          15

TEACHING SIGNAL
DATA

REPULSION TERM
CALCULATING SECTION

16

BOUNDARY TERM
CALCULATING SECTION          53

LOSS FUNCTION
CALCULATING SECTION          52

EP 0 492 641 A2

# FIG.15

INPUT DATA

FIRST NEURONS 22

INPUT LAYER 21

FIRST CONNECTION SECTION 27

HIDDEN LAYER 23

HIDDEN NEURONS 24

SECOND CONNECTION SECTION 28

OUTPUT LAYER 25

FINAL NEURONS 26

$I_1$ $I_2$ $I_L$

$O_1$ $O_2$ $O_N$

INPUT DATA

CONTROL PARAMETERS

ADJUSTED CONTROL PARAMETERS

CONTROL PARAMETERS

ADJUSTED CONTROL PARAMETERS

OUTPUT DATA

OUTPUT DATA

CONTROL PARAMETER ADJUSTING SECTION 63

ATTRACTION TERM $r_+$
REPULSION TERM $r_-$
BOUNDARY TERM $r_>$

ATTRACTION TERM CALCULATING SECTION 61 30

REPULSION TERM CALCULATING SECTION 31

BOUNDARY TERM CALCULATING SECTION 62

LOSS FUNCTION CALCULATING SECTION

TEACHING SIGNAL DATA

EP 0 492 641 A2

**FIG.16**

BOUNDARY SURFACE

**FIG.17**

DESIRED REGION

BOUNDARY SURFACE

UNDESIRED REGION

**FIG.18**

INNER PRODUCT : $d = \vec{V} \cdot (\vec{O} - \vec{y})$

# FIG.19 (A)

FIG.19

| FIG.19 (A) |
|---|
| FIG.19 (B) |

START

(C) →

TRAINING EXAMPLE DATA $\{I_i^p, a_k^p, y_k^p, T_p\}$ IS PROVIDED. $p \leftarrow 1$ — ST401

(B) → ST402

INPUT DATA $I_i^p$ (i=1,···,L) ARE PROVIDED TO FIRST NEURONS
TEACHING SIGNAL DATA $a_k^p, y_k^p$ (k=1···,N) AND SYMBOL $T_p$ ARE TRANSMITTED TO LOSS FUNCTION CALCULATING SECTION 61

OUTPUT DATA $O_k^p$ (k=1···,N) ARE CALCULATED AND TRANSMITTED TO LOSS FUNCTION CALCULATING SECTION 61 — ST403

ST404 ⌐ $T_p$ ? = >

= −

ST407

REPULSION TERM $r_-^p$ IS CALCULATED AND STORED

PARTIAL DERIVATIVES OF CONTROL PARAMETERS ARE CALCULATED AND STORED

ST408

ST405 ⌐

= +

ATTRACTION TERM $r_+^p$ IS CALCULATED AND STORED

PARTIAL DERIVATIVES OF CONTROL PARAMETERS ARE CALCULATED AND STORED

ST406

ST409

BOUNDARY TERM $r_>$ IS CALCULATED AND STORED

PARTIAL DERIVATIVES OF CONTROL PARAMETERS ARE CALCULATED AND STORED

ST410

(A)

EP 0 492 641 A2

# FIG.19 (B)

(A)

ST412

(B) ← $p \leftarrow p + 1$ ← NO ← ◇ $p = Q$ ? — ST411

YES

RENEWED VALUES OF CONTROL PARAMETERS
ARE CALCULATED.
CONTROL PARAMETERS ARE RENEWED. — ST413

VALUE OF
LOSS FUNCTION r IS CALCULATED — ST414

NO ← ◇ IS FINISHING CONDITION SATISFIED BY LOSS FUNCTION r ? $r < E_L$ — ST415

(C)

YES

( END )

EP 0 492 641 A2

# FIG.20

# FIG.21